# EUROPEAN PATENT APPLICATION

(11) **EP 4 683 412 A2**
(43) Date of publication of application: **21.01.2026**
(21) Application number: 25190386.0
(22) Date of filing: 18.07.2025
(51) Int. Cl.: H04W 72/0453, H04W 72/23, H04W 72/53, H04W 74/0833, H04L 5/00

(54) **TRANSMISSION ACCESS MANAGEMENT**

(30) Priority: 18.07.2024 US 202463673007 P
(71) Applicant: Ofinno, LLC, Reston, VA 20190 (US)
(72) Inventor: CHUN, SungDuck, Reston, 20190 (US); PARK, Kyungmin, Reston, 20190 (US); DINAN, Esmael Hejazi, Reston, 20190 (US); KAZMI, Muhammad Ali, Reston, 20190 (US); KIM, Taehun, Reston, 20190 (US); XU, Jian, Reston, 20190 (US); FILIN, Stanislav, Reston, 20190 (US); ZHU, Yuan, Reston, 20190 (US)
(74) Representative: Westphal, Mussgnug & Partner, Patentanwälte mbB

(57) **Abstract**

A wireless device receives one or more first messages comprising one or more first configuration parameters indicating one or more frequency bands associated with a no transmission zone (NTZ), wherein transmission by the wireless device via the one or more frequency bands is restricted within the NTZ. The wireless device receives one or more second messages comprising one or more second configuration parameters indicating a normal uplink (NUL) carrier of a cell, and a supplementary uplink (SUL) carrier of the cell, and selects, for a random access procedure in the cell, an uplink (UL) carrier among the SUL carrier and the NUL carrier, based on a frequency band of the UL carrier not being one of the one or more frequency bands; and the wireless device being within the NTZ.

## Description

### CROSS-REFERENCE TO RELATED APPLICATIONS

This application claims the benefit of U.S. Provisional Application No. 63/673,007, filed July 18, 2024, which is hereby incorporated by reference in its entirety.

### BRIEF DESCRIPTION OF THE DRAWINGS

Examples of several of the various embodiments of the present disclosure are described herein with reference to the drawings.
FIG. 1A and FIG. 1B illustrate example mobile communication networks in which embodiments of the present disclosure may be implemented.
FIG. 2A and FIG. 2B respectively illustrate a New Radio (NR) user plane and control plane protocol stack.
FIG. 3 illustrates an example of services provided between protocol layers of the NR user plane protocol stack of FIG. 2A.
FIG. 4A illustrates an example downlink data flow through the NR user plane protocol stack of FIG. 2A.
FIG. 4B illustrates an example format of a MAC subheader in a MAC PDU.
FIG. 5A and FIG. 5B respectively illustrate a mapping between logical channels, transport channels, and physical channels for the downlink and uplink.
FIG. 6 is an example diagram showing RRC state transitions of a UE.
FIG. 7 illustrates an example configuration of an NR frame into which OFDM symbols are grouped.
FIG. 8 illustrates an example configuration of a slot in the time and frequency domain for an NR carrier.
FIG. 9 illustrates an example of bandwidth adaptation using three configured BWPs for an NR carrier.
FIG. 10A illustrates three carrier aggregation configurations with two component carriers.
FIG. 10B illustrates an example of how aggregated cells may be configured into one or more PUCCH groups.
FIG. 11A illustrates an example of an SS/PBCH block structure and location.
FIG. 11B illustrates an example of CSI-RSs that are mapped in the time and frequency domains.
FIG. 12A and FIG. 12B respectively illustrate examples of three downlink and uplink beam management procedures.
FIG. 13A, FIG. 13B, and FIG. 13C respectively illustrate a four-step contention-based random access procedure, a two-step contention-free random access procedure, and another two-step random access procedure.
FIG. 14A illustrates an example of CORESET configurations for a bandwidth part.
FIG. 14B illustrates an example of a CCE-to-REG mapping for DCI transmission on a CORESET and PDCCH processing.
FIG. 15 illustrates an example of a wireless device in communication with a base station.
FIG. 16A, FIG. 16B, FIG. 16C, and FIG. 16D illustrate example structures for uplink and downlink transmission.
FIG. 17 illustrates an aspect of an example embodiment according to the present disclosure.
FIG. 18 illustrates an aspect of an example embodiment according to the present disclosure.
FIG. 19 illustrates an aspect of an example embodiment according to the present disclosure.
FIG. 20 illustrates an aspect of an example embodiment according to the present disclosure.
FIG. 21 illustrates an aspect of an example embodiment according to the present disclosure.
FIG. 22 illustrates an aspect of an example embodiment according to the present disclosure.
FIG. 23 illustrates an aspect of an example embodiment according to the present disclosure.
FIG. 24 illustrates an aspect of an example embodiment according to the present disclosure.
FIG. 25 illustrates an aspect of an example embodiment according to the present disclosure.
FIG. 26 illustrates an aspect of an example embodiment according to the present disclosure.
FIG. 27 illustrates an aspect of an example embodiment according to the present disclosure.
FIG. 28 illustrates an aspect of an example embodiment according to the present disclosure.
FIG. 29 illustrates an aspect of an example embodiment according to the present disclosure.
FIG. 30 illustrates an aspect of an example embodiment according to the present disclosure.
FIG. 31 illustrates an aspect of an example embodiment according to the present disclosure.
FIG. 32 illustrates an aspect of an example embodiment according to the present disclosure.
FIG. 33 illustrates an aspect of an example embodiment according to the present disclosure.
FIG. 34 illustrates an aspect of an example embodiment according to the present disclosure.

### DETAILED DESCRIPTION

In the present disclosure, various embodiments are presented as examples of how the disclosed techniques may be implemented and/or how the disclosed techniques may be practiced in environments and scenarios. It will be apparent to persons skilled in the relevant art that various changes in form and detail can be made therein without departing from the scope. In fact, after reading the description, it will be apparent to one skilled in the relevant art how to implement alternative embodiments. The present embodiments should not be limited by any of the described exemplary embodiments. The embodiments of the present disclosure will be described with reference to the accompanying drawings. Limitations, features, and/or elements from the disclosed example embodiments may be combined to create further embodiments within the scope of the disclosure. Any figures which highlight the functionality and advantages, are presented for example purposes only. The disclosed architecture is sufficiently flexible and configurable, such that it may be utilized in ways other than that shown. For example, the actions listed in any flowchart may be re-ordered or only optionally used in some embodiments.

Embodiments may be configured to operate as needed. The disclosed mechanism may be performed when certain criteria are met, for example, in a wireless device, a base station, a radio environment, a network, a combination of the above, and/or the like. Example criteria may be based, at least in part, on for example, wireless device or network node configurations, traffic load, initial system set up, packet sizes, traffic characteristics, a combination of the above, and/or the like. When the one or more criteria are met, various example embodiments may be applied. Therefore, it may be possible to implement example embodiments that selectively implement disclosed protocols.

A base station may communicate with a mix of wireless devices. Wireless devices and/or base stations may support multiple technologies, and/or multiple releases of the same technology. Wireless devices may have some specific capability(ies) depending on wireless device category and/or capability(ies). When this disclosure refers to a base station communicating with a plurality of wireless devices, this disclosure may refer to a subset of the total wireless devices in a coverage area. This disclosure may refer to, for example, a plurality of wireless devices of a given LTE or 5G release with a given capability and in a given sector of the base station. The plurality of wireless devices in this disclosure may refer to a selected plurality of wireless devices, and/or a subset of total wireless devices in a coverage area which perform according to disclosed methods, and/or the like. There may be a plurality of base stations or a plurality of wireless devices in a coverage area that may not comply with the disclosed methods, for example, those wireless devices or base stations may perform based on older releases of LTE or 5G technology.

In this disclosure, "a" and "an" and similar phrases are to be interpreted as "at least one" and "one or more." Similarly, any term that ends with the suffix "(s)" is to be interpreted as "at least one" and "one or more." In this disclosure, the term "may" is to be interpreted as "may, for example." In other words, the term "may" is indicative that the phrase following the term "may" is an example of one of a multitude of suitable possibilities that may, or may not, be employed by one or more of the various embodiments. The terms "comprises" and "consists of", as used herein, enumerate one or more components of the element being described. The term "comprises" is interchangeable with "includes" and does not exclude unenumerated components from being included in the element being described. By contrast, "consists of" provides a complete enumeration of the one or more components of the element being described. The term "based on", as used herein, should be interpreted as "based at least in part on" rather than, for example, "based solely on". The term "and/or" as used herein represents any possible combination of enumerated elements. For example, "A, B, and/or C" may represent A; B; C; A and B; A and C; B and C; or A, B, and C.

If A and B are sets and every element of A is an element of B, A is called a subset of B. In this specification, only non-empty sets and subsets are considered. For example, possible subsets of B = {cell1, cell2} are: {cell1}, {cell2}, and {cell1, cell2}. The phrase "based on" (or equally "based at least on") is indicative that the phrase following the term "based on" is an example of one of a multitude of suitable possibilities that may, or may not, be employed to one or more of the various embodiments. The phrase "in response to" (or equally "in response at least to") is indicative that the phrase following the phrase "in response to" is an example of one of a multitude of suitable possibilities that may, or may not, be employed to one or more of the various embodiments. The phrase "depending on" (or equally "depending at least to") is indicative that the phrase following the phrase "depending on" is an example of one of a multitude of suitable possibilities that may, or may not, be employed to one or more of the various embodiments. The phrase "employing/using" (or equally "employing/using at least") is indicative that the phrase following the phrase "employing/using" is an example of one of a multitude of suitable possibilities that may, or may not, be employed to one or more of the various embodiments.

The term configured may relate to the capacity of a device whether the device is in an operational or non-operational state. Configured may refer to specific settings in a device that affect or implement the operational characteristics of the device whether the device is in an operational or non-operational state. In other words, the hardware, software, firmware, registers, memory values, and/or the like may be "configured" within a device, whether the device is in an operational or nonoperational state, to provide the device with specific characteristics. Terms such as "a control message to cause in a device" may mean that a control message has parameters that may be used to configure specific characteristics or may be used to implement certain actions in the device, whether the device is in an operational or non-operational state.

In this disclosure, parameters (or equally called, fields, or Information elements: IEs) may comprise one or more information objects, and an information object may comprise one or more other objects. For example, if parameter (IE) N comprises parameter (IE) M, and parameter (IE) M comprises parameter (IE) K, and parameter (IE) K comprises parameter (information element) J. Then, for example, N comprises K, and N comprises J. In an example embodiment, when one or more messages comprise a plurality of parameters, it implies that a parameter in the plurality of parameters is in at least one of the one or more messages, but does not have to be in each of the one or more messages.

Many features presented are described as being optional through the use of "may" or the use of parentheses. For the sake of brevity and legibility, the present disclosure does not explicitly recite each and every permutation that may be obtained by choosing from the set of optional features. The present disclosure is to be interpreted as explicitly disclosing all such permutations. For example, a system described as having three optional features may be embodied in seven ways, namely with just one of the three possible features, with any two of the three possible features or with three of the three possible features.

Many of the elements described in the disclosed embodiments may be implemented as modules. A module is defined here as an element that performs a defined function and has a defined interface to other elements. The modules described in this disclosure may be implemented in hardware, software in combination with hardware, firmware, wetware (e.g. hardware with a biological element) or a combination thereof, which may be behaviorally equivalent. For example, modules may be implemented as a software routine written in a computer language configured to be executed by a hardware machine (such as C, C++, Fortran, Java, Basic, MATLAB or the like) or a modeling/simulation program such as Simulink, Stateflow, GNU Octave, or LabVIEWMathScript. It may be possible to implement modules using physical hardware that incorporates discrete or programmable analog, digital and/or quantum hardware. Examples of programmable hardware comprise: computers, microcontrollers, microprocessors, application-specific integrated circuits (ASICs); field programmable gate arrays (FPGAs); and complex programmable logic devices (CPLDs). Computers, microcontrollers and microprocessors are programmed using languages such as assembly, C, C++ or the like. FPGAs, ASICs and CPLDs are often programmed using hardware description languages (HDL) such as VHSIC hardware description language (VHDL) or Verilog that configure connections between internal hardware modules with lesser functionality on a programmable device. The mentioned technologies are often used in combination to achieve the result of a functional module.

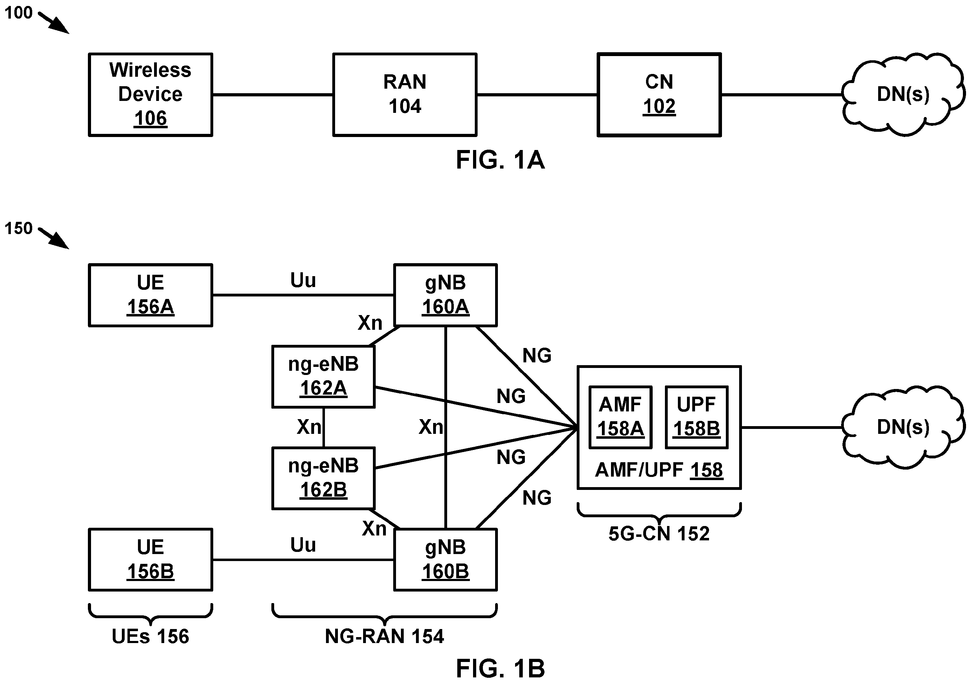

FIG. 1A illustrates an example of a mobile communication network 100 in which embodiments of the present disclosure may be implemented. The mobile communication network 100 may be, for example, a public land mobile network (PLMN) run by a network operator. As illustrated in FIG. 1A, the mobile communication network 100 includes a core network (CN) 102, a radio access network (RAN) 104, and a wireless device 106.

The CN 102 may provide the wireless device 106 with an interface to one or more data networks (DNs), such as public DNs (e.g., the Internet), private DNs, and/or intra-operator DNs. As part of the interface functionality, the CN 102 may set up end-to-end connections between the wireless device 106 and the one or more DNs, authenticate the wireless device 106, and provide charging functionality.

The RAN 104 may connect the CN 102 to the wireless device 106 through radio communications over an air interface. As part of the radio communications, the RAN 104 may provide scheduling, radio resource management, and retransmission protocols. The communication direction from the RAN 104 to the wireless device 106 over the air interface is known as the downlink and the communication direction from the wireless device 106 to the RAN 104 over the air interface is known as the uplink. Downlink transmissions may be separated from uplink transmissions using frequency division duplexing (FDD), time-division duplexing (TDD), and/or some combination of the two duplexing techniques.

The term wireless device may be used throughout this disclosure to refer to and encompass any mobile device or fixed (non-mobile) device for which wireless communication is needed or usable. For example, a wireless device may be a telephone, smart phone, tablet, computer, laptop, sensor, meter, wearable device, Internet of Things (IoT) device, vehicle roadside unit (RSU), relay node, automobile, and/or any combination thereof. The term wireless device encompasses other terminology, including user equipment (UE), user terminal (UT), access terminal (AT), mobile station, handset, wireless transmit and receive unit (WTRU), and/or wireless communication device.

The RAN 104 may include one or more base stations (not shown). The term base station may be used throughout this disclosure to refer to and encompass a Node B (associated with UMTS and/or 3G standards), an Evolved Node B (eNB, associated with E-UTRA and/or 4G standards), a remote radio head (RRH), a baseband processing unit coupled to one or more RRHs, a repeater node or relay node used to extend the coverage area of a donor node, a Next Generation Evolved Node B (ng-eNB), a Generation Node B (gNB, associated with NR and/or 5G standards), an access point (AP, associated with, for example, Wi-Fi or any other suitable wireless communication standard), and/or any combination thereof. A base station may comprise at least one gNB Central Unit (gNB-CU) and at least one a gNB Distributed Unit (gNB-DU).

A base station included in the RAN 104 may include one or more sets of antennas for communicating with the wireless device 106 over the air interface. For example, one or more of the base stations may include three sets of antennas to respectively control three cells (or sectors). The size of a cell may be determined by a range at which a receiver (e.g., a base station receiver) can successfully receive the transmissions from a transmitter (e.g., a wireless device transmitter) operating in the cell. Together, the cells of the base stations may provide radio coverage to the wireless device 106 over a wide geographic area to support wireless device mobility.

In addition to three-sector sites, other implementations of base stations are possible. For example, one or more of the base stations in the RAN 104 may be implemented as a sectored site with more or less than three sectors. One or more of the base stations in the RAN 104 may be implemented as an access point, as a baseband processing unit coupled to several remote radio heads (RRHs), and/or as a repeater or relay node used to extend the coverage area of a donor node. A baseband processing unit coupled to RRHs may be part of a centralized or cloud RAN architecture, where the baseband processing unit may be either centralized in a pool of baseband processing units or virtualized. A repeater node may amplify and rebroadcast a radio signal received from a donor node. A relay node may perform the same/similar functions as a repeater node but may decode the radio signal received from the donor node to remove noise before amplifying and rebroadcasting the radio signal.

The RAN 104 may be deployed as a homogenous network of macrocell base stations that have similar antenna patterns and similar high-level transmit powers. The RAN 104 may be deployed as a heterogeneous network. In heterogeneous networks, small cell base stations may be used to provide small coverage areas, for example, coverage areas that overlap with the comparatively larger coverage areas provided by macrocell base stations. The small coverage areas may be provided in areas with high data traffic (or so-called "hotspots") or in areas with weak macrocell coverage. Examples of small cell base stations include, in order of decreasing coverage area, microcell base stations, picocell base stations, and femtocell base stations or home base stations.

The Third-Generation Partnership Project (3GPP) was formed in 1998 to provide global standardization of specifications for mobile communication networks similar to the mobile communication network 100 in FIG. 1A. To date, 3GPP has produced specifications for three generations of mobile networks: a third generation (3G) network known as Universal Mobile Telecommunications System (UMTS), a fourth generation (4G) network known as Long-Term Evolution (LTE), and a fifth generation (5G) network known as 5G System (5GS). Embodiments of the present disclosure are described with reference to the RAN of a 3GPP 5G network, referred to as next-generation RAN (NG-RAN). Embodiments may be applicable to RANs of other mobile communication networks, such as the RAN 104 in FIG. 1A, the RANs of earlier 3G and 4G networks, and those of future networks yet to be specified (e.g., a 3GPP 6G network). NG-RAN implements 5G radio access technology known as New Radio (NR) and may be provisioned to implement 4G radio access technology or other radio access technologies, including non-3GPP radio access technologies.

FIG. 1B illustrates another example mobile communication network 150 in which embodiments of the present disclosure may be implemented. Mobile communication network 150 may be, for example, a PLMN run by a network operator. As illustrated in FIG. 1B, mobile communication network 150 includes a 5G core network (5G-CN) 152, an NG-RAN 154, and UEs 156A and 156B (collectively UEs 156). These components may be implemented and operate in the same or similar manner as corresponding components described with respect to FIG. 1A.

The 5G-CN 152 provides the UEs 156 with an interface to one or more DNs, such as public DNs (e.g., the Internet), private DNs, and/or intra-operator DNs. As part of the interface functionality, the 5G-CN 152 may set up end-to-end connections between the UEs 156 and the one or more DNs, authenticate the UEs 156, and provide charging functionality. Compared to the CN of a 3GPP 4G network, the basis of the 5G-CN 152 may be a service-based architecture. This means that the architecture of the nodes making up the 5G-CN 152 may be defined as network functions that offer services via interfaces to other network functions. The network functions of the 5G-CN 152 may be implemented in several ways, including as network elements on dedicated or shared hardware, as software instances running on dedicated or shared hardware, or as virtualized functions instantiated on a platform (e.g., a cloud-based platform).

As illustrated in FIG. 1B, the 5G-CN 152 includes an Access and Mobility Management Function (AMF) 158A and a User Plane Function (UPF) 158B, which are shown as one component AMF/UPF 158 in FIG. 1B for ease of illustration. The UPF 158B may serve as a gateway between the NG-RAN 154 and the one or more DNs. The UPF 158B may perform functions such as packet routing and forwarding, packet inspection and user plane policy rule enforcement, traffic usage reporting, uplink classification to support routing of traffic flows to the one or more DNs, quality of service (QoS) handling for the user plane (e.g., packet filtering, gating, uplink/downlink rate enforcement, and uplink traffic verification), downlink packet buffering, and downlink data notification triggering. The UPF 158B may serve as an anchor point for intra-/inter-Radio Access Technology (RAT) mobility, an external protocol (or packet) data unit (PDU) session point of interconnect to the one or more DNs, and/or a branching point to support a multi-homed PDU session. The UEs 156 may be configured to receive services through a PDU session, which is a logical connection between a UE and a DN.

The AMF 158A may perform functions such as Non-Access Stratum (NAS) signaling termination, NAS signaling security, Access Stratum (AS) security control, inter-CN node signaling for mobility between 3GPP access networks, idle mode UE reachability (e.g., control and execution of paging retransmission), registration area management, intra-system and inter-system mobility support, access authentication, access authorization including checking of roaming rights, mobility management control (subscription and policies), network slicing support, and/or session management function (SMF) selection. NAS may refer to the functionality operating between a CN and a UE, and AS may refer to the functionality operating between the UE and a RAN.

The 5G-CN 152 may include one or more additional network functions that are not shown in FIG. 1B for the sake of clarity. For example, the 5G-CN 152 may include one or more of a Session Management Function (SMF), an NR Repository Function (NRF), a Policy Control Function (PCF), a Network Exposure Function (NEF), a Unified Data Management (UDM), an Application Function (AF), and/or an Authentication Server Function (AUSF).

The NG-RAN 154 may connect the 5G-CN 152 to the UEs 156 through radio communications over the air interface. The NG-RAN 154 may include one or more gNBs, illustrated as gNB 160A and gNB 160B (collectively gNBs 160) and/or one or more ng-eNBs, illustrated as ng-eNB 162A and ng-eNB 162B (collectively ng-eNBs 162). The gNBs 160 and ng-eNBs 162 may be more generically referred to as base stations. The gNBs 160 and ng-eNBs 162 may include one or more sets of antennas for communicating with the UEs 156 over an air interface. For example, one or more of the gNBs 160 and/or one or more of the ng-eNBs 162 may include three sets of antennas to respectively control three cells (or sectors). Together, the cells of the gNBs 160 and the ng-eNBs 162 may provide radio coverage to the UEs 156 over a wide geographic area to support UE mobility.

As shown in FIG. 1B, the gNBs 160 and/or the ng-eNBs 162 may be connected to the 5G-CN 152 by means of an NG interface and to other base stations by an Xn interface. The NG and Xn interfaces may be established using direct physical connections and/or indirect connections over an underlying transport network, such as an internet protocol (IP) transport network. The gNBs 160 and/or the ng-eNBs 162 may be connected to the UEs 156 by means of a Uu interface. For example, as illustrated in FIG. 1B, gNB 160A may be connected to the UE 156A by means of a Uu interface. The NG, Xn, and Uu interfaces are associated with a protocol stack. The protocol stacks associated with the interfaces may be used by the network elements in FIG. 1B to exchange data and signaling messages and may include two planes: a user plane and a control plane. The user plane may handle data of interest to a user. The control plane may handle signaling messages of interest to the network elements.

The gNBs 160 and/or the ng-eNBs 162 may be connected to one or more AMF/UPF functions of the 5G-CN 152, such as the AMF/UPF 158, by means of one or more NG interfaces. For example, the gNB 160A may be connected to the UPF 158B of the AMF/UPF 158 by means of an NG-User plane (NG-U) interface. The NG-U interface may provide delivery (e.g., non-guaranteed delivery) of user plane PDUs between the gNB 160A and the UPF 158B. The gNB 160A may be connected to the AMF 158A by means of an NG-Control plane (NG-C) interface. The NG-C interface may provide, for example, NG interface management, UE context management, UE mobility management, transport of NAS messages, paging, PDU session management, and configuration transfer and/or warning message transmission.

The gNBs 160 may provide NR user plane and control plane protocol terminations towards the UEs 156 over the Uu interface. For example, the gNB 160A may provide NR user plane and control plane protocol terminations toward the UE 156A over a Uu interface associated with a first protocol stack. The ng-eNBs 162 may provide Evolved UMTS Terrestrial Radio Access (E-UTRA) user plane and control plane protocol terminations towards the UEs 156 over a Uu interface, where E-UTRA refers to the 3GPP 4G radio-access technology. For example, the ng-eNB 162B may provide E-UTRA user plane and control plane protocol terminations towards the UE 156B over a Uu interface associated with a second protocol stack.

The 5G-CN 152 was described as being configured to handle NR and 4G radio accesses. It will be appreciated by one of ordinary skill in the art that it may be possible for NR to connect to a 4G core network in a mode known as "non-standalone operation." In non-standalone operation, a 4G core network is used to provide (or at least support) control-plane functionality (e.g., initial access, mobility, and paging). Although only one AMF/UPF 158 is shown in FIG. 1B, one gNB or ng-eNB may be connected to multiple AMF/UPF nodes to provide redundancy and/or to load share across the multiple AMF/UPF nodes.

As discussed, an interface (e.g., Uu, Xn, and NG interfaces) between the network elements in FIG. 1B may be associated with a protocol stack that the network elements use to exchange data and signaling messages. A protocol stack may include two planes: a user plane and a control plane. The user plane may handle data of interest to a user, and the control plane may handle signaling messages of interest to the network elements.

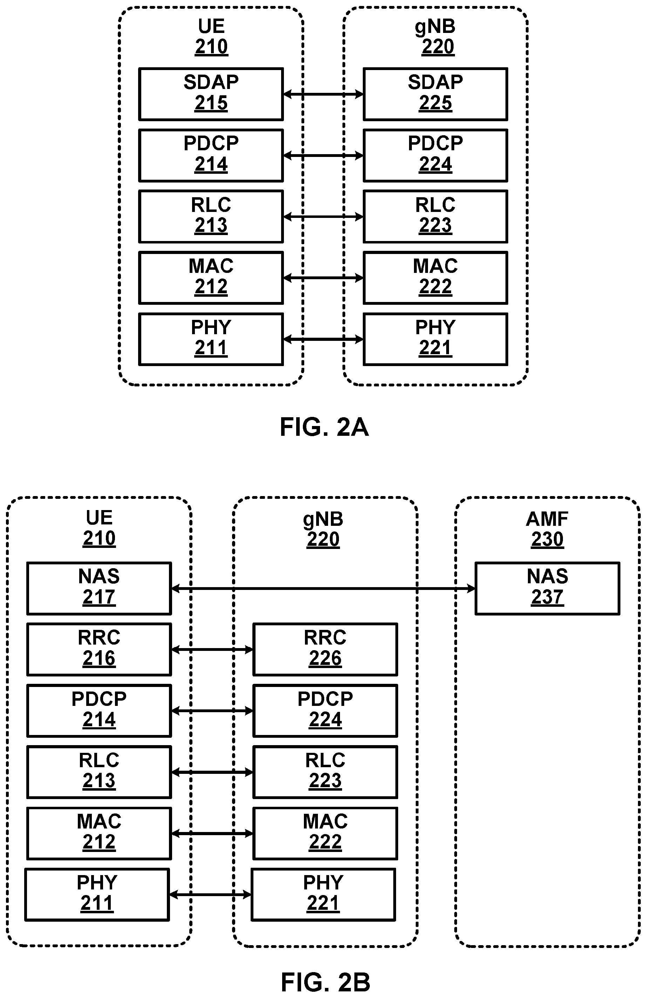

FIG. 2A and FIG. 2B respectively illustrate examples of NR user plane and NR control plane protocol stacks for the Uu interface that lies between a UE 210 and a gNB 220. The protocol stacks illustrated in FIG. 2A and FIG. 2B may be the same or similar to those used for the Uu interface between, for example, the UE 156A and the gNB 160A shown in FIG. 1B.

FIG. 2A illustrates a NR user plane protocol stack comprising five layers implemented in the UE 210 and the gNB 220. At the bottom of the protocol stack, physical layers (PHYs) 211 and 221 may provide transport services to the higher layers of the protocol stack and may correspond to layer 1 of the Open Systems Interconnection (OSI) model. The next four protocols above PHYs 211 and 221 comprise media access control layers (MACs) 212 and 222, radio link control layers (RLCs) 213 and 223, packet data convergence protocol layers (PDCPs) 214 and 224, and service data application protocol layers (SDAPs) 215 and 225. Together, these four protocols may make up layer 2, or the data link layer, of the OSI model.

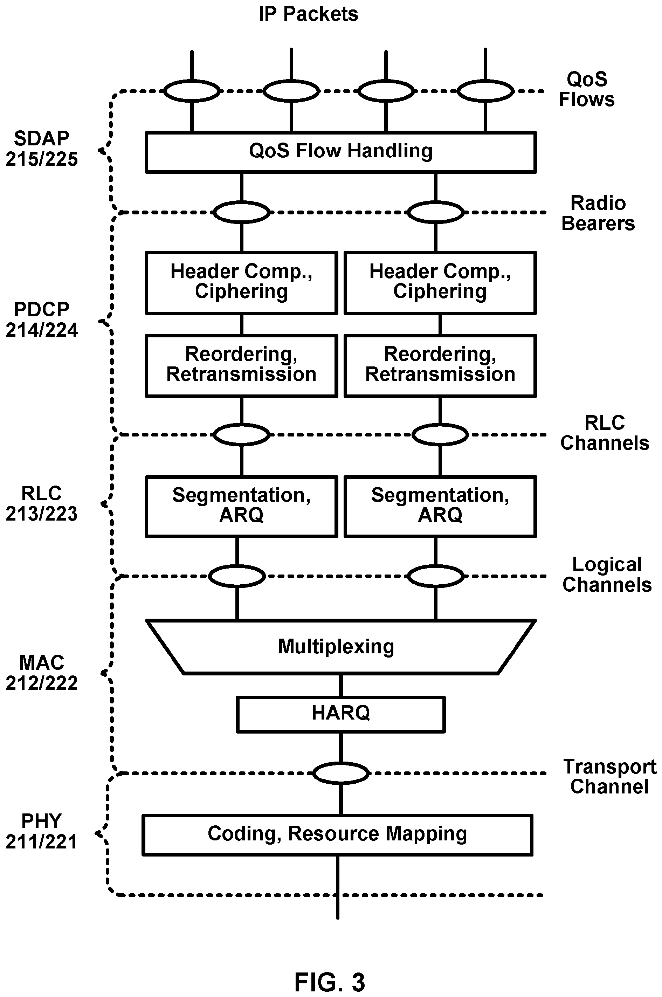

FIG. 3 illustrates an example of services provided between protocol layers of the NR user plane protocol stack. Starting from the top of FIG. 2A and FIG. 3, the SDAPs 215 and 225 may perform QoS flow handling. The UE 210 may receive services through a PDU session, which may be a logical connection between the UE 210 and a DN. The PDU session may have one or more QoS flows. A UPF of a CN (e.g., the UPF 158B) may map IP packets to the one or more QoS flows of the PDU session based on QoS requirements (e.g., in terms of delay, data rate, and/or error rate). The SDAPs 215 and 225 may perform mapping/de-mapping between the one or more QoS flows and one or more data radio bearers. The mapping/de-mapping between the QoS flows and the data radio bearers may be determined by the SDAP 225 at the gNB 220. The SDAP 215 at the UE 210 may be informed of the mapping between the QoS flows and the data radio bearers through reflective mapping or control signaling received from the gNB 220. For reflective mapping, the SDAP 225 at the gNB 220 may mark the downlink packets with a QoS flow indicator (QFI), which may be observed by the SDAP 215 at the UE 210 to determine the mapping/de-mapping between the QoS flows and the data radio bearers.

The PDCPs 214 and 224 may perform header compression/decompression to reduce the amount of data that needs to be transmitted over the air interface, ciphering/deciphering to prevent unauthorized decoding of data transmitted over the air interface, and integrity protection (to ensure control messages originate from intended sources. The PDCPs 214 and 224 may perform retransmissions of undelivered packets, in-sequence delivery and reordering of packets, and removal of packets received in duplicate due to, for example, an intra-gNB handover. The PDCPs 214 and 224 may perform packet duplication to improve the likelihood of the packet being received and, at the receiver, remove any duplicate packets. Packet duplication may be useful for services that require high reliability.

Although not shown in FIG. 3, PDCPs 214 and 224 may perform mapping/de-mapping between a split radio bearer and RLC channels in a dual connectivity scenario. Dual connectivity is a technique that allows a UE to connect to two cells or, more generally, two cell groups: a master cell group (MCG) and a secondary cell group (SCG). A split bearer is when a single radio bearer, such as one of the radio bearers provided by the PDCPs 214 and 224 as a service to the SDAPs 215 and 225, is handled by cell groups in dual connectivity. The PDCPs 214 and 224 may map/de-map the split radio bearer between RLC channels belonging to cell groups.

The RLCs 213 and 223 may perform segmentation, retransmission through Automatic Repeat Request (ARQ), and removal of duplicate data units received from MACs 212 and 222, respectively. The RLCs 213 and 223 may support three transmission modes: transparent mode (TM); unacknowledged mode (UM); and acknowledged mode (AM). Based on the transmission mode an RLC is operating, the RLC may perform one or more of the noted functions. The RLC configuration may be per logical channel with no dependency on numerologies and/or Transmission Time Interval (TTI) durations. As shown in FIG. 3, the RLCs 213 and 223 may provide RLC channels as a service to PDCPs 214 and 224, respectively.

The MACs 212 and 222 may perform multiplexing/demultiplexing of logical channels and/or mapping between logical channels and transport channels. The multiplexing/demultiplexing may include multiplexing/demultiplexing of data units, belonging to the one or more logical channels, into/from Transport Blocks (TBs) delivered to/from the PHYs 211 and 221. The MAC 222 may be configured to perform scheduling, scheduling information reporting, and priority handling between UEs by means of dynamic scheduling. Scheduling may be performed in the gNB 220 (at the MAC 222) for downlink and uplink. The MACs 212 and 222 may be configured to perform error correction through Hybrid Automatic Repeat Request (HARQ) (e.g., one HARQ entity per carrier in case of Carrier Aggregation (CA)), priority handling between logical channels of the UE 210 by means of logical channel prioritization, and/or padding. The MACs 212 and 222 may support one or more numerologies and/or transmission timings. In an example, mapping restrictions in a logical channel prioritization may control which numerology and/or transmission timing a logical channel may use. As shown in FIG. 3, the MACs 212 and 222 may provide logical channels as a service to the RLCs 213 and 223.

The PHYs 211 and 221 may perform mapping of transport channels to physical channels and digital and analog signal processing functions for sending and receiving information over the air interface. These digital and analog signal processing functions may include, for example, coding/decoding and modulation/demodulation. The PHYs 211 and 221 may perform multi-antenna mapping. As shown in FIG. 3, the PHYs 211 and 221 may provide one or more transport channels as a service to the MACs 212 and 222.

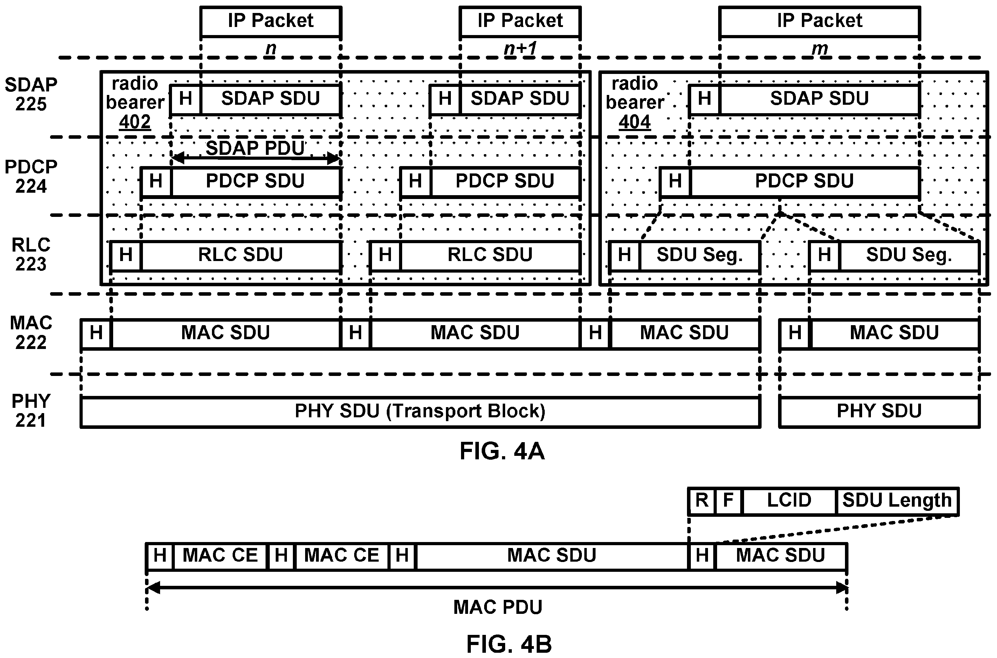

FIG. 4A illustrates an example downlink data flow through the NR user plane protocol stack. FIG. 4A illustrates a downlink data flow of three IP packets *(n, n+1,* and m) through the NR user plane protocol stack to generate two TBs at the gNB 220. An uplink data flow through the NR user plane protocol stack may be similar to the downlink data flow depicted in FIG. 4A.

The downlink data flow of FIG. 4A begins when SDAP 225 receives the three IP packets from one or more QoS flows and maps the three packets to radio bearers. In FIG. 4A, the SDAP 225 maps IP packets *n and n+1* to a first radio bearer 402 and maps IP packet m to a second radio bearer 404. An SDAP header (labeled with an "H" in FIG. 4A) is added to an IP packet. The data unit from/to a higher protocol layer is referred to as a service data unit (SDU) of the lower protocol layer and the data unit to/from a lower protocol layer is referred to as a protocol data unit (PDU) of the higher protocol layer. As shown in FIG. 4A, the data unit from the SDAP 225 is an SDU of lower protocol layer PDCP 224 and is a PDU of the SDAP 225.

The remaining protocol layers in FIG. 4A may perform their associated functionality (e.g., with respect to FIG. 3), add corresponding headers, and forward their respective outputs to the next lower layer. For example, the PDCP 224 may perform IP-header compression and ciphering and forward its output to the RLC 223. The RLC 223 may optionally perform segmentation (e.g., as shown for IP packet m in FIG. 4A) and forward its output to the MAC 222. The MAC 222 may multiplex a number of RLC PDUs and may attach a MAC subheader to an RLC PDU to form a transport block. In NR, the MAC subheaders may be distributed across the MAC PDU, as illustrated in FIG. 4A. In LTE, the MAC subheaders may be entirely located at the beginning of the MAC PDU. The NR MAC PDU structure may reduce processing time and associated latency because the MAC PDU subheaders may be computed before the full MAC PDU is assembled.

FIG. 4B illustrates an example format of a MAC subheader in a MAC PDU. The MAC subheader includes: an SDU length field for indicating the length (e.g., in bytes) of the MAC SDU to which the MAC subheader corresponds; a logical channel identifier (LCID) field for identifying the logical channel from which the MAC SDU originated to aid in the demultiplexing process; a flag (F) for indicating the size of the SDU length field; and a reserved bit (R) field for future use.

FIG. 4B further illustrates MAC control elements (CEs) inserted into the MAC PDU by a MAC, such as MAC 223 or MAC 222. For example, FIG. 4B illustrates two MAC CEs inserted into the MAC PDU. MAC CEs may be inserted at the beginning of a MAC PDU for downlink transmissions (as shown in FIG. 4B) and at the end of a MAC PDU for uplink transmissions. MAC CEs may be used for in-band control signaling. Example MAC CEs include: scheduling-related MAC CEs, such as buffer status reports and power headroom reports; activation/deactivation MAC CEs, such as those for activation/deactivation of PDCP duplication detection, channel state information (CSI) reporting, sounding reference signal (SRS) transmission, and prior configured components; discontinuous reception (DRX) related MAC CEs; timing advance MAC CEs; and random access related MAC CEs. A MAC CE may be preceded by a MAC subheader with a similar format as described for MAC SDUs and may be identified with a reserved value in the LCID field that indicates the type of control information included in the MAC CE.

Before describing the NR control plane protocol stack, logical channels, transport channels, and physical channels are first described as well as a mapping between the channel types. One or more of the channels may be used to carry out functions associated with the NR control plane protocol stack described later below.

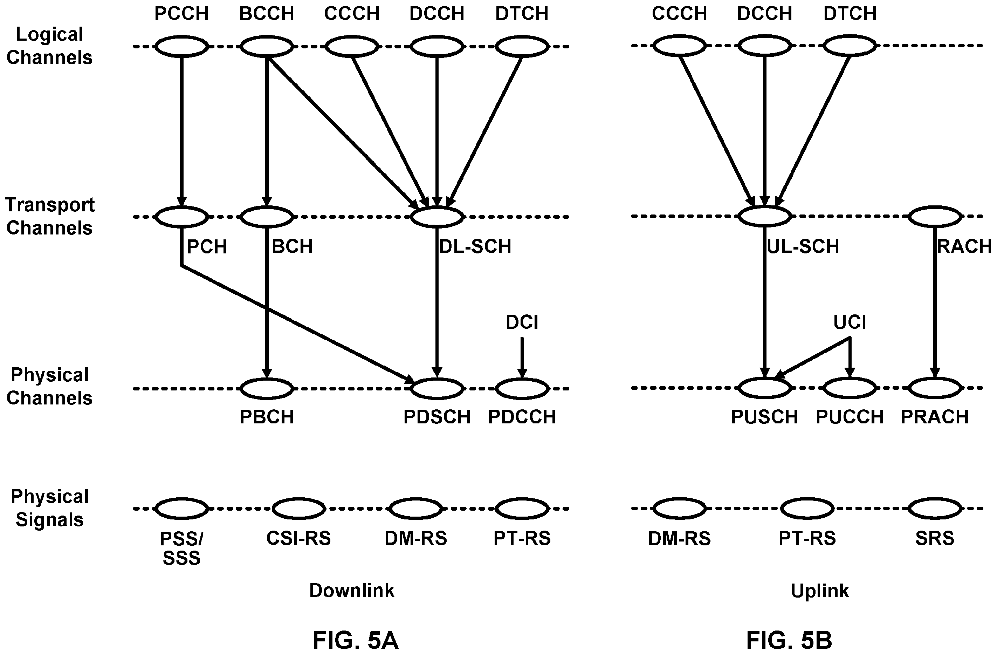

FIG. 5A and FIG. 5B illustrate, for downlink and uplink respectively, a mapping between logical channels, transport channels, and physical channels. Information is passed through channels between the RLC, the MAC, and the PHY of the NR protocol stack. A logical channel may be used between the RLC and the MAC and may be classified as a control channel that carries control and configuration information in the NR control plane or as a traffic channel that carries data in the NR user plane. A logical channel may be classified as a dedicated logical channel that is dedicated to a specific UE or as a common logical channel that may be used by more than one UE. A logical channel may also be defined by the type of information it carries. The set of logical channels defined by NR include, for example:
-- a paging control channel (PCCH) for carrying paging messages used to page a UE whose location is not known to the network on a cell level;
-- a broadcast control channel (BCCH) for carrying system information messages in the form of a master information block (MIB) and several system information blocks (SIBs), wherein the system information messages may be used by the UEs to obtain information about how a cell is configured and how to operate within the cell;
-- a common control channel (CCCH) for carrying control messages together with random access;
-- a dedicated control channel (DCCH) for carrying control messages to/from a specific the UE to configure the UE; and
-- a dedicated traffic channel (DTCH) for carrying user data to/from a specific the UE.

Transport channels are used between the MAC and PHY layers and may be defined by how the information they carry is transmitted over the air interface. The set of transport channels defined by NR include, for example:
-- a paging channel (PCH) for carrying paging messages that originated from the PCCH;
-- a broadcast channel (BCH) for carrying the MIB from the BCCH;
-- a downlink shared channel (DL-SCH) for carrying downlink data and signaling messages, including the SIBs from the BCCH;
-- an uplink shared channel (UL-SCH) for carrying uplink data and signaling messages; and
-- a random access channel (RACH) for allowing a UE to contact the network without any prior scheduling.

The PHY may use physical channels to pass information between processing levels of the PHY. A physical channel may have an associated set of time-frequency resources for carrying the information of one or more transport channels. The PHY may generate control information to support the low-level operation of the PHY and provide the control information to the lower levels of the PHY via physical control channels, known as L1/L2 control channels. The set of physical channels and physical control channels defined by NR include, for example:
-- a physical broadcast channel (PBCH) for carrying the MIB from the BCH;
-- a physical downlink shared channel (PDSCH) for carrying downlink data and signaling messages from the DL-SCH, as well as paging messages from the PCH;
-- a physical downlink control channel (PDCCH) for carrying downlink control information (DCI), which may include downlink scheduling commands, uplink scheduling grants, and uplink power control commands;
-- a physical uplink shared channel (PUSCH) for carrying uplink data and signaling messages from the UL-SCH and in some instances uplink control information (UCI) as described below;
-- a physical uplink control channel (PUCCH) for carrying UCI, which may include HARQ acknowledgments, channel quality indicators (CQI), pre-coding matrix indicators (PMI), rank indicators (RI), and scheduling requests (SR); and
-- a physical random access channel (PRACH) for random access.

Similar to the physical control channels, the physical layer generates physical signals to support the low-level operation of the physical layer. As shown in FIG. 5A and FIG. 5B, the physical layer signals defined by NR include: primary synchronization signals (PSS), secondary synchronization signals (SSS), channel state information reference signals (CSI-RS), demodulation reference signals (DMRS), sounding reference signals (SRS), and phase-tracking reference signals (PT-RS). These physical layer signals will be described in greater detail below.

FIG. 2B illustrates an example NR control plane protocol stack. As shown in FIG. 2B, the NR control plane protocol stack may use the same/similar first four protocol layers as the example NR user plane protocol stack. These four protocol layers include the PHYs 211 and 221, the MACs 212 and 222, the RLCs 213 and 223, and the PDCPs 214 and 224. Instead of having the SDAPs 215 and 225 at the top of the stack as in the NR user plane protocol stack, the NR control plane stack has radio resource controls (RRCs) 216 and 226 and NAS protocols 217 and 237 at the top of the NR control plane protocol stack.

The NAS protocols 217 and 237 may provide control plane functionality between the UE 210 and the AMF 230 (e.g., the AMF 158A) or, more generally, between the UE 210 and the CN. The NAS protocols 217 and 237 may provide control plane functionality between the UE 210 and the AMF 230 via signaling messages, referred to as NAS messages. There is no direct path between the UE 210 and the AMF 230 through which the NAS messages can be transported. The NAS messages may be transported using the AS of the Uu and NG interfaces. NAS protocols 217 and 237 may provide control plane functionality such as authentication, security, connection setup, mobility management, and session management.

The RRCs 216 and 226 may provide control plane functionality between the UE 210 and the gNB 220 or, more generally, between the UE 210 and the RAN. The RRCs 216 and 226 may provide control plane functionality between the UE 210 and the gNB 220 via signaling messages, referred to as RRC messages. RRC messages may be transmitted between the UE 210 and the RAN using signaling radio bearers and the same/similar PDCP, RLC, MAC, and PHY protocol layers. The MAC may multiplex control-plane and user-plane data into the same transport block (TB). The RRCs 216 and 226 may provide control plane functionality such as: broadcast of system information related to AS and NAS; paging initiated by the CN or the RAN; establishment, maintenance and release of an RRC connection between the UE 210 and the RAN; security functions including key management; establishment, configuration, maintenance and release of signaling radio bearers and data radio bearers; mobility functions; QoS management functions; the UE measurement reporting and control of the reporting; detection of and recovery from radio link failure (RLF); and/or NAS message transfer. As part of establishing an RRC connection, RRCs 216 and 226 may establish an RRC context, which may involve configuring parameters for communication between the UE 210 and the RAN.

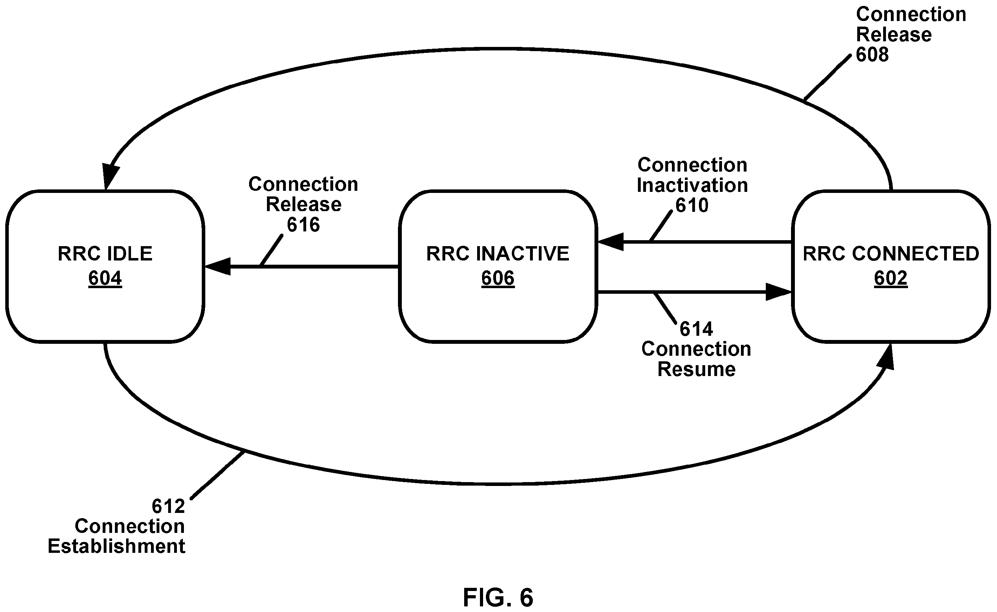

FIG. 6 is an example diagram showing RRC state transitions of a UE. The UE may be the same or similar to the wireless device 106 depicted in FIG. 1A, the UE 210 depicted in FIG. 2A and FIG. 2B, or any other wireless device described in the present disclosure. As illustrated in FIG. 6, a UE may be in at least one of three RRC states: RRC connected 602 (e.g., RRC_CONNECTED), RRC idle 604 (e.g., RRC_IDLE), and RRC inactive 606 (e.g., RRC_INACTIVE).

In RRC connected 602, the UE has an established RRC context and may have at least one RRC connection with a base station. The base station may be similar to one of the one or more base stations included in the RAN 104 depicted in FIG. 1A, one of the gNBs 160 or ng-eNBs 162 depicted in FIG. 1B, the gNB 220 depicted in FIG. 2A and FIG. 2B, or any other base station described in the present disclosure. The base station with which the UE is connected may have the RRC context for the UE. The RRC context, referred to as the UE context, may comprise parameters for communication between the UE and the base station. These parameters may include, for example: one or more AS contexts; one or more radio link configuration parameters; bearer configuration information (e.g., relating to a data radio bearer, signaling radio bearer, logical channel, QoS flow, and/or PDU session); security information; and/or PHY, MAC, RLC, PDCP, and/or SDAP layer configuration information. While in RRC connected 602, mobility of the UE may be managed by the RAN (e.g., the RAN 104 or the NG-RAN 154). The UE may measure the signal levels (e.g., reference signal levels) from a serving cell and neighboring cells and report these measurements to the base station currently serving the UE. The UE's serving base station may request a handover to a cell of one of the neighboring base stations based on the reported measurements. The RRC state may transition from RRC connected 602 to RRC idle 604 through a connection release procedure 608 or to RRC inactive 606 through a connection inactivation procedure 610.

In RRC idle 604, an RRC context may not be established for the UE. In RRC idle 604, the UE may not have an RRC connection with the base station. While in RRC idle 604, the UE may be in a sleep state for the majority of the time (e.g., to conserve battery power). The UE may wake up periodically (e.g., once in every discontinuous reception cycle) to monitor for paging messages from the RAN. Mobility of the UE may be managed by the UE through a procedure known as cell reselection. The RRC state may transition from RRC idle 604 to RRC connected 602 through a connection establishment procedure 612, which may involve a random access procedure as discussed in greater detail below.

In RRC inactive 606, the RRC context previously established is maintained in the UE and the base station. This allows for a fast transition to RRC connected 602 with reduced signaling overhead as compared to the transition from RRC idle 604 to RRC connected 602. While in RRC inactive 606, the UE may be in a sleep state and mobility of the UE may be managed by the UE through cell reselection. The RRC state may transition from RRC inactive 606 to RRC connected 602 through a connection resume procedure 614 or to RRC idle 604 though a connection release procedure 616 that may be the same as or similar to connection release procedure 608.

An RRC state may be associated with a mobility management mechanism. In RRC idle 604 and RRC inactive 606, mobility is managed by the UE through cell reselection. The purpose of mobility management in RRC idle 604 and RRC inactive 606 is to allow the network to be able to notify the UE of an event via a paging message without having to broadcast the paging message over the entire mobile communications network. The mobility management mechanism used in RRC idle 604 and RRC inactive 606 may allow the network to track the UE on a cell-group level so that the paging message may be broadcast over the cells of the cell group that the UE currently resides within instead of the entire mobile communication network. The mobility management mechanisms for RRC idle 604 and RRC inactive 606 track the UE on a cell-group level. They may do so using different granularities of grouping. For example, there may be three levels of cell-grouping granularity: individual cells; cells within a RAN area identified by a RAN area identifier (RAI); and cells within a group of RAN areas, referred to as a tracking area and identified by a tracking area identifier (TAI).

Tracking areas may be used to track the UE at the CN level. The CN (e.g., the CN 102 or the 5G-CN 152) may provide the UE with a list of TAls associated with a UE registration area. If the UE moves, through cell reselection, to a cell associated with a TAI not included in the list of TAls associated with the UE registration area, the UE may perform a registration update with the CN to allow the CN to update the UE's location and provide the UE with a new the UE registration area.

RAN areas may be used to track the UE at the RAN level. For a UE in RRC inactive 606 state, the UE may be assigned a RAN notification area. A RAN notification area may comprise one or more cell identities, a list of RAls, or a list of TAls. In an example, a base station may belong to one or more RAN notification areas. In an example, a cell may belong to one or more RAN notification areas. If the UE moves, through cell reselection, to a cell not included in the RAN notification area assigned to the UE, the UE may perform a notification area update with the RAN to update the UE's RAN notification area.

A base station storing an RRC context for a UE or a last serving base station of the UE may be referred to as an anchor base station. An anchor base station may maintain an RRC context for the UE at least during a period of time that the UE stays in a RAN notification area of the anchor base station and/or during a period of time that the UE stays in RRC inactive 606.

A gNB, such as gNBs 160 in FIG. 1B, may be split into two parts: a central unit (gNB-CU), and one or more distributed units (gNB-DU). A gNB-CU may be coupled to one or more gNB-DUs using an F1 interface. The gNB-CU may comprise the RRC, the PDCP, and the SDAP. A gNB-DU may comprise the RLC, the MAC, and the PHY.

In NR, the physical signals and physical channels (discussed with respect to FIG. 5A and FIG. 5B) may be mapped onto orthogonal frequency divisional multiplexing (OFDM) symbols. OFDM is a multicarrier communication scheme that transmits data over F orthogonal subcarriers (or tones). Before transmission, the data may be mapped to a series of complex symbols (e.g., M-quadrature amplitude modulation (M-QAM) or M-phase shift keying (M-PSK) symbols), referred to as source symbols, and divided into F parallel symbol streams. The F parallel symbol streams may be treated as though they are in the frequency domain and used as inputs to an Inverse Fast Fourier Transform (IFFT) block that transforms them into the time domain. The IFFT block may take in F source symbols at a time, one from each of the F parallel symbol streams, and use each source symbol to modulate the amplitude and phase of one of F sinusoidal basis functions that correspond to the F orthogonal subcarriers. The output of the IFFT block may be F time-domain samples that represent the summation of the F orthogonal subcarriers. The F time-domain samples may form a single OFDM symbol. After some processing (e.g., addition of a cyclic prefix) and up-conversion, an OFDM symbol provided by the IFFT block may be transmitted over the air interface on a carrier frequency. The F parallel symbol streams may be mixed using an FFT block before being processed by the IFFT block. This operation produces Discrete Fourier Transform (DFT)-precoded OFDM symbols and may be used by UEs in the uplink to reduce the peak to average power ratio (PAPR). Inverse processing may be performed on the OFDM symbol at a receiver using an FFT block to recover the data mapped to the source symbols.

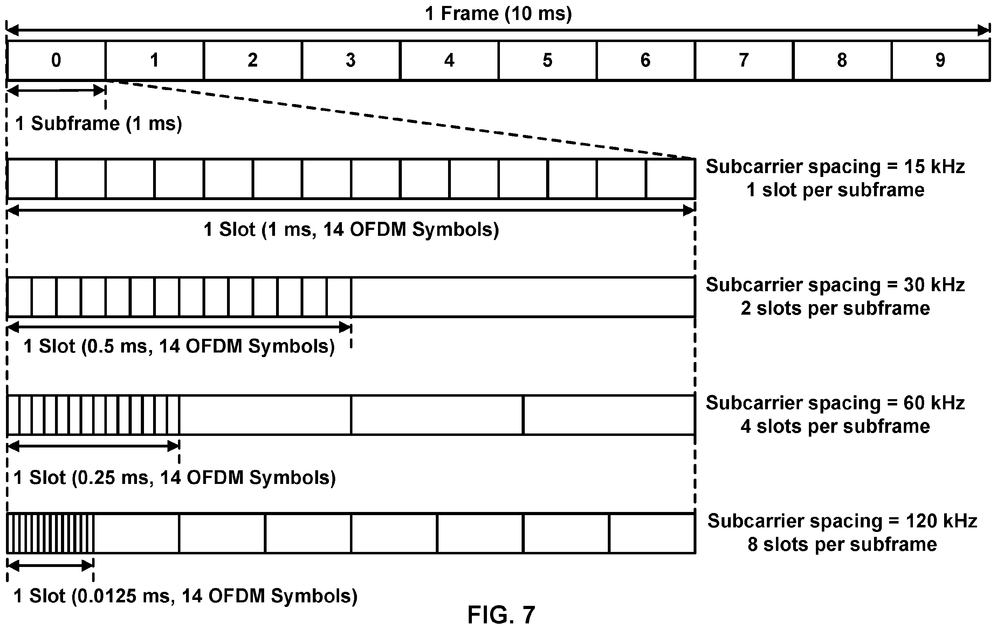

FIG. 7 illustrates an example configuration of an NR frame into which OFDM symbols are grouped. An NR frame may be identified by a system frame number (SFN). The SFN may repeat with a period of 1024 frames. As illustrated, one NR frame may be 10 milliseconds (ms) in duration and may include 10 subframes that are 1 ms in duration. A subframe may be divided into slots that include, for example, 14 OFDM symbols per slot.

The duration of a slot may depend on the numerology used for the OFDM symbols of the slot. In NR, a flexible numerology is supported to accommodate different cell deployments (e.g., cells with carrier frequencies below 1 GHz up to cells with carrier frequencies in the mm-wave range). A numerology may be defined in terms of subcarrier spacing and cyclic prefix duration. For a numerology in NR, subcarrier spacings may be scaled up by powers of two from a baseline subcarrier spacing of 15 kHz, and cyclic prefix durations may be scaled down by powers of two from a baseline cyclic prefix duration of 4.7 µs. For example, NR defines numerologies with the following subcarrier spacing/cyclic prefix duration combinations: 15 kHz/4.7 µs; 30 kHz/2.3 µs; 60 kHz/1.2 µs; 120 kHz/0.59 µs; and 240 kHz/0.29 µs.

A slot may have a fixed number of OFDM symbols (e.g., 14 OFDM symbols). A numerology with a higher subcarrier spacing has a shorter slot duration and, correspondingly, more slots per subframe. FIG. 7 illustrates this numerology-dependent slot duration and slots-per-subframe transmission structure (the numerology with a subcarrier spacing of 240 kHz is not shown in FIG. 7 for ease of illustration). A subframe in NR may be used as a numerology-independent time reference, while a slot may be used as the unit upon which uplink and downlink transmissions are scheduled. To support low latency, scheduling in NR may be decoupled from the slot duration and start at any OFDM symbol and last for as many symbols as needed for a transmission. These partial slot transmissions may be referred to as mini-slot or subslot transmissions.

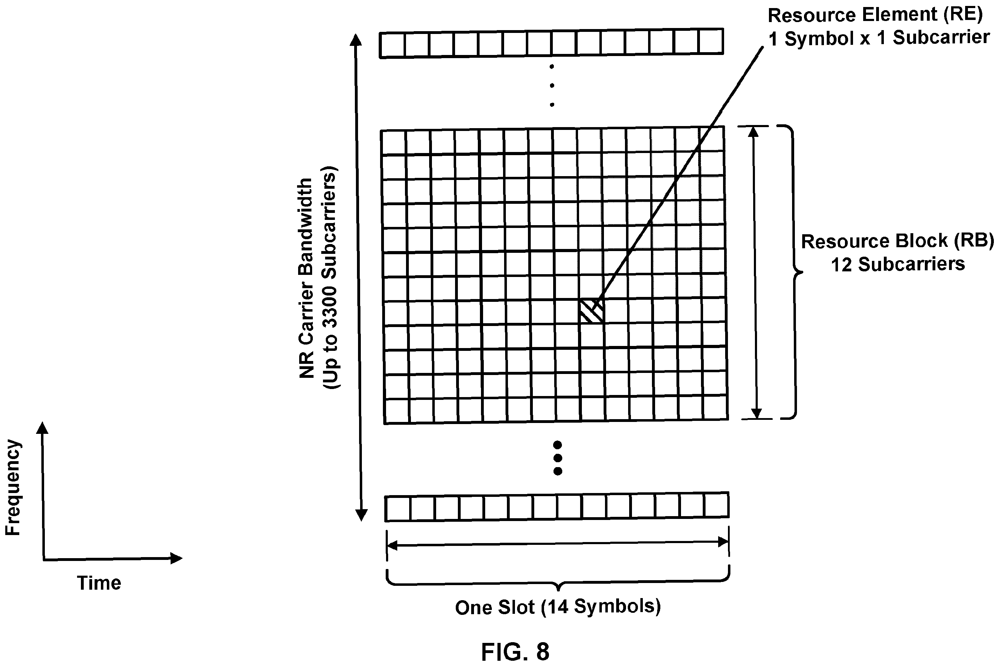

FIG. 8 illustrates an example configuration of a slot in the time and frequency domain for an NR carrier. The slot includes resource elements (REs) and resource blocks (RBs). An RE is the smallest physical resource in NR. An RE spans one OFDM symbol in the time domain by one subcarrier in the frequency domain as shown in FIG. 8. An RB spans twelve consecutive REs in the frequency domain as shown in FIG. 8. An NR carrier may be limited to a width of 275 RBs or 275×12 = 3300 subcarriers. Such a limitation, if used, may limit the NR carrier to 50, 100, 200, and 400 MHz for subcarrier spacings of 15, 30, 60, and 120 kHz, respectively, where the 400 MHz bandwidth may be set based on a 400 MHz per carrier bandwidth limit.

FIG. 8 illustrates a single numerology being used across the entire bandwidth of the NR carrier. In other example configurations, multiple numerologies may be supported on the same carrier.

NR may support wide carrier bandwidths (e.g., up to 400 MHz for a subcarrier spacing of 120 kHz). Not all UEs may be able to receive the full carrier bandwidth (e.g., due to hardware limitations). Also, receiving the full carrier bandwidth may be prohibitive in terms of UE power consumption. In an example, to reduce power consumption and/or for other purposes, a UE may adapt the size of the UE's receive bandwidth based on the amount of traffic the UE is scheduled to receive. This is referred to as bandwidth adaptation.

NR defines bandwidth parts (BWPs) to support UEs not capable of receiving the full carrier bandwidth and to support bandwidth adaptation. In an example, a BWP may be defined by a subset of contiguous RBs on a carrier. A UE may be configured (e.g., via RRC layer) with one or more downlink BWPs and one or more uplink BWPs per serving cell (e.g., up to four downlink BWPs and up to four uplink BWPs per serving cell). At a given time, one or more of the configured BWPs for a serving cell may be active. These one or more BWPs may be referred to as active BWPs of the serving cell. When a serving cell is configured with a secondary uplink carrier, the serving cell may have one or more first active BWPs in the uplink carrier and one or more second active BWPs in the secondary uplink carrier.

For unpaired spectra, a downlink BWP from a set of configured downlink BWPs may be linked with an uplink BWP from a set of configured uplink BWPs if a downlink BWP index of the downlink BWP and an uplink BWP index of the uplink BWP are the same. For unpaired spectra, a UE may expect that a center frequency for a downlink BWP is the same as a center frequency for an uplink BWP.

For a downlink BWP in a set of configured downlink BWPs on a primary cell (PCell), a base station may configure a UE with one or more control resource sets (CORESETs) for at least one search space. A search space is a set of locations in the time and frequency domains where the UE may find control information. The search space may be a UE-specific search space or a common search space (potentially usable by a plurality of UEs). For example, a base station may configure a UE with a common search space, on a PCell or on a primary secondary cell (PSCell), in an active downlink BWP.

For an uplink BWP in a set of configured uplink BWPs, a BS may configure a UE with one or more resource sets for one or more PUCCH transmissions. A UE may receive downlink receptions (e.g., PDCCH or PDSCH) in a downlink BWP according to a configured numerology (e.g., subcarrier spacing and cyclic prefix duration) for the downlink BWP. The UE may transmit uplink transmissions (e.g., PUCCH or PUSCH) in an uplink BWP according to a configured numerology (e.g., subcarrier spacing and cyclic prefix length for the uplink BWP).

One or more BWP indicator fields may be provided in Downlink Control Information (DCI). A value of a BWP indicator field may indicate which BWP in a set of configured BWPs is an active downlink BWP for one or more downlink receptions. The value of the one or more BWP indicator fields may indicate an active uplink BWP for one or more uplink transmissions.

A base station may semi-statically configure a UE with a default downlink BWP within a set of configured downlink BWPs associated with a PCell. If the base station does not provide the default downlink BWP to the UE, the default downlink BWP may be an initial active downlink BWP. The UE may determine which BWP is the initial active downlink BWP based on a CORESET configuration obtained using the PBCH.

A base station may configure a UE with a BWP inactivity timer value for a PCell. The UE may start or restart a BWP inactivity timer at any appropriate time. For example, the UE may start or restart the BWP inactivity timer (a) when the UE detects a DCI indicating an active downlink BWP other than a default downlink BWP for a paired spectra operation; or (b) when a UE detects a DCI indicating an active downlink BWP or active uplink BWP other than a default downlink BWP or uplink BWP for an unpaired spectra operation. If the UE does not detect DCI during an interval of time (e.g., 1 ms or 0.5 ms), the UE may run the BWP inactivity timer toward expiration (for example, increment from zero to the BWP inactivity timer value, or decrement from the BWP inactivity timer value to zero). When the BWP inactivity timer expires, the UE may switch from the active downlink BWP to the default downlink BWP.

In an example, a base station may semi-statically configure a UE with one or more BWPs. A UE may switch an active BWP from a first BWP to a second BWP in response to receiving a DCI indicating the second BWP as an active BWP and/or in response to an expiry of the BWP inactivity timer (e.g., if the second BWP is the default BWP).

Downlink and uplink BWP switching (where BWP switching refers to switching from a currently active BWP to a not currently active BWP) may be performed independently in paired spectra. In unpaired spectra, downlink and uplink BWP switching may be performed simultaneously. Switching between configured BWPs may occur based on RRC signaling, DCI, expiration of a BWP inactivity timer, and/or an initiation of random access.

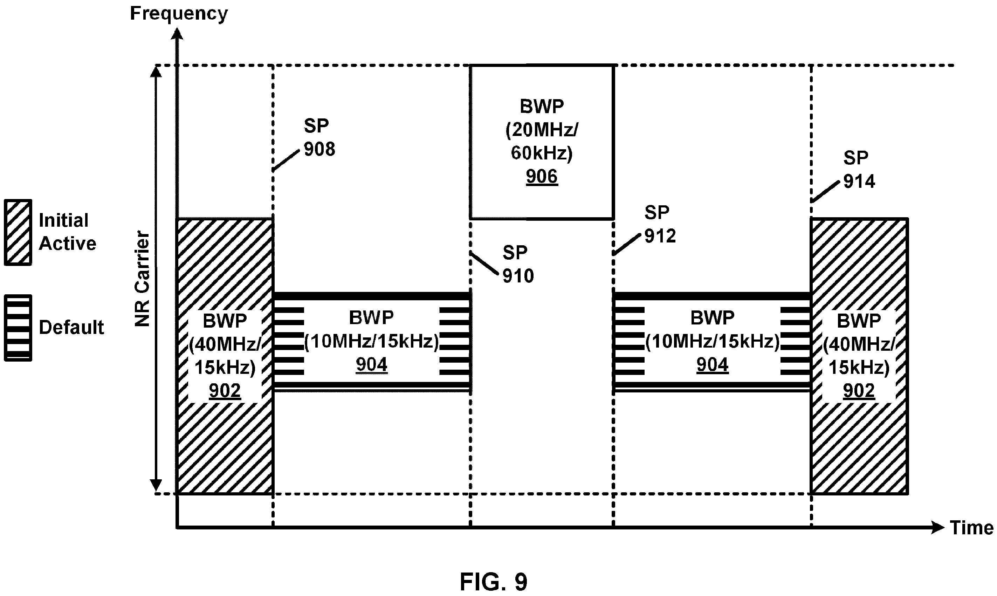

FIG. 9 illustrates an example of bandwidth adaptation using three configured BWPs for an NR carrier. A UE configured with the three BWPs may switch from one BWP to another BWP at a switching point. In the example illustrated in FIG. 9, the BWPs include: a BWP 902 with a bandwidth of 40 MHz and a subcarrier spacing of 15 kHz; a BWP 904 with a bandwidth of 10 MHz and a subcarrier spacing of 15 kHz; and a BWP 906 with a bandwidth of 20 MHz and a subcarrier spacing of 60 kHz. The BWP 902 may be an initial active BWP, and the BWP 904 may be a default BWP. The UE may switch between BWPs at switching points. In the example of FIG. 9, the UE may switch from the BWP 902 to the BWP 904 at a switching point 908. The switching at the switching point 908 may occur for any suitable reason, for example, in response to an expiry of a BWP inactivity timer (indicating switching to the default BWP) and/or in response to receiving a DCI indicating BWP 904 as the active BWP. The UE may switch at a switching point 910 from active BWP 904 to BWP 906 in response to receiving a DCI indicating BWP 906 as the active BWP. The UE may switch at a switching point 912 from active BWP 906 to BWP 904 in response to an expiry of a BWP inactivity timer and/or in response to receiving a DCI indicating BWP 904 as the active BWP. The UE may switch at a switching point 914 from active BWP 904 to BWP 902 in response to receiving a DCI indicating BWP 902 as the active BWP.

If a UE is configured for a secondary cell with a default downlink BWP in a set of configured downlink BWPs and a timer value, UE procedures for switching BWPs on a secondary cell may be the same/similar as those on a primary cell. For example, the UE may use the timer value and the default downlink BWP for the secondary cell in the same/similar manner as the UE would use these values for a primary cell.

To provide for greater data rates, two or more carriers can be aggregated and simultaneously transmitted to/from the same UE using carrier aggregation (CA). The aggregated carriers in CA may be referred to as component carriers (CCs). When CA is used, there are a number of serving cells for the UE, one for a CC. The CCs may have three configurations in the frequency domain.

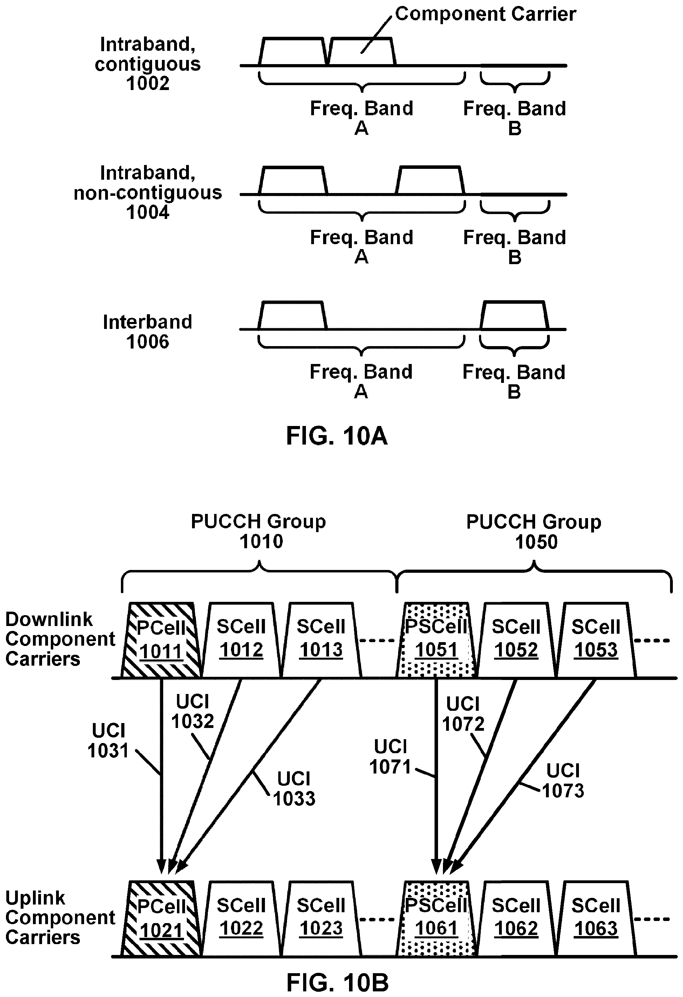

FIG. 10A illustrates the three CA configurations with two CCs. In the intraband, contiguous configuration 1002, the two CCs are aggregated in the same frequency band (frequency band A) and are located directly adjacent to each other within the frequency band. In the intraband, non-contiguous configuration 1004, the two CCs are aggregated in the same frequency band (frequency band A) and are separated in the frequency band by a gap. In the interband configuration 1006, the two CCs are located in frequency bands (frequency band A and frequency band B).

In an example, up to 32 CCs may be aggregated. The aggregated CCs may have the same or different bandwidths, subcarrier spacing, and/or duplexing schemes (TDD or FDD). A serving cell for a UE using CA may have a downlink CC. For FDD, one or more uplink CCs may be optionally configured for a serving cell. The ability to aggregate more downlink carriers than uplink carriers may be useful, for example, when the UE has more data traffic in the downlink than in the uplink.

When CA is used, one of the aggregated cells for a UE may be referred to as a primary cell (PCell). The PCell may be the serving cell that the UE initially connects to at RRC connection establishment, reestablishment, and/or handover. The PCell may provide the UE with NAS mobility information and the security input. UEs may have different PCells. In the downlink, the carrier corresponding to the PCell may be referred to as the downlink primary CC (DL PCC). In the uplink, the carrier corresponding to the PCell may be referred to as the uplink primary CC (UL PCC). The other aggregated cells for the UE may be referred to as secondary cells (SCells). In an example, the SCells may be configured after the PCell is configured for the UE. For example, an SCell may be configured through an RRC Connection Reconfiguration procedure. In the downlink, the carrier corresponding to an SCell may be referred to as a downlink secondary CC (DL SCC). In the uplink, the carrier corresponding to the SCell may be referred to as the uplink secondary CC (UL SCC).

Configured SCells for a UE may be activated and deactivated based on, for example, traffic and channel conditions. Deactivation of an SCell may mean that PDCCH and PDSCH reception on the SCell is stopped and PUSCH, SRS, and CQI transmissions on the SCell are stopped. Configured SCells may be activated and deactivated using a MAC CE with respect to FIG. 4B. For example, a MAC CE may use a bitmap (e.g., one bit per SCell) to indicate which SCells (e.g., in a subset of configured SCells) for the UE are activated or deactivated. Configured SCells may be deactivated in response to an expiration of an SCell deactivation timer (e.g., one SCell deactivation timer per SCell).

Downlink control information, such as scheduling assignments and scheduling grants, for a cell may be transmitted on the cell corresponding to the assignments and grants, which is known as self-scheduling. The DCI for the cell may be transmitted on another cell, which is known as cross-carrier scheduling. Uplink control information (e.g., HARQ acknowledgments and channel state feedback, such as CQl, PMI, and/or RI) for aggregated cells may be transmitted on the PUCCH of the PCell. For a larger number of aggregated downlink CCs, the PUCCH of the PCell may become overloaded. Cells may be divided into multiple PUCCH groups.

FIG. 10B illustrates an example of how aggregated cells may be configured into one or more PUCCH groups. A PUCCH group 1010 and a PUCCH group 1050 may include one or more downlink CCs, respectively. In the example of FIG. 10B, the PUCCH group 1010 includes three downlink CCs: a PCell 1011, an SCell 1012, and an SCell 1013. The PUCCH group 1050 includes three downlink CCs in the present example: a PCell 1051, an SCell 1052, and an SCell 1053. One or more uplink CCs may be configured as a PCell 1021, an SCell 1022, and an SCell 1023. One or more other uplink CCs may be configured as a primary SCell (PSCell) 1061, an SCell 1062, and an SCell 1063. Uplink control information (UCI) related to the downlink CCs of the PUCCH group 1010, shown as UCI 1031, UCI 1032, and UCI 1033, may be transmitted in the uplink of the PCell 1021. Uplink control information (UCI) related to the downlink CCs of the PUCCH group 1050, shown as UCI 1071, UCI 1072, and UCI 1073, may be transmitted in the uplink of the PSCell 1061. In an example, if the aggregated cells depicted in FIG. 10B were not divided into the PUCCH group 1010 and the PUCCH group 1050, a single uplink PCell to transmit UCI relating to the downlink CCs, and the PCell may become overloaded. By dividing transmissions of UCI between the PCell 1021 and the PSCell 1061, overloading may be prevented.

A cell, comprising a downlink carrier and optionally an uplink carrier, may be assigned with a physical cell ID and a cell index. The physical cell ID or the cell index may identify a downlink carrier and/or an uplink carrier of the cell, for example, depending on the context in which the physical cell ID is used. A physical cell ID may be determined using a synchronization signal transmitted on a downlink component carrier. A cell index may be determined using RRC messages. In the disclosure, a physical cell ID may be referred to as a carrier ID, and a cell index may be referred to as a carrier index. For example, when the disclosure refers to a first physical cell ID for a first downlink carrier, the disclosure may mean the first physical cell ID is for a cell comprising the first downlink carrier. The same/similar concept may apply to, for example, a carrier activation. When the disclosure indicates that a first carrier is activated, the specification may mean that a cell comprising the first carrier is activated.

In CA, a multi-carrier nature of a PHY may be exposed to a MAC. In an example, a HARQ entity may operate on a serving cell. A transport block may be generated per assignment/grant per serving cell. A transport block and potential HARQ retransmissions of the transport block may be mapped to a serving cell.

In the downlink, a base station may transmit (e.g., unicast, multicast, and/or broadcast) one or more Reference Signals (RSs) to a UE (e.g., PSS, SSS, CSI-RS, DMRS, and/or PT-RS, as shown in FIG. 5A). In the uplink, the UE may transmit one or more RSs to the base station (e.g., DMRS, PT-RS, and/or SRS, as shown in FIG. 5B). The PSS and the SSS may be transmitted by the base station and used by the UE to synchronize the UE to the base station. The PSS and the SSS may be provided in a synchronization signal (SS) / physical broadcast channel (PBCH) block that includes the PSS, the SSS, and the PBCH. The base station may periodically transmit a burst of SS/PBCH blocks.

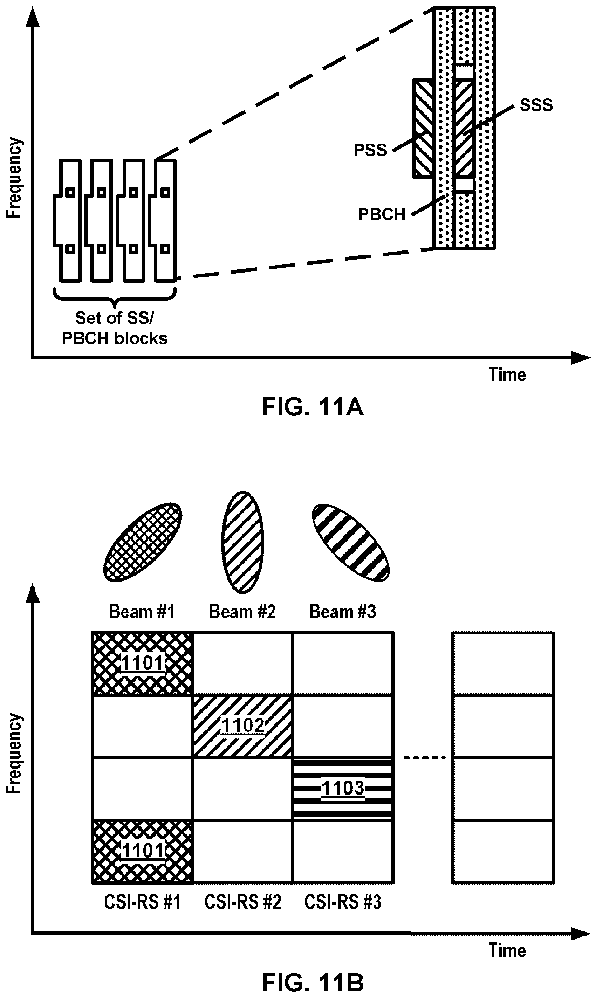

FIG. 11A illustrates an example of an SS/PBCH block's structure and location. A burst of SS/PBCH blocks may include one or more SS/PBCH blocks (e.g., 4 SS/PBCH blocks, as shown in FIG. 11A). Bursts may be transmitted periodically (e.g., every 2 frames or 20 ms). A burst may be restricted to a half-frame (e.g., a first half-frame having a duration of 5 ms). It will be understood that FIG. 11A is an example, and that these parameters (number of SS/PBCH blocks per burst, periodicity of bursts, position of burst within the frame) may be configured based on, for example: a carrier frequency of a cell in which the SS/PBCH block is transmitted; a numerology or subcarrier spacing of the cell; a configuration by the network (e.g., using RRC signaling); or any other suitable factor. In an example, the UE may assume a subcarrier spacing for the SS/PBCH block based on the carrier frequency being monitored, unless the radio network configured the UE to assume a different subcarrier spacing.

The SS/PBCH block may span one or more OFDM symbols in the time domain (e.g., 4 OFDM symbols, as shown in the example of FIG. 11A) and may span one or more subcarriers in the frequency domain (e.g., 240 contiguous subcarriers). The PSS, the SSS, and the PBCH may have a common center frequency. The PSS may be transmitted first and may span, for example, 1 OFDM symbol and 127 subcarriers. The SSS may be transmitted after the PSS (e.g., two symbols later) and may span 1 OFDM symbol and 127 subcarriers. The PBCH may be transmitted after the PSS (e.g., across the next 3 OFDM symbols) and may span 240 subcarriers.

The location of the SS/PBCH block in the time and frequency domains may not be known to the UE (e.g., if the UE is searching for the cell). To find and select the cell, the UE may monitor a carrier for the PSS. For example, the UE may monitor a frequency location within the carrier. If the PSS is not found after a certain duration (e.g., 20 ms), the UE may search for the PSS at a different frequency location within the carrier, as indicated by a synchronization raster. If the PSS is found at a location in the time and frequency domains, the UE may determine, based on a known structure of the SS/PBCH block, the locations of the SSS and the PBCH, respectively. The SS/PBCH block may be a cell-defining SS block (CD-SSB). In an example, a primary cell may be associated with a CD-SSB. The CD-SSB may be located on a synchronization raster. In an example, a cell selection/search and/or reselection may be based on the CD-SSB.

The SS/PBCH block may be used by the UE to determine one or more parameters of the cell. For example, the UE may determine a physical cell identifier (PCI) of the cell based on the sequences of the PSS and the SSS, respectively. The UE may determine a location of a frame boundary of the cell based on the location of the SS/PBCH block. For example, the SS/PBCH block may indicate that it has been transmitted in accordance with a transmission pattern, wherein a SS/PBCH block in the transmission pattern is a known distance from the frame boundary.

The PBCH may use a QPSK modulation and may use forward error correction (FEC). The FEC may use polar coding. One or more symbols spanned by the PBCH may carry one or more DMRSs for demodulation of the PBCH. The PBCH may include an indication of a current system frame number (SFN) of the cell and/or a SS/PBCH block timing index. These parameters may facilitate time synchronization of the UE to the base station. The PBCH may include a master information block (MIB) used to provide the UE with one or more parameters. The MIB may be used by the UE to locate remaining minimum system information (RMSI) associated with the cell. The RMSI may include a System Information Block Type 1 (SIB1). The SIB1 may contain information needed by the UE to access the cell. The UE may use one or more parameters of the MIB to monitor PDCCH, which may be used to schedule PDSCH. The PDSCH may include the SIB1. The SIB1 may be decoded using parameters provided in the MIB. The PBCH may indicate an absence of SIB1. Based on the PBCH indicating the absence of SIB1, the UE may be pointed to a frequency. The UE may search for an SS/PBCH block at the frequency to which the UE is pointed.

The UE may assume that one or more SS/PBCH blocks transmitted with a same SS/PBCH block index are quasi co-located (QCLed) (e.g., having the same/similar Doppler spread, Doppler shift, average gain, average delay, and/or spatial Rx parameters). The UE may not assume QCL for SS/PBCH block transmissions having different SS/PBCH block indices.

SS/PBCH blocks (e.g., those within a half-frame) may be transmitted in spatial directions (e.g., using different beams that span a coverage area of the cell). In an example, a first SS/PBCH block may be transmitted in a first spatial direction using a first beam, and a second SS/PBCH block may be transmitted in a second spatial direction using a second beam.

In an example, within a frequency span of a carrier, a base station may transmit a plurality of SS/PBCH blocks. In an example, a first PCI of a first SS/PBCH block of the plurality of SS/PBCH blocks may be different from a second PCI of a second SS/PBCH block of the plurality of SS/PBCH blocks. The PCIs of SS/PBCH blocks transmitted in different frequency locations may be different or the same.

The CSI-RS may be transmitted by the base station and used by the UE to acquire channel state information (CSI). The base station may configure the UE with one or more CSI-RSs for channel estimation or any other suitable purpose. The base station may configure a UE with one or more of the same/similar CSI-RSs. The UE may measure the one or more CSI-RSs. The UE may estimate a downlink channel state and/or generate a CSI report based on the measuring of the one or more downlink CSI-RSs. The UE may provide the CSI report to the base station. The base station may use feedback provided by the UE (e.g., the estimated downlink channel state) to perform link adaptation.

The base station may semi-statically configure the UE with one or more CSI-RS resource sets. A CSI-RS resource may be associated with a location in the time and frequency domains and a periodicity. The base station may selectively activate and/or deactivate a CSI-RS resource. The base station may indicate to the UE that a CSI-RS resource in the CSI-RS resource set is activated and/or deactivated.

The base station may configure the UE to report CSI measurements. The base station may configure the UE to provide CSI reports periodically, aperiodically, or semi-persistently. For periodic CSI reporting, the UE may be configured with a timing and/or periodicity of a plurality of CSI reports. For aperiodic CSI reporting, the base station may request a CSI report. For example, the base station may command the UE to measure a configured CSI-RS resource and provide a CSI report relating to the measurements. For semi-persistent CSI reporting, the base station may configure the UE to transmit periodically, and selectively activate or deactivate the periodic reporting. The base station may configure the UE with a CSI-RS resource set and CSI reports using RRC signaling.

The CSI-RS configuration may comprise one or more parameters indicating, for example, up to 32 antenna ports. The UE may be configured to employ the same OFDM symbols for a downlink CSI-RS and a control resource set (CORESET) when the downlink CSI-RS and CORESET are spatially QCLed and resource elements associated with the downlink CSI-RS are outside of the physical resource blocks (PRBs) configured for the CORESET. The UE may be configured to employ the same OFDM symbols for downlink CSI-RS and SS/PBCH blocks when the downlink CSI-RS and SS/PBCH blocks are spatially QCLed and resource elements associated with the downlink CSI-RS are outside of PRBs configured for the SS/PBCH blocks.

Downlink DMRSs may be transmitted by a base station and used by a UE for channel estimation. For example, the downlink DMRS may be used for coherent demodulation of one or more downlink physical channels (e.g., PDSCH). An NR network may support one or more variable and/or configurable DMRS patterns for data demodulation. At least one downlink DMRS configuration may support a front-loaded DMRS pattern. A front-loaded DMRS may be mapped over one or more OFDM symbols (e.g., one or two adjacent OFDM symbols). A base station may semi-statically configure the UE with a number (e.g. a maximum number) of front-loaded DMRS symbols for PDSCH. A DMRS configuration may support one or more DMRS ports. For example, for single user-MIMO, a DMRS configuration may support up to eight orthogonal downlink DMRS ports per UE. For multiuser-MIMO, a DMRS configuration may support up to 4 orthogonal downlink DMRS ports per UE. A radio network may support (e.g., at least for CP-OFDM) a common DMRS structure for downlink and uplink, wherein a DMRS location, a DMRS pattern, and/or a scrambling sequence may be the same or different. The base station may transmit a downlink DMRS and a corresponding PDSCH using the same precoding matrix. The UE may use the one or more downlink DMRSs for coherent demodulation/channel estimation of the PDSCH.

In an example, a transmitter (e.g., a base station) may use a precoder matrices for a part of a transmission bandwidth. For example, the transmitter may use a first precoder matrix for a first bandwidth and a second precoder matrix for a second bandwidth. The first precoder matrix and the second precoder matrix may be different based on the first bandwidth being different from the second bandwidth. The UE may assume that a same precoding matrix is used across a set of PRBs. The set of PRBs may be denoted as a precoding resource block group (PRG).

A PDSCH may comprise one or more layers. The UE may assume that at least one symbol with DMRS is present on a layer of the one or more layers of the PDSCH. A higher layer may configure up to 3 DMRSs for the PDSCH.

Downlink PT-RS may be transmitted by a base station and used by a UE for phase-noise compensation. Whether a downlink PT-RS is present or not may depend on an RRC configuration. The presence and/or pattern of the downlink PT-RS may be configured on a UE-specific basis using a combination of RRC signaling and/or an association with one or more parameters employed for other purposes (e.g., modulation and coding scheme (MCS)), which may be indicated by DCI. When configured, a dynamic presence of a downlink PT-RS may be associated with one or more DCI parameters comprising at least MCS. An NR network may support a plurality of PT-RS densities defined in the time and/or frequency domains. When present, a frequency domain density may be associated with at least one configuration of a scheduled bandwidth. The UE may assume a same precoding for a DMRS port and a PT-RS port. A number of PT-RS ports may be fewer than a number of DMRS ports in a scheduled resource. Downlink PT-RS may be confined in the scheduled time/frequency duration for the UE. Downlink PT-RS may be transmitted on symbols to facilitate phase tracking at the receiver.

The UE may transmit an uplink DMRS to a base station for channel estimation. For example, the base station may use the uplink DMRS for coherent demodulation of one or more uplink physical channels. For example, the UE may transmit an uplink DMRS with a PUSCH and/or a PUCCH. The uplink DM-RS may span a range of frequencies that is similar to a range of frequencies associated with the corresponding physical channel. The base station may configure the UE with one or more uplink DMRS configurations. At least one DMRS configuration may support a front-loaded DMRS pattern. The front-loaded DMRS may be mapped over one or more OFDM symbols (e.g., one or two adjacent OFDM symbols). One or more uplink DMRSs may be configured to transmit at one or more symbols of a PUSCH and/or a PUCCH. The base station may semi-statically configure the UE with a number (e.g. maximum number) of front-loaded DMRS symbols for the PUSCH and/or the PUCCH, which the UE may use to schedule a single-symbol DMRS and/or a double-symbol DMRS. An NR network may support (e.g., for cyclic prefix orthogonal frequency division multiplexing (CP-OFDM)) a common DMRS structure for downlink and uplink, wherein a DMRS location, a DMRS pattern, and/or a scrambling sequence for the DMRS may be the same or different.

A PUSCH may comprise one or more layers, and the UE may transmit at least one symbol with DMRS present on a layer of the one or more layers of the PUSCH. In an example, a higher layer may configure up to three DMRSs for the PUSCH.

Uplink PT-RS (which may be used by a base station for phase tracking and/or phase-noise compensation) may or may not be present depending on an RRC configuration of the UE. The presence and/or pattern of uplink PT-RS may be configured on a UE-specific basis by a combination of RRC signaling and/or one or more parameters employed for other purposes (e.g., Modulation and Coding Scheme (MCS)), which may be indicated by DCI. When configured, a dynamic presence of uplink PT-RS may be associated with one or more DCI parameters comprising at least MCS. A radio network may support a plurality of uplink PT-RS densities defined in time/frequency domain. When present, a frequency domain density may be associated with at least one configuration of a scheduled bandwidth. The UE may assume a same precoding for a DMRS port and a PT-RS port. A number of PT-RS ports may be fewer than a number of DMRS ports in a scheduled resource. For example, uplink PT-RS may be confined in the scheduled time/frequency duration for the UE.

SRS may be transmitted by a UE to a base station for channel state estimation to support uplink channel dependent scheduling and/or link adaptation. SRS transmitted by the UE may allow a base station to estimate an uplink channel state at one or more frequencies. A scheduler at the base station may employ the estimated uplink channel state to assign one or more resource blocks for an uplink PUSCH transmission from the UE. The base station may semi-statically configure the UE with one or more SRS resource sets. For an SRS resource set, the base station may configure the UE with one or more SRS resources. An SRS resource set applicability may be configured by a higher layer (e.g., RRC) parameter. For example, when a higher layer parameter indicates beam management, an SRS resource in an SRS resource set of the one or more SRS resource sets (e.g., with the same/similar time domain behavior, periodic, aperiodic, and/or the like) may be transmitted at a time instant (e.g., simultaneously). The UE may transmit one or more SRS resources in SRS resource sets. An NR network may support aperiodic, periodic and/or semi-persistent SRS transmissions. The UE may transmit SRS resources based on one or more trigger types, wherein the one or more trigger types may comprise higher layer signaling (e.g., RRC) and/or one or more DCI formats. In an example, at least one DCI format may be employed for the UE to select at least one of one or more configured SRS resource sets. An SRS trigger type 0 may refer to an SRS triggered based on a higher layer signaling. An SRS trigger type 1 may refer to an SRS triggered based on one or more DCI formats. In an example, when PUSCH and SRS are transmitted in a same slot, the UE may be configured to transmit SRS after a transmission of a PUSCH and a corresponding uplink DMRS.

The base station may semi-statically configure the UE with one or more SRS configuration parameters indicating at least one of following: a SRS resource configuration identifier; a number of SRS ports; time domain behavior of an SRS resource configuration (e.g., an indication of periodic, semi-persistent, or aperiodic SRS); slot, mini-slot, and/or subframe level periodicity; offset for a periodic and/or an aperiodic SRS resource; a number of OFDM symbols in an SRS resource; a starting OFDM symbol of an SRS resource; an SRS bandwidth; a frequency hopping bandwidth; a cyclic shift; and/or an SRS sequence ID.

An antenna port is defined such that the channel over which a symbol on the antenna port is conveyed can be inferred from the channel over which another symbol on the same antenna port is conveyed. If a first symbol and a second symbol are transmitted on the same antenna port, the receiver may infer the channel (e.g., fading gain, multipath delay, and/or the like) for conveying the second symbol on the antenna port, from the channel for conveying the first symbol on the antenna port. A first antenna port and a second antenna port may be referred to as quasi co-located (QCLed) if one or more large-scale properties of the channel over which a first symbol on the first antenna port is conveyed may be inferred from the channel over which a second symbol on a second antenna port is conveyed. The one or more large-scale properties may comprise at least one of: a delay spread; a Doppler spread; a Doppler shift; an average gain; an average delay; and/or spatial Receiving (Rx) parameters.

Channels that use beamforming require beam management. Beam management may comprise beam measurement, beam selection, and beam indication. A beam may be associated with one or more reference signals. For example, a beam may be identified by one or more beamformed reference signals. The UE may perform downlink beam measurement based on downlink reference signals (e.g., a channel state information reference signal (CSI-RS)) and generate a beam measurement report. The UE may perform the downlink beam measurement procedure after an RRC connection is set up with a base station.

FIG. 11B illustrates an example of channel state information reference signals (CSI-RSs) that are mapped in the time and frequency domains. A square shown in FIG. 11B may span a resource block (RB) within a bandwidth of a cell. A base station may transmit one or more RRC messages comprising CSI-RS resource configuration parameters indicating one or more CSI-RSs. One or more of the following parameters may be configured by higher layer signaling (e.g., RRC and/or MAC signaling) for a CSI-RS resource configuration: a CSI-RS resource configuration identity, a number of CSI-RS ports, a CSI-RS configuration (e.g., symbol and resource element (RE) locations in a subframe), a CSI-RS subframe configuration (e.g., subframe location, offset, and periodicity in a radio frame), a CSI-RS power parameter, a CSI-RS sequence parameter, a code division multiplexing (CDM) type parameter, a frequency density, a transmission comb, quasi co-location (QCL) parameters (e.g., *QCL-scramblingidentity, crs-portscount, mbsfn-subframeconfiglist, csi-rs-configZPid, qcl-csi-rs-configNZPid*)*,* and/or other radio resource parameters.

The three beams illustrated in FIG. 11B may be configured for a UE in a UE-specific configuration. Three beams are illustrated in FIG. 11B (beam #1, beam #2, and beam #3), more or fewer beams may be configured. Beam #1 may be allocated with CSI-RS 1101 that may be transmitted in one or more subcarriers in an RB of a first symbol. Beam #2 may be allocated with CSI-RS 1102 that may be transmitted in one or more subcarriers in an RB of a second symbol. Beam #3 may be allocated with CSI-RS 1103 that may be transmitted in one or more subcarriers in an RB of a third symbol. By using frequency division multiplexing (FDM), a base station may use other subcarriers in a same RB (for example, those that are not used to transmit CSI-RS 1101) to transmit another CSI-RS associated with a beam for another UE. By using time domain multiplexing (TDM), beams used for the UE may be configured such that beams for the UE use symbols from beams of other UEs.

CSI-RSs such as those illustrated in FIG. 11B (e.g., CSI-RS 1101, 1102, 1103) may be transmitted by the base station and used by the UE for one or more measurements. For example, the UE may measure a reference signal received power (RSRP) of configured CSI-RS resources. The base station may configure the UE with a reporting configuration and the UE may report the RSRP measurements to a network (for example, via one or more base stations) based on the reporting configuration. In an example, the base station may determine, based on the reported measurement results, one or more transmission configuration indication (TCI) states comprising a number of reference signals. In an example, the base station may indicate one or more TCI states to the UE (e.g., via RRC signaling, a MAC CE, and/or a DCI). The UE may receive a downlink transmission with a receive (Rx) beam determined based on the one or more TCI states. In an example, the UE may or may not have a capability of beam correspondence. If the UE has the capability of beam correspondence, the UE may determine a spatial domain filter of a transmit (Tx) beam based on a spatial domain filter of the corresponding Rx beam. If the UE does not have the capability of beam correspondence, the UE may perform an uplink beam selection procedure to determine the spatial domain filter of the Tx beam. The UE may perform the uplink beam selection procedure based on one or more sounding reference signal (SRS) resources configured to the UE by the base station. The base station may select and indicate uplink beams for the UE based on measurements of the one or more SRS resources transmitted by the UE.

In a beam management procedure, a UE may assess (e.g., measure) a channel quality of one or more beam pair links, a beam pair link comprising a transmitting beam transmitted by a base station and a receiving beam received by the UE. Based on the assessment, the UE may transmit a beam measurement report indicating one or more beam pair quality parameters comprising, e.g., one or more beam identifications (e.g., a beam index, a reference signal index, or the like), RSRP, a precoding matrix indicator (PMI), a channel quality indicator (CQI), and/or a rank indicator (RI).

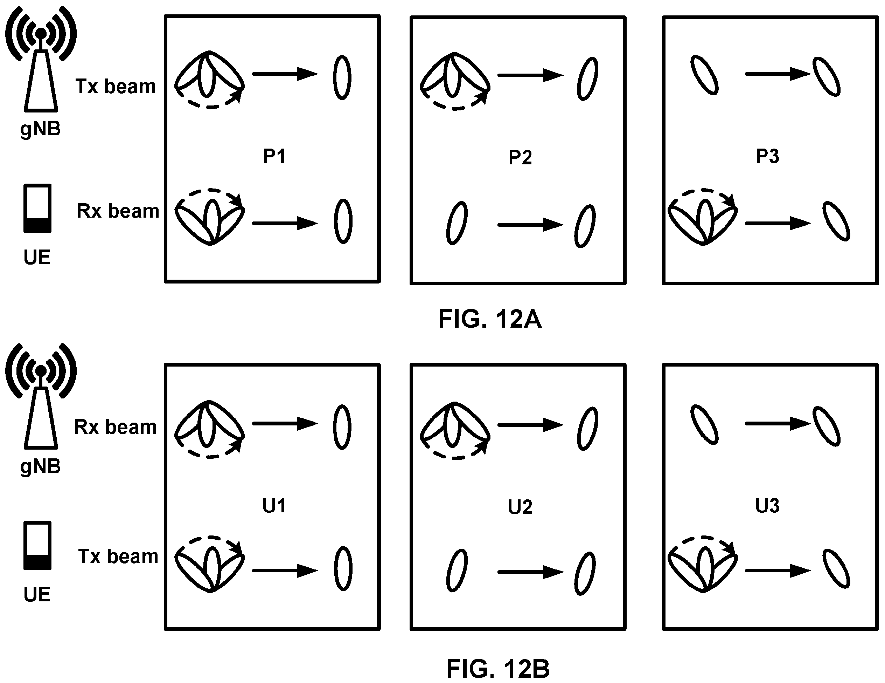

FIG. 12A illustrates examples of three downlink beam management procedures: P1, P2, and P3. Procedure P1 may enable a UE measurement on transmit (Tx) beams of a transmission reception point (TRP) (or multiple TRPs), e.g., to support a selection of one or more base station Tx beams and/or UE Rx beams (shown as ovals in the top row and bottom row, respectively, of P1). Beamforming at a TRP may comprise a Tx beam sweep for a set of beams (shown, in the top rows of P1 and P2, as ovals rotated in a counterclockwise direction indicated by the dashed arrow). Beamforming at a UE may comprise an Rx beam sweep for a set of beams (shown, in the bottom rows of P1 and P3, as ovals rotated in a clockwise direction indicated by the dashed arrow). Procedure P2 may be used to enable a UE measurement on Tx beams of a TRP (shown, in the top row of P2, as ovals rotated in a counterclockwise direction indicated by the dashed arrow). The UE and/or the base station may perform procedure P2 using a smaller set of beams than is used in procedure P1, or using narrower beams than the beams used in procedure P1. This may be referred to as beam refinement. The UE may perform procedure P3 for Rx beam determination by using the same Tx beam at the base station and sweeping an Rx beam at the UE.

FIG. 12B illustrates examples of three uplink beam management procedures: U1, U2, and U3. Procedure U1 may be used to enable a base station to perform a measurement on Tx beams of a UE, e.g., to support a selection of one or more UE Tx beams and/or base station Rx beams (shown as ovals in the top row and bottom row, respectively, of U1). Beamforming at the UE may include, e.g., a Tx beam sweep from a set of beams (shown in the bottom rows of U1 and U3 as ovals rotated in a clockwise direction indicated by the dashed arrow). Beamforming at the base station may include, e.g., an Rx beam sweep from a set of beams (shown, in the top rows of U1 and U2, as ovals rotated in a counterclockwise direction indicated by the dashed arrow). Procedure U2 may be used to enable the base station to adjust its Rx beam when the UE uses a fixed Tx beam. The UE and/or the base station may perform procedure U2 using a smaller set of beams than is used in procedure P1, or using narrower beams than the beams used in procedure P1. This may be referred to as beam refinement The UE may perform procedure U3 to adjust its Tx beam when the base station uses a fixed Rx beam.

A UE may initiate a beam failure recovery (BFR) procedure based on detecting a beam failure. The UE may transmit a BFR request (e.g., a preamble, a UCI, an SR, a MAC CE, and/or the like) based on the initiating of the BFR procedure. The UE may detect the beam failure based on a determination that a quality of beam pair link(s) of an associated control channel is unsatisfactory (e.g., having an error rate higher than an error rate threshold, a received signal power lower than a received signal power threshold, an expiration of a timer, and/or the like).

The UE may measure a quality of a beam pair link using one or more reference signals (RSs) comprising one or more SS/PBCH blocks, one or more CSI-RS resources, and/or one or more demodulation reference signals (DMRSs). A quality of the beam pair link may be based on one or more of a block error rate (BLER), an RSRP value, a signal to interference plus noise ratio (SINR) value, a reference signal received quality (RSRQ) value, and/or a CSI value measured on RS resources. The base station may indicate that an RS resource is quasi co-located (QCLed) with one or more DM-RSs of a channel (e.g., a control channel, a shared data channel, and/or the like). The RS resource and the one or more DMRSs of the channel may be QCLed when the channel characteristics (e.g., Doppler shift, Doppler spread, average delay, delay spread, spatial Rx parameter, fading, and/or the like) from a transmission via the RS resource to the UE are similar or the same as the channel characteristics from a transmission via the channel to the UE.

A network (e.g., a gNB and/or an ng-eNB of a network) and/or the UE may initiate a random access procedure. A UE in an RRC_IDLE state and/or an RRC_INACTIVE state may initiate the random access procedure to request a connection setup to a network. The UE may initiate the random access procedure from an RRC_CONNECTED state. The UE may initiate the random access procedure to request uplink resources (e.g., for uplink transmission of an SR when there is no PUCCH resource available) and/or acquire uplink timing (e.g., when uplink synchronization status is non-synchronized). The UE may initiate the random access procedure to request one or more system information blocks (SIBs) (e.g., other system information such as SIB2, SIB3, and/or the like). The UE may initiate the random access procedure for a beam failure recovery request. A network may initiate a random access procedure for a handover and/or for establishing time alignment for an SCell addition.

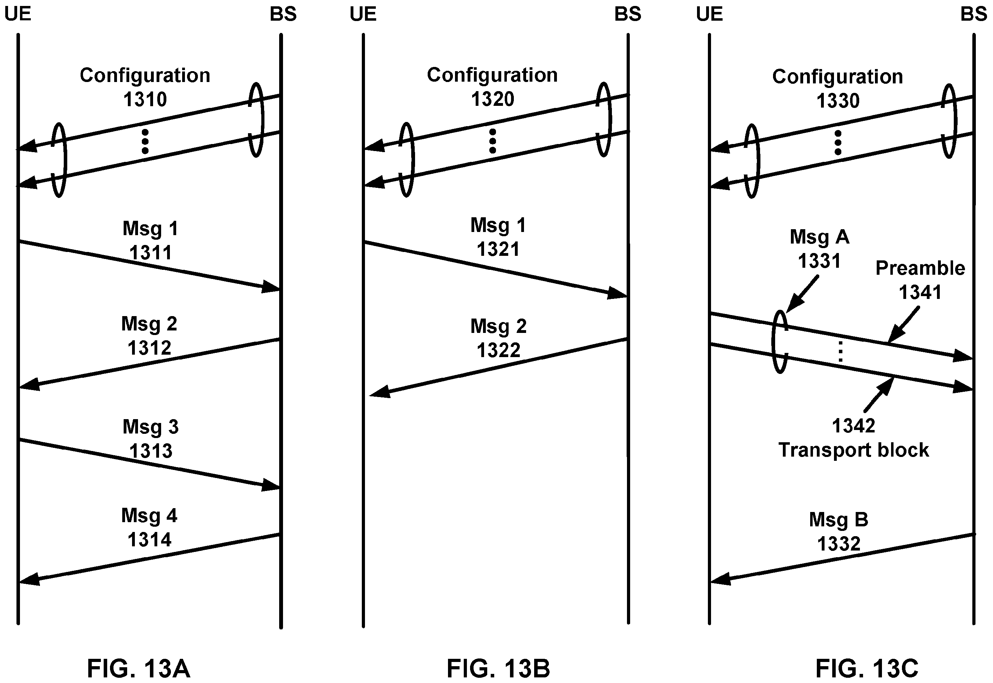

FIG. 13A illustrates a four-step contention-based random access procedure. Prior to initiation of the procedure, a base station may transmit a configuration message 1310 to the UE. The procedure illustrated in FIG. 13A comprises transmission of four messages: a Msg 1 1311, a Msg 2 1312, a Msg 3 1313, and a Msg 4 1314. The Msg 1 1311 may include and/or be referred to as a preamble (or a random access preamble). The Msg 2 1312 may include and/or be referred to as a random access response (RAR).

The configuration message 1310 may be transmitted, for example, using one or more RRC messages. The one or more RRC messages may indicate one or more random access channel (RACH) parameters to the UE. The one or more RACH parameters may comprise at least one of following: general parameters for one or more random access procedures (e.g., *RACH-configGeneral*); cell-specific parameters (e.g., *RACH-ConfigCommon*); and/or dedicated parameters (e.g., *RACH-configDedicated*)*.* The base station may broadcast or multicast the one or more RRC messages to one or more UEs. The one or more RRC messages may be UE-specific (e.g., dedicated RRC messages transmitted to a UE in an RRC_CONNECTED state and/or in an RRC_INACTIVE state). The UE may determine, based on the one or more RACH parameters, a time-frequency resource and/or an uplink transmit power for transmission of the Msg 1 1311 and/or the Msg 3 1313. Based on the one or more RACH parameters, the UE may determine a reception timing and a downlink channel for receiving the Msg 2 1312 and the Msg 4 1314.

The one or more RACH parameters provided in the configuration message 1310 may indicate one or more Physical RACH (PRACH) occasions available for transmission of the Msg 1 1311. The one or more PRACH occasions may be predefined. The one or more RACH parameters may indicate one or more available sets of one or more PRACH occasions (e.g., *prach-ConfigIndex*)*.* The one or more RACH parameters may indicate an association between (a) one or more PRACH occasions and (b) one or more reference signals. The one or more RACH parameters may indicate an association between (a) one or more preambles and (b) one or more reference signals. The one or more reference signals may be SS/PBCH blocks and/or CSI-RSs. For example, the one or more RACH parameters may indicate a number of SS/PBCH blocks mapped to a PRACH occasion and/or a number of preambles mapped to a SS/PBCH blocks.

The one or more RACH parameters provided in the configuration message 1310 may be used to determine an uplink transmit power of Msg 1 1311 and/or Msg 3 1313. For example, the one or more RACH parameters may indicate a reference power for a preamble transmission (e.g., a received target power and/or an initial power of the preamble transmission). There may be one or more power offsets indicated by the one or more RACH parameters. For example, the one or more RACH parameters may indicate: a power ramping step; a power offset between SSB and CSI-RS; a power offset between transmissions of the Msg 1 1311 and the Msg 3 1313; and/or a power offset value between preamble groups. The one or more RACH parameters may indicate one or more thresholds based on which the UE may determine at least one reference signal (e.g., an SSB and/or CSI-RS) and/or an uplink carrier (e.g., a normal uplink (NUL) carrier and/or a supplemental uplink (SUL) carrier).

The Msg 1 1311 may include one or more preamble transmissions (e.g., a preamble transmission and one or more preamble retransmissions). An RRC message may be used to configure one or more preamble groups (e.g., group A and/or group B). A preamble group may comprise one or more preambles. The UE may determine the preamble group based on a pathloss measurement and/or a size of the Msg 3 1313. The UE may measure an RSRP of one or more reference signals (e.g., SSBs and/or CSI-RSs) and determine at least one reference signal having an RSRP above an RSRP threshold (e.g., *rsrp-ThresholdSSB* and/or *rsrp-ThresholdCSI-RS*)*.* The UE may select at least one preamble associated with the one or more reference signals and/or a selected preamble group, for example, if the association between the one or more preambles and the at least one reference signal is configured by an RRC message.

The UE may determine the preamble based on the one or more RACH parameters provided in the configuration message 1310. For example, the UE may determine the preamble based on a pathloss measurement, an RSRP measurement, and/or a size of the Msg 3 1313. As another example, the one or more RACH parameters may indicate: a preamble format; a maximum number of preamble transmissions; and/or one or more thresholds for determining one or more preamble groups (e.g., group A and group B). A base station may use the one or more RACH parameters to configure the UE with an association between one or more preambles and one or more reference signals (e.g., SSBs and/or CSI-RSs). If the association is configured, the UE may determine the preamble to include in Msg 1 1311 based on the association. The Msg 1 1311 may be transmitted to the base station via one or more PRACH occasions. The UE may use one or more reference signals (e.g., SSBs and/or CSI-RSs) for selection of the preamble and for determining of the PRACH occasion. One or more RACH parameters (e.g., *ra-ssb-OccasionMskindex* and/or *ra-OccasionList*) may indicate an association between the PRACH occasions and the one or more reference signals.

The UE may perform a preamble retransmission if no response is received following a preamble transmission. The UE may increase an uplink transmit power for the preamble retransmission. The UE may select an initial preamble transmit power based on a pathloss measurement and/or a target received preamble power configured by the network. The UE may determine to retransmit a preamble and may ramp up the uplink transmit power. The UE may receive one or more RACH parameters (e.g., *PREAMBLE_POWER_RAMPING_STEP)* indicating a ramping step for the preamble retransmission. The ramping step may be an amount of incremental increase in uplink transmit power for a retransmission. The UE may ramp up the uplink transmit power if the UE determines a reference signal (e.g., SSB and/or CSI-RS) that is the same as a previous preamble transmission. The UE may count a number of preamble transmissions and/or retransmissions (e.g., *PREAMBLE_TRANSMISSION_COUNTER*). The UE may determine that a random access procedure completed unsuccessfully, for example, if the number of preamble transmissions exceeds a threshold configured by the one or more RACH parameters (e.g., *preamble TransMax).*

The Msg 2 1312 received by the UE may include an RAR. In some scenarios, the Msg 2 1312 may include multiple RARs corresponding to multiple UEs. The Msg 2 1312 may be received after or in response to the transmitting of the Msg 1 1311. The Msg 2 1312 may be scheduled on the DL-SCH and indicated on a PDCCH using a random access RNTI (RA-RNTI). The Msg 2 1312 may indicate that the Msg 1 1311 was received by the base station. The Msg 2 1312 may include a time-alignment command that may be used by the UE to adjust the UE's transmission timing, a scheduling grant for transmission of the Msg 3 1313, and/or a Temporary Cell RNTI (TC-RNTI). After transmitting a preamble, the UE may start a time window (e.g., *ra-ResponseWindow*) to monitor a PDCCH for the Msg 2 1312. The UE may determine when to start the time window based on a PRACH occasion that the UE uses to transmit the preamble. For example, the UE may start the time window one or more symbols after a last symbol of the preamble (e.g., at a first PDCCH occasion from an end of a preamble transmission). The one or more symbols may be determined based on a numerology. The PDCCH may be in a common search space (e.g., a Type1-PDCCH common search space) configured by an RRC message. The UE may identify the RAR based on a Radio Network Temporary Identifier (RNTI). RNTIs may be used depending on one or more events initiating the random access procedure. The UE may use random access RNTI (RA-RNTI). The RA-RNTI may be associated with PRACH occasions in which the UE transmits a preamble. For example, the UE may determine the RA-RNTI based on: an OFDM symbol index; a slot index; a frequency domain index; and/or a UL carrier indicator of the PRACH occasions. An example of RA-RNTI may be as follows:

RA-RNTI= 1 +s_id + 14 × t_id + 14 × 80 × f_id + 14 × 80 × 8 × ul_carrier_id, where s_id may be an index of a first OFDM symbol of the PRACH occasion (e.g., 0 ≤ s_id < 14), t_id may be an index of a first slot of the PRACH occasion in a system frame (e.g., 0 ≤ t_id < 80), f_id may be an index of the PRACH occasion in the frequency domain (e.g., 0 ≤ f_id < 8), and ul_carrier_id may be a UL carrier used for a preamble transmission (e.g., 0 for an NUL carrier, and 1 for an SUL carrier).

The UE may transmit the Msg 3 1313 in response to a successful reception of the Msg 2 1312 (e.g., using resources identified in the Msg 2 1312). The Msg 3 1313 may be used for contention resolution in, for example, the contention-based random access procedure illustrated in FIG. 13A. In some scenarios, a plurality of UEs may transmit a same preamble to a base station and the base station may provide an RAR that corresponds to a UE. Collisions may occur if the plurality of UEs interpret the RAR as corresponding to themselves. Contention resolution (e.g., using the Msg 3 1313 and the Msg 4 1314) may be used to increase the likelihood that the UE does not incorrectly use an identity of another the UE. To perform contention resolution, the UE may include a device identifier in the Msg 3 1313 (e.g., a C-RNTI if assigned, a TC-RNTI included in the Msg 2 1312, and/or any other suitable identifier).

The Msg 4 1314 may be received after or in response to the transmitting of the Msg 3 1313. If a C-RNTI was included in the Msg 3 1313, the base station will address the UE on the PDCCH using the C-RNTI. If the UE's unique C-RNTI is detected on the PDCCH, the random access procedure is determined to be successfully completed. If a TC-RNTI is included in the Msg 3 1313 (e.g., if the UE is in an RRC_IDLE state or not otherwise connected to the base station), Msg 4 1314 will be received using a DL-SCH associated with the TC-RNTI. If a MAC PDU is successfully decoded and a MAC PDU comprises the UE contention resolution identity MAC CE that matches or otherwise corresponds with the CCCH SDU sent (e.g., transmitted) in Msg 3 1313, the UE may determine that the contention resolution is successful and/or the UE may determine that the random access procedure is successfully completed.

The UE may be configured with a supplementary uplink (SUL) carrier and a normal uplink (NUL) carrier. An initial access (e.g., random access procedure) may be supported in an uplink carrier. For example, a base station may configure the UE with two separate RACH configurations: one for an SUL carrier and the other for an NUL carrier. For random access in a cell configured with an SUL carrier, the network may indicate which carrier to use (NUL or SUL). The UE may determine the SUL carrier, for example, if a measured quality of one or more reference signals is lower than a broadcast threshold. Uplink transmissions of the random access procedure (e.g., the Msg 1 1311 and/or the Msg 3 1313) may remain on the selected carrier. The UE may switch an uplink carrier during the random access procedure (e.g., between the Msg 1 1311 and the Msg 3 1313) in one or more cases. For example, the UE may determine and/or switch an uplink carrier for the Msg 1 1311 and/or the Msg 3 1313 based on a channel clear assessment (e.g., a listen-before-talk).

FIG. 13B illustrates a two-step contention-free random access procedure. Similar to the four-step contention-based random access procedure illustrated in FIG. 13A, a base station may, prior to initiation of the procedure, transmit a configuration message 1320 to the UE. The configuration message 1320 may be analogous in some respects to the configuration message 1310. The procedure illustrated in FIG. 13B comprises transmission of two messages: a Msg 1 1321 and a Msg 2 1322. The Msg 1 1321 and the Msg 2 1322 may be analogous in some respects to the Msg 1 1311 and a Msg 2 1312 illustrated in FIG. 13A, respectively. As will be understood from FIGS. 13A and 13B, the contention-free random access procedure may not include messages analogous to the Msg 3 1313 and/or the Msg 4 1314.

The contention-free random access procedure illustrated in FIG. 13B may be initiated for a beam failure recovery, other SI request, SCell addition, and/or handover. For example, a base station may indicate or assign to the UE the preamble to be used for the Msg 1 1321. The UE may receive, from the base station via PDCCH and/or RRC, an indication of a preamble (e.g., *ra-Preamblelndex).*

After transmitting a preamble, the UE may start a time window (e.g., *ra-ResponseWindow*) to monitor a PDCCH for the RAR. In the event of a beam failure recovery request, the base station may configure the UE with a separate time window and/or a separate PDCCH in a search space indicated by an RRC message (e.g., *recoverySearchSpaceld).* The UE may monitor for a PDCCH transmission addressed to a Cell RNTI (C-RNTI) on the search space. In the contention-free random access procedure illustrated in FIG. 13B, the UE may determine that a random access procedure successfully completes after or in response to transmission of Msg 1 1321 and reception of a corresponding Msg 2 1322. The UE may determine that a random access procedure successfully completes, for example, if a PDCCH transmission is addressed to a C-RNTI. The UE may determine that a random access procedure successfully completes, for example, if the UE receives an RAR comprising a preamble identifier corresponding to a preamble transmitted by the UE and/or the RAR comprises a MAC sub-PDU with the preamble identifier. The UE may determine the response as an indication of an acknowledgement for an SI request.

FIG. 13C illustrates another two-step random access procedure. Similar to the random access procedures illustrated in FIGS. 13A and 13B, a base station may, prior to initiation of the procedure, transmit a configuration message 1330 to the UE. The configuration message 1330 may be analogous in some respects to the configuration message 1310 and/or the configuration message 1320. The procedure illustrated in FIG. 13C comprises transmission of two messages: a Msg A 1331 and a Msg B 1332.

Msg A 1331 may be transmitted in an uplink transmission by the UE. Msg A 1331 may comprise one or more transmissions of a preamble 1341 and/or one or more transmissions of a transport block 1342. The transport block 1342 may comprise contents that are similar and/or equivalent to the contents of the Msg 3 1313 illustrated in FIG. 13A. The transport block 1342 may comprise UCI (e.g., an SR, a HARQ ACK/NACK, and/or the like). The UE may receive the Msg B 1332 after or in response to transmitting the Msg A 1331. The Msg B 1332 may comprise contents that are similar and/or equivalent to the contents of the Msg 2 1312 (e.g., an RAR) illustrated in FIGS. 13A and 13B and/or the Msg 4 1314 illustrated in FIG. 13A.

The UE may initiate the two-step random access procedure in FIG. 13C for licensed spectrum and/or unlicensed spectrum. The UE may determine, based on one or more factors, whether to initiate the two-step random access procedure. The one or more factors may be: a radio access technology in use (e.g., LTE, NR, and/or the like); whether the UE has valid TA or not; a cell size; the UE's RRC state; a type of spectrum (e.g., licensed vs. unlicensed); and/or any other suitable factors.

The UE may determine, based on two-step RACH parameters included in the configuration message 1330, a radio resource and/or an uplink transmit power for the preamble 1341 and/or the transport block 1342 included in the Msg A 1331. The RACH parameters may indicate a modulation and coding schemes (MCS), a time-frequency resource, and/or a power control for the preamble 1341 and/or the transport block 1342. A time-frequency resource for transmission of the preamble 1341 (e.g., a PRACH) and a time-frequency resource for transmission of the transport block 1342 (e.g., a PUSCH) may be multiplexed using FDM, TDM, and/or CDM. The RACH parameters may enable the UE to determine a reception timing and a downlink channel for monitoring for and/or receiving Msg B 1332.

The transport block 1342 may comprise data (e.g., delay-sensitive data), an identifier of the UE, security information, and/or device information (e.g., an International Mobile Subscriber Identity (IMSI)). The base station may transmit the Msg B 1332 as a response to the Msg A 1331. The Msg B 1332 may comprise at least one of following: a preamble identifier; a timing advance command; a power control command; an uplink grant (e.g., a radio resource assignment and/or an MCS); a UE identifier for contention resolution; and/or an RNTI (e.g., a C-RNTI or a TC-RNTI). The UE may determine that the two-step random access procedure is successfully completed if: a preamble identifier in the Msg B 1332 is matched to a preamble transmitted by the UE; and/or the identifier of the UE in Msg B 1332 is matched to the identifier of the UE in the Msg A 1331 (e.g., the transport block 1342).

A UE and a base station may exchange control signaling. The control signaling may be referred to as L1/L2 control signaling and may originate from the PHY layer (e.g., layer 1) and/or the MAC layer (e.g., layer 2). The control signaling may comprise downlink control signaling transmitted from the base station to the UE and/or uplink control signaling transmitted from the UE to the base station.

The downlink control signaling may comprise: a downlink scheduling assignment; an uplink scheduling grant indicating uplink radio resources and/or a transport format; a slot format information; a preemption indication; a power control command; and/or any other suitable signaling. The UE may receive the downlink control signaling in a payload transmitted by the base station on a physical downlink control channel (PDCCH). The payload transmitted on the PDCCH may be referred to as downlink control information (DCI). In some scenarios, the PDCCH may be a group common PDCCH (GC-PDCCH) that is common to a group of UEs.

A base station may attach one or more cyclic redundancy check (CRC) parity bits to a DCI in order to facilitate detection of transmission errors. When the DCI is intended for a UE (or a group of the UEs), the base station may scramble the CRC parity bits with an identifier of the UE (or an identifier of the group of the UEs). Scrambling the CRC parity bits with the identifier may comprise Modulo-2 addition (or an exclusive OR operation) of the identifier value and the CRC parity bits. The identifier may comprise a 16-bit value of a radio network temporary identifier (RNTI).

DCls may be used for different purposes. A purpose may be indicated by the type of RNTI used to scramble the CRC parity bits. For example, a DCI having CRC parity bits scrambled with a paging RNTI (P-RNTI) may indicate paging information and/or a system information change notification. The P-RNTI may be predefined as "FFFE" in hexadecimal. A DCI having CRC parity bits scrambled with a system information RNTI (SI-RNTI) may indicate a broadcast transmission of the system information. The SI-RNTI may be predefined as "FFFF" in hexadecimal. A DCI having CRC parity bits scrambled with a random access RNTI (RA-RNTI) may indicate a random access response (RAR). A DCI having CRC parity bits scrambled with a cell RNTI (C-RNTI) may indicate a dynamically scheduled unicast transmission and/or a triggering of PDCCH-ordered random access. A DCI having CRC parity bits scrambled with a temporary cell RNTI (TC-RNTI) may indicate a contention resolution (e.g., a Msg 3 analogous to the Msg 3 1313 illustrated in FIG. 13A). Other RNTIs configured to the UE by a base station may comprise a Configured Scheduling RNTI (CS-RNTI), a Transmit Power Control-PUCCH RNTI (TPC-PUCCH-RNTI), a Transmit Power Control-PUSCH RNTI (TPC-PUSCH-RNTI), a Transmit Power Control-SRS RNTI (TPC-SRS-RNTI), an Interruption RNTI (INT-RNTI), a Slot Format Indication RNTI (SFI-RNTI), a Semi-Persistent CSI RNTI (SP-CSI-RNTI), a Modulation and Coding Scheme Cell RNTI (MCS-C-RNTI), and/or the like.

Depending on the purpose and/or content of a DCI, the base station may transmit the DCls with one or more DCI formats. For example, DCI format 0_0 may be used for scheduling of PUSCH in a cell. DCI format 0_0 may be a fallback DCI format (e.g., with compact DCI payloads). DCI format 0_1 may be used for scheduling of PUSCH in a cell (e.g., with more DCI payloads than DCI format 0_0). DCI format 1_0 may be used for scheduling of PDSCH in a cell. DCI format 1_0 may be a fallback DCI format (e.g., with compact DCI payloads). DCI format 1_1 may be used for scheduling of PDSCH in a cell (e.g., with more DCI payloads than DCI format 1_0). DCI format 2_0 may be used for providing a slot format indication to a group of UEs. DCI format 2_1 may be used for notifying a group of UEs of a physical resource block and/or OFDM symbol where the UE may assume no transmission is intended to the UE. DCI format 2_2 may be used for transmission of a transmit power control (TPC) command for PUCCH or PUSCH. DCI format 2_3 may be used for transmission of a group of TPC commands for SRS transmissions by one or more UEs. DCI format(s) for new functions may be defined in future releases. DCI formats may have different DCI sizes, or may share the same DCI size.

After scrambling a DCI with a RNTI, the base station may process the DCI with channel coding (e.g., polar coding), rate matching, scrambling and/or QPSK modulation. A base station may map the coded and modulated DCI on resource elements used and/or configured for a PDCCH. Based on a payload size of the DCI and/or a coverage of the base station, the base station may transmit the DCI via a PDCCH occupying a number of contiguous control channel elements (CCEs). The number of the contiguous CCEs (referred to as aggregation level) may be 1, 2, 4, 8, 16, and/or any other suitable number. A CCE may comprise a number (e.g., 6) of resource-element groups (REGs). A REG may comprise a resource block in an OFDM symbol. The mapping of the coded and modulated DCI on the resource elements may be based on mapping of CCEs and REGs (e.g., CCE-to-REG mapping).

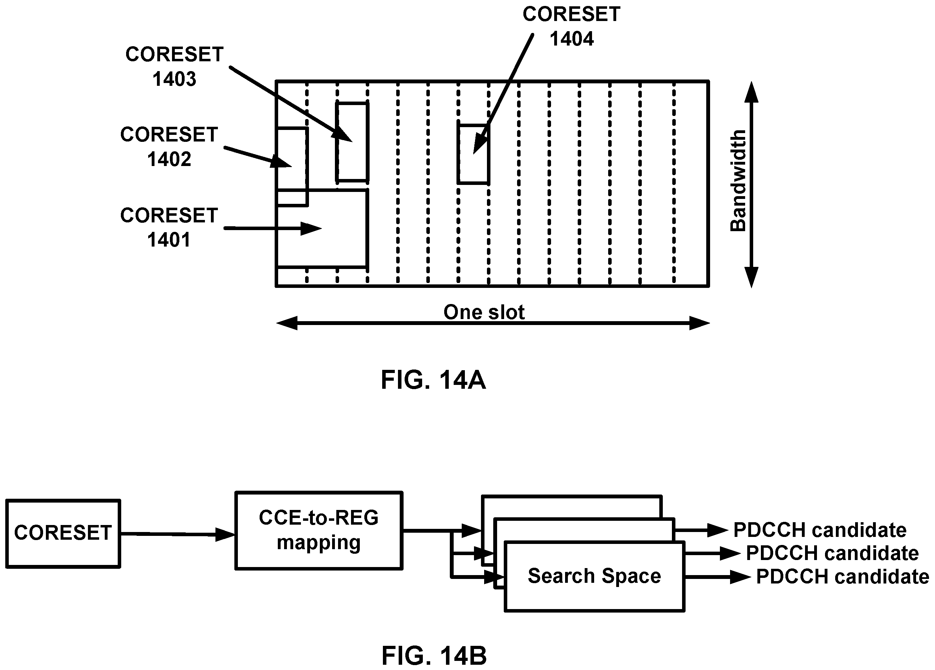

FIG. 14A illustrates an example of CORESET configurations for a bandwidth part. The base station may transmit a DCI via a PDCCH on one or more control resource sets (CORESETs). A CORESET may comprise a time-frequency resource in which the UE tries to decode a DCI using one or more search spaces. The base station may configure a CORESET in the time-frequency domain. In the example of FIG. 14A, a first CORESET 1401 and a second CORESET 1402 occur at the first symbol in a slot. The first CORESET 1401 overlaps with the second CORESET 1402 in the frequency domain. A third CORESET 1403 occurs at a third symbol in the slot. A fourth CORESET 1404 occurs at the seventh symbol in the slot. CORESETs may have a different number of resource blocks in frequency domain.

FIG. 14B illustrates an example of a CCE-to-REG mapping for DCI transmission on a CORESET and PDCCH processing. The CCE-to-REG mapping may be an interleaved mapping (e.g., for the purpose of providing frequency diversity) or a non-interleaved mapping (e.g., for the purposes of facilitating interference coordination and/or frequency-selective transmission of control channels). The base station may perform different or same CCE-to-REG mapping on different CORESETs. A CORESET may be associated with a CCE-to-REG mapping by RRC configuration. A CORESET may be configured with an antenna port quasi co-location (QCL) parameter. The antenna port QCL parameter may indicate QCL information of a demodulation reference signal (DMRS) for PDCCH reception in the CORESET.

The base station may transmit, to the UE, RRC messages comprising configuration parameters of one or more CORESETs and one or more search space sets. The configuration parameters may indicate an association between a search space set and a CORESET. A search space set may comprise a set of PDCCH candidates formed by CCEs at a given aggregation level. The configuration parameters may indicate: a number of PDCCH candidates to be monitored per aggregation level; a PDCCH monitoring periodicity and a PDCCH monitoring pattern; one or more DCI formats to be monitored by the UE; and/or whether a search space set is a common search space set or a UE-specific search space set. A set of CCEs in the common search space set may be predefined and known to the UE. A set of CCEs in the UE-specific search space set may be configured based on the UE's identity (e.g., C-RNTI).

As shown in FIG. 14B, the UE may determine a time-frequency resource for a CORESET based on RRC messages. The UE may determine a CCE-to-REG mapping (e.g., interleaved or non-interleaved, and/or mapping parameters) for the CORESET based on configuration parameters of the CORESET. The UE may determine a number (e.g., at most 10) of search space sets configured on the CORESET based on the RRC messages. The UE may monitor a set of PDCCH candidates according to configuration parameters of a search space set. The UE may monitor a set of PDCCH candidates in one or more CORESETs for detecting one or more DCls. Monitoring may comprise decoding one or more PDCCH candidates of the set of the PDCCH candidates according to the monitored DCI formats. Monitoring may comprise decoding a DCI content of one or more PDCCH candidates with possible (or configured) PDCCH locations, possible (or configured) PDCCH formats (e.g., number of CCEs, number of PDCCH candidates in common search spaces, and/or number of PDCCH candidates in the UE-specific search spaces) and possible (or configured) DCI formats. The decoding may be referred to as blind decoding. The UE may determine a DCI as valid for the UE, in response to CRC checking (e.g., scrambled bits for CRC parity bits of the DCI matching a RNTI value). The UE may process information contained in the DCI (e.g., a scheduling assignment, an uplink grant, power control, a slot format indication, a downlink preemption, and/or the like).

The UE may transmit uplink control signaling (e.g., uplink control information (UCI)) to a base station. The uplink control signaling may comprise hybrid automatic repeat request (HARQ) acknowledgements for received DL-SCH transport blocks. The UE may transmit the HARQ acknowledgements after receiving a DL-SCH transport block. Uplink control signaling may comprise channel state information (CSI) indicating channel quality of a physical downlink channel. The UE may transmit the CSI to the base station. The base station, based on the received CSI, may determine transmission format parameters (e.g., comprising multi-antenna and beamforming schemes) for a downlink transmission. Uplink control signaling may comprise scheduling requests (SR). The UE may transmit an SR indicating that uplink data is available for transmission to the base station. The UE may transmit a UCI (e.g., HARQ acknowledgements (HARQ-ACK), CSI report, SR, and the like) via a physical uplink control channel (PUCCH) or a physical uplink shared channel (PUSCH). The UE may transmit the uplink control signaling via a PUCCH using one of several PUCCH formats.

There may be five PUCCH formats and the UE may determine a PUCCH format based on a size of the UCI (e.g., a number of uplink symbols of UCI transmission and a number of UCI bits). PUCCH format 0 may have a length of one or two OFDM symbols and may include two or fewer bits. The UE may transmit UCI in a PUCCH resource using PUCCH format 0 if the transmission is over one or two symbols and the number of HARQ-ACK information bits with positive or negative SR (HARQ-ACK/SR bits) is one or two. PUCCH format 1 may occupy a number between four and fourteen OFDM symbols and may include two or fewer bits. The UE may use PUCCH format 1 if the transmission is four or more symbols and the number of HARQ-ACK/SR bits is one or two. PUCCH format 2 may occupy one or two OFDM symbols and may include more than two bits. The UE may use PUCCH format 2 if the transmission is over one or two symbols and the number of UCI bits is two or more. PUCCH format 3 may occupy a number between four and fourteen OFDM symbols and may include more than two bits. The UE may use PUCCH format 3 if the transmission is four or more symbols, the number of UCI bits is two or more and PUCCH resource does not include an orthogonal cover code. PUCCH format 4 may occupy a number between four and fourteen OFDM symbols and may include more than two bits. The UE may use PUCCH format 4 if the transmission is four or more symbols, the number of UCI bits is two or more and the PUCCH resource includes an orthogonal cover code.

The base station may transmit configuration parameters to the UE for a plurality of PUCCH resource sets using, for example, an RRC message. The plurality of PUCCH resource sets (e.g., up to four sets) may be configured on an uplink BWP of a cell. A PUCCH resource set may be configured with a PUCCH resource set index, a plurality of PUCCH resources with a PUCCH resource being identified by a PUCCH resource identifier (e.g., *pucch-Resourceid),* and/or a number (e.g. a maximum number) of UCI information bits the UE may transmit using one of the plurality of PUCCH resources in the PUCCH resource set. When configured with a plurality of PUCCH resource sets, the UE may select one of the plurality of PUCCH resource sets based on a total bit length of the UCI information bits (e.g., HARQ-ACK, SR, and/or CSI). If the total bit length of UCI information bits is two or fewer, the UE may select a first PUCCH resource set having a PUCCH resource set index equal to "0". If the total bit length of UCI information bits is greater than two and less than or equal to a first configured value, the UE may select a second PUCCH resource set having a PUCCH resource set index equal to "1". If the total bit length of UCI information bits is greater than the first configured value and less than or equal to a second configured value, the UE may select a third PUCCH resource set having a PUCCH resource set index equal to "2". If the total bit length of UCI information bits is greater than the second configured value and less than or equal to a third value (e.g., 1406), the UE may select a fourth PUCCH resource set having a PUCCH resource set index equal to "3".

After determining a PUCCH resource set from a plurality of PUCCH resource sets, the UE may determine a PUCCH resource from the PUCCH resource set for UCI (HARQ-ACK, CSI, and/or SR) transmission. The UE may determine the PUCCH resource based on a PUCCH resource indicator in a DCI (e.g., with a DCI format 1_0 or DCI for 1_1) received on a PDCCH. A three-bit PUCCH resource indicator in the DCI may indicate one of eight PUCCH resources in the PUCCH resource set. Based on the PUCCH resource indicator, the UE may transmit the UCI (HARQ-ACK, CSI and/or SR) using a PUCCH resource indicated by the PUCCH resource indicator in the DCI.

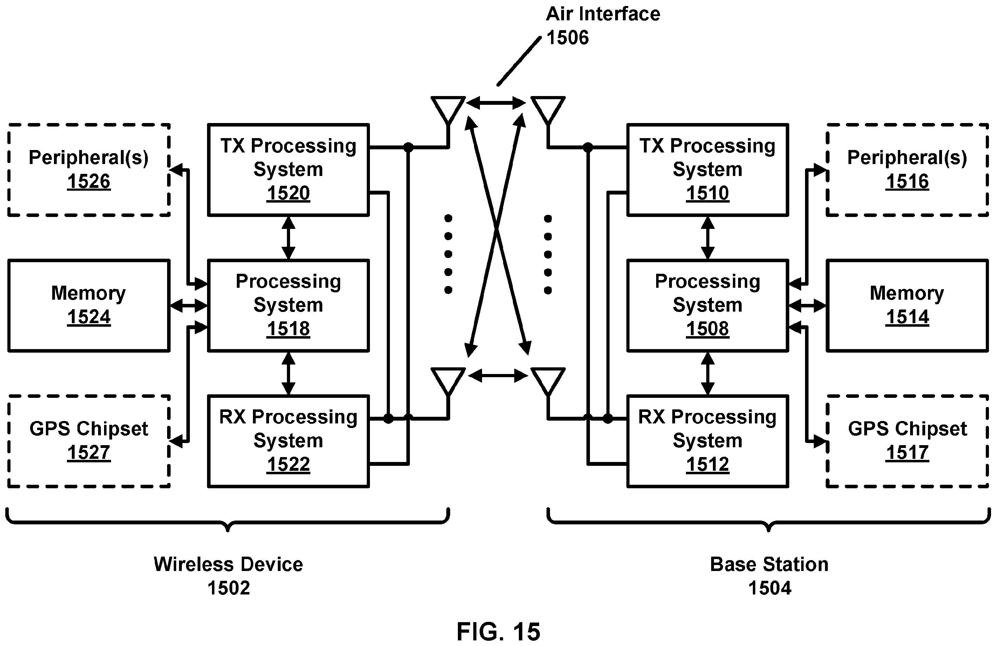

FIG. 15 illustrates an example of a wireless device 1502 in communication with a base station 1504 in accordance with embodiments of the present disclosure. The wireless device 1502 and base station 1504 may be part of a mobile communication network, such as the mobile communication network 100 illustrated in FIG. 1A, the mobile communication network 150 illustrated in FIG. 1B, or any other communication network. Only one wireless device 1502 and one base station 1504 are illustrated in FIG. 15, but it will be understood that a mobile communication network may include more than one UE and/or more than one base station, with the same or similar configuration as those shown in FIG. 15.

The base station 1504 may connect the wireless device 1502 to a core network (not shown) through radio communications over the air interface (or radio interface) 1506. The communication direction from the base station 1504 to the wireless device 1502 over the air interface 1506 is known as the downlink, and the communication direction from the wireless device 1502 to the base station 1504 over the air interface is known as the uplink. Downlink transmissions may be separated from uplink transmissions using FDD, TDD, and/or some combination of the two duplexing techniques.

In the downlink, data to be sent to the wireless device 1502 from the base station 1504 may be provided to the processing system 1508 of the base station 1504. The data may be provided to the processing system 1508 by, for example, a core network. In the uplink, data to be sent to the base station 1504 from the wireless device 1502 may be provided to the processing system 1518 of the wireless device 1502. The processing system 1508 and the processing system 1518 may implement layer 3 and layer 2 OSI functionality to process the data for transmission. Layer 2 may include an SDAP layer, a PDCP layer, an RLC layer, and a MAC layer, for example, with respect to FIG. 2A, FIG. 2B, FIG. 3, and FIG. 4A. Layer 3 may include an RRC layer as with respect to FIG. 2B.

After being processed by processing system 1508, the data to be sent to the wireless device 1502 may be provided to a transmission processing system 1510 of base station 1504. Similarly, after being processed by the processing system 1518, the data to be sent to base station 1504 may be provided to a transmission processing system 1520 of the wireless device 1502. The transmission processing system 1510 and the transmission processing system 1520 may implement layer 1 OSI functionality. Layer 1 may include a PHY layer with respect to FIG. 2A, FIG. 2B, FIG. 3, and FIG. 4A. For transmit processing, the PHY layer may perform, for example, forward error correction coding of transport channels, interleaving, rate matching, mapping of transport channels to physical channels, modulation of physical channel, multiple-input multiple-output (MIMO) or multi-antenna processing, and/or the like.

At the base station 1504, a reception processing system 1512 may receive the uplink transmission from the wireless device 1502. At the wireless device 1502, a reception processing system 1522 may receive the downlink transmission from base station 1504. The reception processing system 1512 and the reception processing system 1522 may implement layer 1 OSI functionality. Layer 1 may include a PHY layer with respect to FIG. 2A, FIG. 2B, FIG. 3, and FIG. 4A. For receive processing, the PHY layer may perform, for example, error detection, forward error correction decoding, deinterleaving, demapping of transport channels to physical channels, demodulation of physical channels, MIMO or multi-antenna processing, and/or the like.

As shown in FIG. 15, a wireless device 1502 and the base station 1504 may include multiple antennas. The multiple antennas may be used to perform one or more MIMO or multi-antenna techniques, such as spatial multiplexing (e.g., single-user MIMO or multi-user MIMO), transmit/receive diversity, and/or beamforming. In other examples, the wireless device 1502 and/or the base station 1504 may have a single antenna.

The processing system 1508 and the processing system 1518 maybe associated with a memory 1514 and a memory 1524, respectively. Memory 1514 and memory 1524 (e.g., one or more non-transitory computer readable mediums) may store computer program instructions or code that may be executed by the processing system 1508 and/or the processing system 1518 to carry out one or more of the functionalities discussed in the present application. Although not shown in FIG. 15, the transmission processing system 1510, the transmission processing system 1520, the reception processing system 1512, and/or the reception processing system 1522 may be coupled to a memory (e.g., one or more non-transitory computer readable mediums) storing computer program instructions or code that may be executed to carry out one or more of their respective functionalities.

The processing system 1508 and/or the processing system 1518 may comprise one or more controllers and/or one or more processors. The one or more controllers and/or one or more processors may comprise, for example, a general-purpose processor, a digital signal processor (DSP), a microcontroller, an application specific integrated circuit (ASIC), a field programmable gate array (FPGA) and/or other programmable logic device, discrete gate and/or transistor logic, discrete hardware components, an onboard unit, or any combination thereof. The processing system 1508 and/or the processing system 1518 may perform at least one of signal coding/processing, data processing, power control, input/output processing, and/or any other functionality that may enable the wireless device 1502 and the base station 1504 to operate in a wireless environment.

The processing system 1508 and/or the processing system 1518 may be connected to one or more peripherals 1516 and one or more peripherals 1526, respectively. The one or more peripherals 1516 and the one or more peripherals 1526 may include software and/or hardware that provide features and/or functionalities, for example, a speaker, a microphone, a keypad, a display, a touchpad, a power source, a satellite transceiver, a universal serial bus (USB) port, a hands-free headset, a frequency modulated (FM) radio unit, a media player, an Internet browser, an electronic control unit (e.g., for a motor vehicle), and/or one or more sensors (e.g., an accelerometer, a gyroscope, a temperature sensor, a radar sensor, a lidar sensor, an ultrasonic sensor, a light sensor, a camera, and/or the like). The processing system 1508 and/or the processing system 1518 may receive user input data from and/or provide user output data to the one or more peripherals 1516 and/or the one or more peripherals 1526. The processing system 1518 in the wireless device 1502 may receive power from a power source and/or may be configured to distribute the power to the other components in the wireless device 1502. The power source may comprise one or more sources of power, for example, a battery, a solar cell, a fuel cell, or any combination thereof. The processing system 1508 and/or the processing system 1518 may be connected to a GPS chipset 1517 and a GPS chipset 1527, respectively. The GPS chipset 1517 and the GPS chipset 1527 may be configured to provide geographic location information of the wireless device 1502 and the base station 1504, respectively.

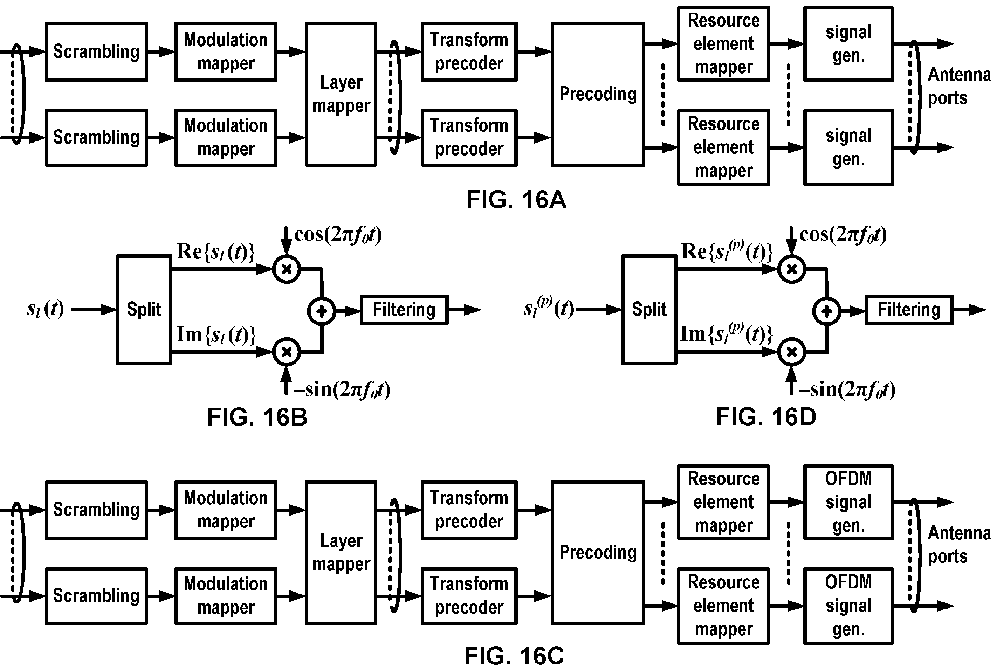

FIG. 16A illustrates an example structure for uplink transmission. A baseband signal representing a physical uplink shared channel may perform one or more functions. The one or more functions may comprise at least one of: scrambling; modulation of scrambled bits to generate complex-valued symbols; mapping of the complex-valued modulation symbols onto one or several transmission layers; transform precoding to generate complex-valued symbols; precoding of the complex-valued symbols; mapping of precoded complex-valued symbols to resource elements; generation of complex-valued time-domain Single Carrier-Frequency Division Multiple Access (SC-FDMA) or CP-OFDM signal for an antenna port; and/or the like. In an example, when transform precoding is enabled, a SC-FDMA signal for uplink transmission may be generated. In an example, when transform precoding is not enabled, a CP-OFDM signal for uplink transmission may be generated by FIG. 16A. These functions are illustrated as examples and it is anticipated that other mechanisms may be implemented in various embodiments.

FIG. 16B illustrates an example structure for modulation and up-conversion of a baseband signal to a carrier frequency. The baseband signal may be a complex-valued SC-FDMA or CP-OFDM baseband signal for an antenna port and/or a complex-valued Physical Random Access Channel (PRACH) baseband signal. Filtering may be employed prior to transmission.

FIG. 16C illustrates an example structure for downlink transmissions. A baseband signal representing a physical downlink channel may perform one or more functions. The one or more functions may comprise: scrambling of coded bits in a codeword to be transmitted on a physical channel; modulation of scrambled bits to generate complex-valued modulation symbols; mapping of the complex-valued modulation symbols onto one or several transmission layers; precoding of the complex-valued modulation symbols on a layer for transmission on the antenna ports; mapping of complex-valued modulation symbols for an antenna port to resource elements; generation of complex-valued time-domain OFDM signal for an antenna port; and/or the like. These functions are illustrated as examples and it is anticipated that other mechanisms may be implemented in various embodiments.

FIG. 16D illustrates another example structure for modulation and up-conversion of a baseband signal to a carrier frequency. The baseband signal may be a complex-valued OFDM baseband signal for an antenna port. Filtering may be employed prior to transmission.

A wireless device may receive from a base station one or more messages (e.g. RRC messages) comprising configuration parameters of a plurality of cells (e.g. primary cell, secondary cell). The wireless device may communicate with at least one base station (e.g. two or more base stations in dual connectivity) via the plurality of cells. The one or more messages (e.g. as a part of the configuration parameters) may comprise parameters of physical, MAC, RLC, PCDP, SDAP, RRC layers for configuring the wireless device. For example, the configuration parameters may comprise parameters for configuring physical and MAC layer channels, bearers, etc. For example, the configuration parameters may comprise parameters indicating values of timers for physical, MAC, RLC, PCDP, SDAP, RRC layers, and/or communication channels.

A timer may begin running once it is started and continue running until it is stopped or until it expires. A timer may be started if it is not running or restarted if it is running. A timer may be associated with a value (e.g. the timer may be started or restarted from a value or may be started from zero and expire once it reaches the value). The duration of a timer may not be updated until the timer is stopped or expires (e.g., due to BWP switching). A timer may be used to measure a time period/window for a process. When the specification refers to an implementation and procedure related to one or more timers, it will be understood that there are multiple ways to implement the one or more timers. For example, it will be understood that one or more of the multiple ways to implement a timer may be used to measure a time period/window for the procedure. For example, a random access response window timer may be used for measuring a window of time for receiving a random access response. In an example, instead of starting and expiry (or expiration) of a random access response window timer, the time difference between two time stamps may be used. When a timer is restarted, a process for measurement of time window may be restarted. Other example implementations may be provided to restart a measurement of a time window.

In the present disclosure, any two or more than two of the following sentences, paragraphs, (sub)-bullets, points, actions, behaviors, terms, alternatives, aspects, examples, or claims described in the following invention(s) may be combined logically, reasonably, and properly to form a specific method.

In the present disclosure, any sentence, paragraph, (sub)-bullet, point, action, behaviors, terms, alternatives, aspects, examples, or claims described in the following invention(s) may be implemented independently and separately to form a specific method.

In the present disclosure, dependency, such as "based on", "more specifically", "preferably", "in one embodiment", "in one alternative", "in one example", "in one aspect", "in one implementation", etc., in the present disclosure is just one possible example which would not restrict the specific method.

In the present disclosure, it should be understood that any discussion of operations from the perspective of wireless device may also be applied to a base station. Reciprocal operations may not be stated explicitly for each and every operation, although it is implied and a part of the present disclosure. For example, when the present disclosure describes one or more embodiments in which a transmitter device (e.g., a wireless device or a base station) transmits a signal, a receiver device (e.g., a wireless device or a base station) receives the signal. Reciprocal determinations and/or timer operations may occur to ensure alignment between operations of the transmitter device and receiver device. Furthermore, as an example of reciprocal operations, a wireless device may determine a time to transmit a signal based on a grant and a base station may determine the time to receive the signal and/or determine the time to schedule the signal for the wireless device to transmit via the grant. Similarly, as another reciprocal operation, if a receiver device (e.g., a wireless device or a base station) monitors for a signal or monitors a channel, a transmitter device (e.g., a wireless device or a base station) transmits the signal or transmits the channel.

User Equipment (UE) may report its UE radio access capabilities which are static at least when the Base Station (BS) requests. The BS may request what capabilities for the UE to report based on band information. The UE capability may be represented by a capability ID, which may be exchanged in Non-Access Stratum (NAS) signaling over the air and in network signaling instead of the UE capability structure.

UE may receive a UECapabilityEnquiry message from the BS. In response to the UECapabilityEnquiry message, UE may set the contents of UECapabilitylnformation message based on some conditions and/or UE may transmit the UECapabilitylnformation message to the BS.

BS may initiate a procedure to a UE in RRC_CONNECTED when it needs (additional) UE capability information. BS may retrieve UE capabilities after AS security activation. Network may not forward UE capabilities that were retrieved before Access Stratum (AS) security activation to the Core Network (CN).

UE may transmit, to BS, an UE assistance information via an IE UEAssistancelnformation. UE may transmit, to BS, an UE assistance information via an IE UEAssistancelnformation based on a configuration received from the BS. The configuration may be included in a Radio Resource Control (RRC) message (e.g., RRC Reconfiguration message).

Configured grants may be configured without the need for the UE to monitor possible UL retransmissions, thus increasing the number of power saving opportunities for the UE.

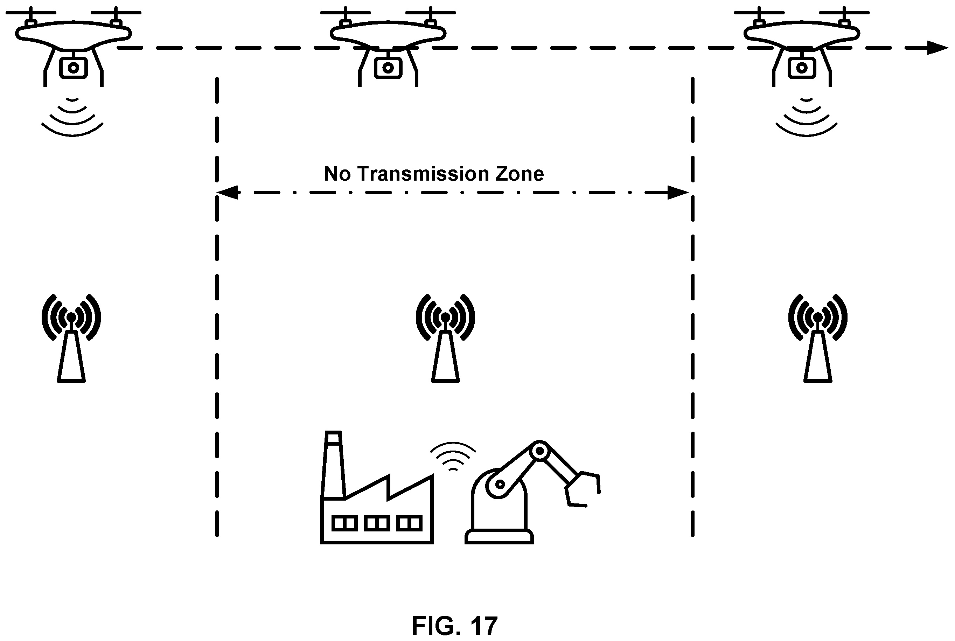

FIG. 17 illustrates an example as per an aspect of an embodiment of the present disclosure.

As illustrated in FIG. 17, an unmanned aerial vehicle (UAV, drone, uncrewed aerial vehicle, aerial vehicle, etc) may move (fly over) different areas. The UAV may comprise a UE (e.g., a wireless device), the UAV may be an aerial UE type (e.g., a UE type in which a UE is attached to (integrated into, provide service to) the UAV, a UE type in which a UE operates in the UAV, above certain altitude, and/or the like). The UAV may be controlled remotely by a remote operator (or a remote application), the UAV may be controlled by a human onboard the UAV, the UAV may have an autonomous driving (flying) capability and/or the like. The UAV may be used for remote surveillance, for transportation, for logistics, and/or the like. The UAV may need to communicate with a remote server, for controlling, maneuvering, reporting, streaming, etc. For example, the UAV may transmit one or more uplink packets to the remote server, and/or may receive one or more downlink packets from the remote server. The UAV may use 4G connectivity (e.g., LTE, via E-UTRAN), 5G connectivity (e.g., NR via NG-RAN), 6G connectivity (e.g., 6G radio, 6G-RAN), and/or the like, to communicate with the remote server. The remote server may be associated with an application running on the remove server and/or may be interacting with one or more operators connected to the remote server. For the transmission of the one or more uplink packets, the UAV may use one or more uplink resources. The one or more uplink resources may be associated with one or more uplink frequencies and/or one or more time periods. For the reception of the one or more downlink packets, the UAV may use one or more downlink resources. The one or more downlink resources may be associated with one or downlink frequencies and/or one or more time periods. In an example, a downlink frequency may be the uplink frequency. In another example, the downlink frequency may not be the uplink frequency.

In an example, one or more areas (e.g., locations, defined by geographical coordinates, and/or the like) may be designated as no transmission zone (NTZ). The NTZ may be associated with one or more wireless devices (e.g., one or more transmitters, one or more communication devices, and/or the like), with one or more UAVs, with one or more UAVs communicating with one or more remote servers, and/or the like. The NTZ may be applicable to some wireless devices (e.g., wireless device attached to (integrated with) UAVs) while the NTZ may not be applicable to other wireless devices (e.g., wireless device on the ground). The NTZ may be applicable during some time periods (e.g., 10:00-11:00, Tuesday), while the NTZ may not be applicable during other time periods (e.g., 12:00-13:00, Sunday). The NTZ may be applicable to some locations (e.g., an area near an airport, an area above 1KM above ground level), while the NTZ may not be applicable to other locations (e.g., within a shopping mall). One or more conditions (e.g., time periods, device types, locations, altitudes) where the NTZ is applicable may be defined to ensure critical devices not to be impacted by a certain wireless device above ground.

For example, a first UAV may fly from a first zone (e.g., area, location, cell, tracking area) to a third zone via a second zone. In the second zone, one or more machines may operate, and/or one or more factories may be located. In the first zone and/or in the third zone, there may be no critical equipment (e.g., no machine, no factory, or machine using a different frequency). The first UAV may use a first frequency (here, for simplicity reason, a single frequency is mentioned. It may be understood that the first frequency may comprise multiple frequencies) for communication toward the remote server. The one or more machines and/or the one or more factories may use the first frequency, for communication among the one or more machines or within the one or more factories. When the first UAV flies over the second zone, if the first UAV transmits and/or receives one or more packets, the transmission performed by the first UAV may generate interference to the one or more machines, because the first UAV uses the same frequency as the one or more machines. Because the first UAV flies over the factories over the second zone, the transmission by the UAV may cause line-of-sight (LOS) interference. On the other hand, one or more UEs on the ground (e.g., used by ground vehicle, pedestrian) may not cause impact on communication of the machine, because the factory may be distant from nearby roads, or there may be no LOS interference because there are many objects between the one or more UEs on the ground and the machine.

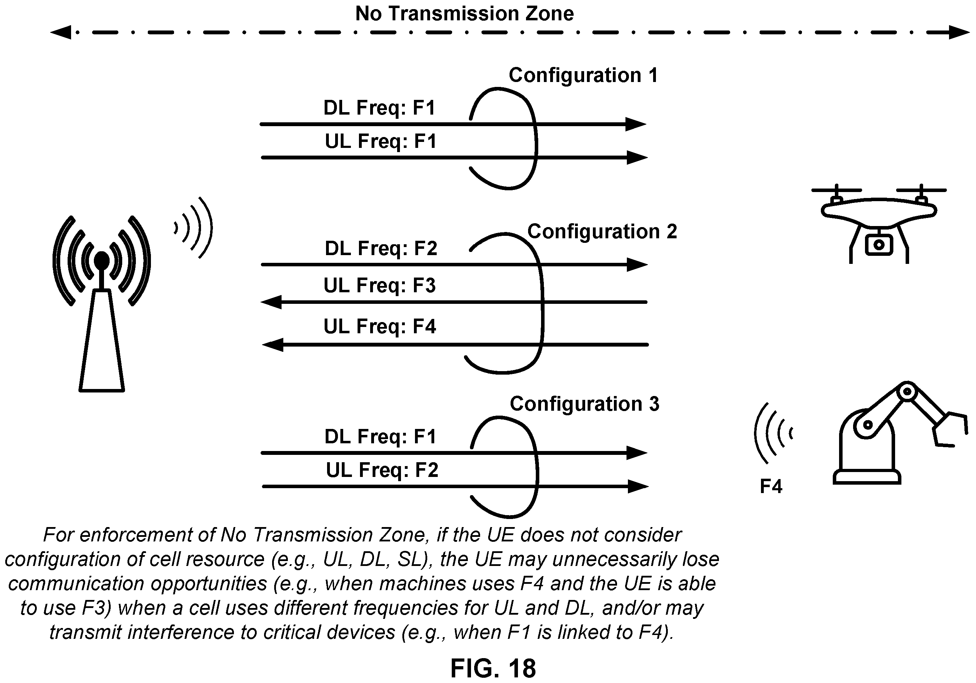

To prevent unwanted transmission caused by the first UAV from impacting the critical equipment (e.g., wireless device), the NTZ may be defined. When the first UAV is outside of (or out of, outside, exiting) the NTZ, the first UAV may not be restricted from using one or more frequencies defined (associated, allocated, effective, restricted, etc.) for the NTZ. When the first UAV is inside of (or in, entering) the NTZ, the first UAV may not be allowed to make transmission using the one or more frequencies defined for the NTZ. This may help to protect communication of the critical equipment. However, the NTZ may cause reduced communication opportunity for the UAV, as shown in FIG. 18.

FIG. 18 illustrates an example as per an aspect of an embodiment of the present disclosure.

In an example, a cell of a base station may operate within (or near) an area of (defined by, associated with) an NTZ. An area covered by the cell may partially overlap with the NTZ. For example, the cell may comprise one or more sections, and some of the one or more sections are (overlap with) the NTZ and/or some of the one or more sections are not (do not overlap with) the NTZ. An area covered by the cell may entirely belong to the NTZ. For example, all areas covered by the cell may belong to the NTZ. An area covered by the cell may entirely comprise the NTZ. For example, a section of the cell may comprise the NTZ, while other sections of the cell may not comprise the NTZ. The cell may be configured with one or more frequencies (e.g., frequency ranges, frequency bands, a group of frequencies, frequency blocks, and/or the like). The cell may be a TDD cell and/or a FDD cell.

In an example, the cell may operate according to (based on) a configuration of one or more configurations. Each of the one or more configurations may comprise (indicate) one or more frequencies (or one or more frequency ranges) for use by (in) the cell. The one or more frequencies (or the one or more frequency ranges) may comprise one or more downlink frequencies and/or one or more uplink frequencies. The one or more downlink frequencies may comprise a first downlink frequency (e.g., F1), a second downlink frequency (e.g., F2). The one or more uplink frequencies may comprise a first uplink frequency (e.g., F1), a third uplink frequency (e.g., F3), a fourth uplink frequency (e.g., F4). Each of the one or more configurations may comprise at least one of, one of the one or more uplink frequencies and/or one of the one or more downlink frequencies. One or more first configurations of the one or more configurations may comprise one or more first downlink frequencies and/or one or more first uplink frequencies. The one or more first downlink frequencies may be the one or more first uplink frequencies. For example, the one or more first configuration may be for TDD operation. One or more second configurations of the one or more configurations may comprise one or more second downlink frequencies and/or one or more second uplink frequencies. The one or more second downlink frequencies may be different from the one or more second uplink frequencies. For example, the one or more second configurations may be for FDD operations. For example, a first configuration of the one or more first configurations may use a first range (e.g., 100 MHz - 110 MHz) as the first downlink frequency and/or use the first range (or a portion of the first range) as the first uplink frequency. For example, a second configuration of the one or more second configurations may use a second range (e.g., 200 MHz - 220 MHz) as the second downlink frequency, use a third range (e.g., 300 MHz - 330 MHz) as the third uplink frequency and/or use a fourth range (e.g., 300 MHz - 330 MHz) as the fourth uplink frequency.

In an example, a UE (e.g., a UE of the UAV, a UE attached/integrated to the UAV) may receive a first configuration parameter from a network node (e.g., a PCF, a core network node, an AMF), an application server, a manufacturer of the UE, a home network of the UE, and/or the like. For example, the first configuration parameters may comprise one or more first parameters indicating one or more first areas of the NTZ, and/or one or more second parameters indicating one or more frequencies restricted in the one or more first areas.

In a first example, the one or more restricted frequencies comprises the first frequency (e.g., F1). A first cell may use the first frequency as a downlink frequency of the first cell and/or may use the first frequency as a uplink frequency of the first cell. In this case, the UE may not use (select, camp on, transmit to, receive from) the first cell, because the downlink frequency of the first cell is one of the one or more restricted frequencies.

In a second example, the one or more restricted frequencies comprise the fourth frequency (e.g., F4). A second cell may use the second frequency as a downlink frequency of the second cell and/or may use the third frequency as an uplink frequency of the second cell. In this case, the UE may not use (select, camp on, transmit to, receive from) the second cell, because the uplink frequency of the third cell is one of the one or more restricted frequencies. For example, if the second cell is configured with additional uplink frequency (e.g., the third frequency, e.g., F3), not using the second cell may lead to inefficient use of radio resource, because the UE may be allowed to use the third frequency for uplink direction even though the fourth frequency is restricted due to NTZ. For example, the second cell may be configured with the additional uplink frequency, to support one or more UEs which may not be able to use the uplink frequency. In this case, if the UE does not use the additional uplink frequency, because the additional uplink frequency is not used by other UEs, the additional uplink frequency may serve no purpose, leading to inefficiency.

In a third example, the one or more restricted frequencies comprises the first frequency (e.g., F1). A third cell may use the first frequency as a downlink frequency of the third cell and/or may use the second frequency as a uplink frequency of the third cell. In this case, the UE may not use (select, camp on, transmit to, receive from) the third cell, because the downlink frequency of the third cell is one of the one or more restricted frequencies. For example, because the one or more restricted frequencies indicated to the UE is not associated with a direction, the UE may not select the third cell, because the one or more restricted frequencies partially (or entirely) overlaps with the downlink frequency of the third cell. This may lead inefficient use of radio resource, because the UE may be allowed to use the second frequency for uplink direction, even though the first frequency overlaps the one or more restricted frequencies. Because, in the third cell, the second frequency is not restricted, the UE can transmit an uplink signal through one or more resources associated with the second frequency. If the one or more resources are not used by the UE, the one or more resources are wasted without being utilized.

As shown above, in some technologies, a UE may experience frequent service interruption, because different type of configurations of cells are not considered, while applying restriction related to enforcement of an NTZ. For example, an implementation may not consider one or more alternative (additional) uplink resources, may not consider a relationship between a first area of a cell and another area of the cell, with regard to the NTZ, may not consider whether a cell is eligible as a candidate for cell selection, may use one or more BWPs which are restricted due to the NTZ, may not use one or more BWPs which may be allowable by the NTZ, may perform transmission via a restricted frequency if triggered by downlink resource allocation, and/or the like. Another implementation may lead to waste of resource allocation, if one or more network nodes are not updated with the latest NTZ information. In another example, an implementation may lead to use of configured resources which may have been invalidated due to the NTZ. In another implementation, an RRC entity may select a cell which may be restricted to the NTZ, and/or a NAS entity may send a message via a cell which may be restricted to the NTZ.

Example embodiments of the present disclosure solve the above problems by receiving one or more configurations of one or more cells, by checking whether one or more UL frequencies of the one or more cells are not restricted, by selecting one or more uplink resources not restricted by the NTZ, and/or the like. This may help more reliable communication service to an aerial UE by, for example, reducing communication service interruptions. In another example, for a cell selection and/or for a resource selection, a UE may consider one or more BWPs of a cell, determine whether/which one or more first BWPs overlapping with restricted frequencies, determine whether/which a uplink carrier overlaps with the restricted frequencies, whether/which a cell comprises an uplink frequency overlapping with the restricted frequencies, and/or may determine whether the cell is suitable for camping. This may help the UE to avoid using the restricted frequency for transmission. In another example, a UE may use one or more uplink resources (e.g., random access preamble) to indicate that the UE is restricted to use some frequencies of the cell. This may help a network node to avoid allocation of radio resources which is restricted. In another example, a first base station may determine whether the UE is restricted to use for certain frequencies and/or may inform a second base station whether the UE is restricted for certain frequencies. This may help for the second base station to avoid allocation of the certain frequencies to the UE. In another example, a UE may determine whether the UE enters the NTZ, and/or may determine whether one or more configuration (e.g., configured resources) need to be released. This may help in preventing the UE from using the one or more configurations which may be invalid. In another example, a RRC layer of the UE may deliver to a NAS layer of the UE, information of one or more uplink frequencies of a cell and/or the NAS layer may indicate one or more networks selected based on the one or more uplink frequencies, considering the NTZ and/or one or more restricted frequencies in relation to the NTZ. This may help in preventing the UE from accessing a cell which may be restricted.

In the specification, the term "network system" may be interpreted as, or may refer to, a communication system, and/or a generation of the communication system. For example, one or more network systems may comprise an EPS, a 5GS, a 6^{th} generation (6G) system, and/or the like. For example, a first network system may be the EPS. The EPS may comprise of one or more UEs, one or more eNB, one or more en-gNBs, and/or one or more EPCs. The one or more EPCs may comprise a MME, a SGW, a PGW (e.g., a PGW-C+SMF, a PGW-U+UPF), HSS, PCRF, and/or the like. For example, a second network system may be the 5GS. The 5GS may comprise of one or more UEs, one or more gNB, one or more ng-eNBs, one or more 5G core networks. The one or more 5G core networks may comprise one or more core network nodes. The one or more core network nodes may comprise an AMF, a SMF, a PCF, a UPF, a UDM, a NEF, and/or the like. In some embodiments, a core network node may be a combination of one or more core network nodes of one or more core networks. For example, a SMF+PGW-C (e.g., PGW-C+SMF) may act as both a SMF and a PGW (e.g., PGW-C). For example, a SMF may act as a 5G core network node and a 6G core network node. For example, a third network system may be a 6th generation (6G) system (6GS). The 6GS may comprise of one or more UEs, one or more 6G-RAN (e.g., a radio access network node of 6G system), one or more 6gNBs (e.g., an equivalent of gNB for 6GS), one or more 6G core networks. The one or more 6G core networks may comprise one or more 6G core network nodes (e.g., 6G core network functions). Each of the one or more core network nodes may support (implement) one or more functions (or services) provided by each of the one or more 5G core network nodes. For example, a node of the 6GS may perform a function of a radio access network and/or one or more roles performed by one or more 6G core network nodes (or by 5G core network nodes).

In the specification, the term "5G System" may be interpreted as, or may refer to, a 3GPP system consisting of at least one of 5G access network (or NG-RAN), 5G core network and/or a UE.

In the specification, the term "EPS" may be interpreted as, or may refer to, a 3GPP system consisting of at least one of EPC, E-UTRAN and/or a UE.

In the specification, the term "network node" may be interpreted as, or may refer to, at least one of a core network node, an access node, a base station, a UE, the like, and/or a combination thereof. A network may comprise one or more network nodes.

In the specification, the term "core network node" may be interpreted as, or may refer to, a core network device, which may comprise at least one of an AMF, a SMF, a NSSF, a UPF, a NRF a UDM, a PCF, a SoR-AF, an AF, an DDNMF, an MB-SMF, an MB-UPF, a MME, a SGW, a PGW, a SMF+PGW-C, a SMF+PGW-U, a UDM+HSS and/or the like. The core network node may be a 5G core network node, a 6G core network node, a 4G core network node, the likes, and/or a combination thereof. One or more names may be used by a core network node. A function performed by a first core network node of 5GS may be performed by a second core network node of 6GS.

In the specification, the term "5G core network" may be interpreted as, or may refer to, a core network connecting to a 5G access network. This may be 5G core (5GC).

In the specification, the term "RAT type" may be interpreted as, or may refer to, identifying the transmission technology used in the access network for 3GPP accesses and/or for non-3GPP accesses. For example, RAT type for 3GPP access may comprise at least one of NR, NB-IOT, E-UTRA, 6GR (i.e., a radio access technology of 6GS) and/or the like. For example, RAT type for non-3GPP access may comprise at least one of untrusted non-3GPP, trusted non-3GPP, trusted IEEE 802.11 non-3GPP access, Wireline, Wireline-Cable, Wireline-BBF, WiFi, etc.

In the specification, the term "3GPP RAT" may be interpreted as, or may refer to, a radio access technology based on 3rd generation partnership (3GPP) project. For example, this may comprise at least one of a NR, a E-UTRA, UTRA, GSM, 6GR (6G radio), the like, and/or a combination thereof.

In the specification, the term "N3GPP RAT" may be interpreted as, or may refer to, a radio access technology not based on 3rd generation partnership project. This may be an access technology not developed by 3GPP. For example, this may comprise a WiFi, trusted WiFi, non-trusted WiFi, fixed access, wireline broadband, the like, and/or a combination thereof.

In the specification, the term "5G access network" may be interpreted as, or may refer to, an access network comprising at least one of a NG-RAN and/or non-3GPP RAN, and connecting to a 5G core network.

In the specification, the term "3GPP RAN" may be interpreted as, or may refer to, a radio access network using 3GPP RAT. For example, this may comprise at least one of a gNB, an eNB, a ng-eNB, an en-gNB, the like, and/or a combination thereof. For example, this may be at least one of an E-UTRAN, NG-RAN, 6G-RAN (6th generation RAN), the like, and/or a combination thereof. The 3GPP RAN may be 3GPP access node.

In the specification, the term "NG-RAN" may be interpreted as, or may refer to, a base station, which may comprise at least one of a gNB, a ng-eNB, a relay node, a base station central unit (e.g., gNB-CU), a base station distributed unit (e.g., gNB-DU), and/or the like. This may be a radio access network that connects to 5GC, supporting at least one of NR, E-UTRA, and/or a combination thereof.

In the specification, the term "E-UTRAN" may be interpreted as, or may refer to, a base station, which may comprise at least one of an eNB, an en-gNB, and/or the like. This may be a radio access network that connects to evolved packet core (EPC), supporting at least one of NR, E-UTRA, and/or a combination thereof.

In the specification, the term "mobility management node" may be interpreted as, or may refer to, a function and/or a node performing mobility management for a UE. For example, mobility management may be at least one of management of registration status, management of context, management of authorization, management of registration area, management of paging, and/or the like. For example, the mobility management node may comprise at least one of a MME, AMF, and/or the like.

In the specification, a term "procedure" may be interpreted as, or may refer to, comprising sending by a first node to a second node a first message, receiving by the second node from the first node the first message, sending by the second node to the first node a second message, and/or receiving by the first node from the second node the second message. The first node may be one or more first network nodes, and the second node may be a one or more second network nodes. The procedure may comprise a registration procedure, a deregistration procedure, a service request procedure, a notification procedure, a PDU session establishment procedure, a PDU session modification procedure, a UE configuration update procedure, a cell selection procedure, a cell reselection procedure, a random access procedure, a capability update procedure, and/or the like.

In the specification, a term "NAS message" may be interpreted as, or may refer to, a message exchanged between a UE and a core network node. The NAS message may be exchanged via a 3GPP access and/or via a N3GPP access. The NAS message may comprise a MM (mobility management) message, a SM (session management) message, and/or the like. The MM message may comprise a registration request message, a registration accept message, a registration reject message, a UE configuration update message, a UL NAS transport message, a DL NAS transport message, a deregistration message, a service request message, a service accept message, a service reject message, a PDU session establishment request message, a PDU session establishment accept message, a PDU session establishment reject message, a PDU session modification request message, a PDU session modification accept message, a PDU session modification reject message, a PDU session modification command message, a PDU session release request message, a PDU session release command message, and/or the like.

In an example, a timer may begin running once it is started and continue running until it is stopped or until it expires. A timer may be started if it is not running or restarted if it is running. A timer may be associated with a value (e.g. the timer may be started or restarted from a value or may be started from zero and expire once it reaches the value). The duration of a timer may not be updated until the timer is stopped or expires (e.g., due to change of the value). A timer may be used to measure a time period/window for a process. When the specification refers to an implementation and procedure related to one or more timers, it will be understood that there are multiple ways to implement the one or more timers. For example, it will be understood that one or more of the multiple ways to implement a timer may be used to measure a time period/window for the procedure. For example, a network slice inactivity window timer (e.g., a NS UE monitoring timer, a NS PDU monitoring timer) may be used for measuring a window of time for measuring the network slice inactivity. In an example, instead of starting and expiry of a network slice inactivity window timer, the time difference between two time stamps may be used. When a timer is restarted, a process for measurement of time window may be restarted. Other example implementations may be provided to restart a measurement of a time window.

In an example, indication (e.g., indicate, indicating) may be achieved in various ways. For example, a first indication may be done by including a first field in a first signalling (e.g., a message). Alternatively and/or additional, a second indication may be done by not including the first field in the first signalling. For example, if a first message comprises the first field (e.g., used/ assigned for the first indication, e.g., field A), the first indication (e.g., a timer is used) may be done (e.g., achieved, delivered from a sender to a receiver). For example, if the first field in the first message is set to a value A, a third indication (e.g., timer value is value A) may be done. For example, if the first message does not comprise the first field, the second indication (e.g., timer is not used) may be done. In another example, a fourth indication (e.g., a UE is allowed for action C) may be done by sending a second signalling (e.g., a message whose name comprises 'C' and/or 'accept'). Alternatively and/or additionally, a fifth indication (e.g., a UE is not allowed for action C) may be done by not sending the second signalling (e.g., a message, a field (e.g., allowed bit)). For example, the sender can indicate A, by sending a message A1 comprising an indicator (e.g., an information element) indicating A and/or by sending a message A2. For example, the message A2 may be used only to indicate A and/or the message A2 itself may indicate the A. For example, when a first entity indicates to a second entity about first something, the first entity may send to the second entity, an indicator (e.g., an information element) indicating the first something, and/or may send to the second entity, a message comprising the indicator and/or may send a first dedicated message for the first something. In other example, when a first entity does not indicate to a second entity about second something, the first entity may not send to the second entity, a first indicator (e.g., an information element) indicating the second something, may not send to the second entity, a message comprising the first indicator, and/or may send to the second entity, a second indicator indicating that the second something does not apply, and/or may send a message not comprising the first indicator, and/or may send to the second entity, a second dedicated message for indicating the second something. In another example, not sending any message may be interpreted as an indication.

In the specification, "protocol entity" may be interpreted, or may refer to, as an entity performing a set of specific functions related to a wireless access (e.g., LTE access, NR access) and/or a wireline access (e.g., Ethernet) and/or communication (e.g., TCP, IP). In an example, an entity (or a layer) may be interpreted as a protocol entity (or a protocol layer). In an example, the protocol entity of LTE and/or NR may be at least one of a SDAP entity, a PDCP entity, a RLC entity, a MAC entity, a RRC entity, a NAS entity, and/or a PHY entity. In an example, a layer (e.g., a SDAP layer, a PDCP layer, a RLC layer, a MAC layer a PHY layer, a RRC layer, a NAS layer) may be interpreted as a protocol entity (e.g., SDAP entity, a PDCP entity, a RLC entity, a MAC entity, a PHY entity, a RRC entity, a NAS entity).

In the specification, no transmission zone (NTZ) may be no-transmission zone or no-transmission zones. In a first example, the NTZ may be a geographical area where one or more aerial UEs (e.g., drones, UAVs) are not allowed to operate (e.g., transmit a radio signal) in a certain frequency band. ECC Decision (22)07 describes purpose and requirements of NTZ. The ECC Decision 22(07) (e.g., CEPT Decision 22(07) is a decision made by CEPT in November 2022, is about harmonized technical conditions for the usage of aerial UE for communications based on LTE and 5G NR in several bands harmonized for MFCN. The decision assumes multiple technical conditions and requirements to support aerial UEs in mobile systems (both LTE and NR). Two notable ones are no-transmit zone (NTZ) and out-of-band emission (OOBE). In ECC Decision 22(07), the NTZ is defined at national level as a geographical area where aerial UE are not allowed to operate in a certain frequency band. Another measure to achieve coexistence is to define additional OOB emission limits specific to aerial UE (to avoid interference to other services in some other bands (e.g. to protect MetSat at 1675-1710 MHz). The requirement may apply to aerial UE according to their operational frequency band, e.g., aerial UE operating in a specific band or specific channel. In some cases, operation of aerial UE also requires respective cross-border coordination agreements. No-fly zone definition is set out in ECC Report 309. On the other hand, no flying zone (NFZ), may be an area whether the UAV is not allowed to fly. An area of the NFZ may be a NTZ and/or may not be an NTZ. In a second example, the NTZ may be a geographical area where one or more UEs (e.g., smartphones, machines, terrestrial devices, devices on the ground, devices under certain altitudes, devices which does not have capability to fly, etc.) are not allowed to operate (e.g., transmit a radio signal) in a certain frequency band (ranges). In a third example, the NTZ may be associated with one or more conditions. When the one or more conditions (e.g., geographical areas, certain time slots) are met, one or more UEs (e.g., smartphones, machines, terrestrial devices, devices on the ground, devices under certain altitudes, devices which does not have capability to fly, etc) are not allowed to operate (e.g., transmit a radio signal) in a certain frequency band (ranges). When the one or more conditions (e.g., geographical areas, certain time slots) are not met, one or more UEs (e.g., smartphones, machines, terrestrial devices, devices on the ground, devices under certain altitudes, devices which does not have capability to fly, etc.) are allowed to operate (e.g., transmit a radio signal) in a certain frequency band (ranges).

In the specification, an aerial UE may be an uncrewed (unmanned) aerial vehicle (UAV), a drone, a communication device attached to the UAV, a communication device integrated into the UAV, and/or the like.

In the specification 'restriction' and/or 'restricted' may be interpreted, may refer to "not allowed to use, transmit, send, operate, and/or the like". For example, if a frequency A (e.g., 1.1 GHz) is restricted, it may be interpreted at least one of that transmission (of a signal, data, etc.) using the frequency A is not allowed, that reception (of a second signal, data, etc.) using the frequency A is not allowed, that communication via the frequency A is not allowed, sending feedback (e.g., HARQ ACK/NACK, PUCCH, UCI, etc.) via the frequency A is not allowed while receiving one or more downlink signal, and/or the like. For example, if the frequency A is restricted, the UE may not send any signal, using the frequency A, if a certain condition (e.g., transmitter of the UE does (and/or does not) support the frequency A, a resource using the frequency A is (and/or is not) allocated, the UE is in the NTZ, the UE is an aerial UE type, and/or the like)is met. For example, if the frequency A is not restricted, the UE may send a signal, using the frequency A, if some conditions (e.g., transmitter of the UE supports the frequency A, a resource using the frequency A is allocated, the UE is not in the NTZ, the UE is not an aerial UE type, and/or the like) are met. In some cases, a first cell may be restricted and/or a second cell may not be restricted. In some cases, a first uplink carrier of one or more uplink carrier may be restricted and/or a second uplink carrier of the one or more uplink carrier may not be restricted. In some cases, a first BWP of one or more BWPs may be restricted and/or a second BWP of the one or more BWPs may not be restricted. In some cases, that a portion of cells (or, BWPs, frequencies, uplink carriers) is restricted may be that a resource of the cells are partially restricted and/or that entire resource of the cells are not restricted and/or at least a resource of the cells are allowed. Restriction may be for not allowing to use, not allowing to access, preventing access, preventing use. Restriction may apply partially and/or entirely.

In the specification, 'frequency bands' and/or 'frequency range" may be interpreted, may refer "a set of frequencies". For example, a first frequency band (e.g., covering from 10 MHz to 11 MHz) may be (comprise) one or more frequencies (10.1, 10.11, 10.3 MHz, ..., 10MHz) within (starting, from) a first lower edge frequency (e.g., 10 MHz) and (ending, up to) a first upper edge frequency (11 MHz). The one or more frequencies may be expressed by the first lower edge frequency and/or by the first upper edge frequency. The one or more frequencies may be a frequency band, a frequency range, a block of frequencies, a set of frequencies, and/or the like.

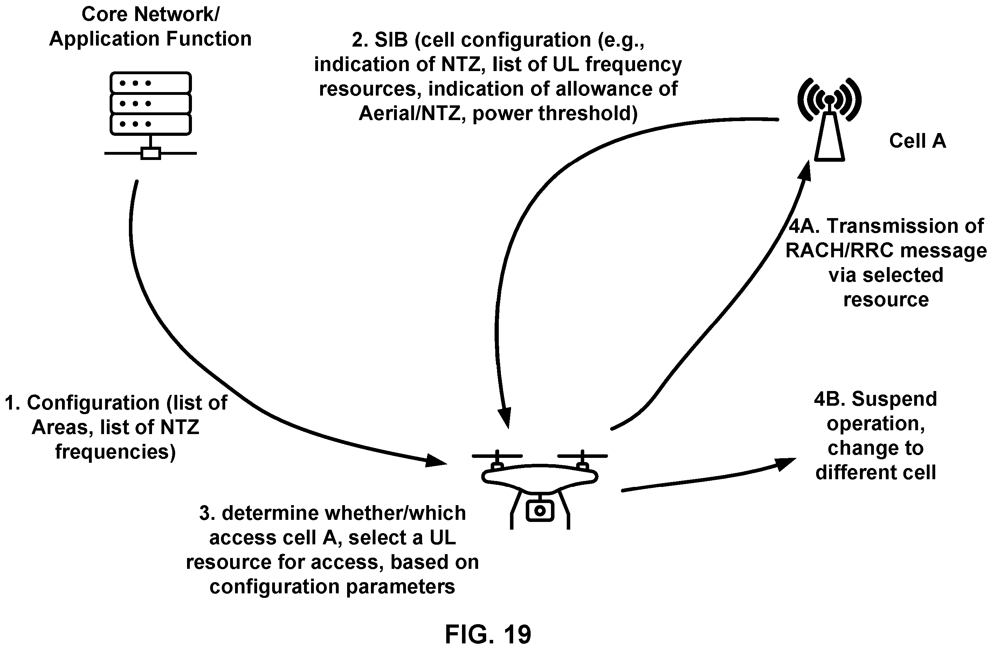

FIG. 19 illustrates an example as per an aspect of an embodiment of the present disclosure. In an example, a UE may receive one or more first configurations associated with a NTZ and/or may receive one or more second configurations associated with a cell. Based on the one or more first configuration and/or the one or more second configurations, the UE may determine whether to access the cell and/or may select a resource to use. This may help in reducing out-of-service time of the UE. For brevity, based on the other part of the present disclosure, redundant details will be omitted.

In an example, a UE may receive one or more first messages.

The UE may receive the one or more first messages from at least one of a mobility management node (e.g., an AMF, a MME, a mobility management node of 6GS), an application server (e.g., a server associated operation of the aerial UE, a USS, a UTM, an application server controlling an aerial UE, and/or the like), a manufacture of the UE (or hard-coded information sin the hardware of the UE), a home network (e.g., via a node of the home network, a SIM card, stored in the SIM card (USIM)), and/or the like.

The one or more first messages may comprise at least one of:
- a first information indicating (associated, of) the NTZ. For example, this (the first information) may indicate one or more areas (locations, cells, tracking areas) of the NTZ. Within (when located inside of, near, a guard area of) each of the one or more areas, the UE may not be allowed to transmit (send) an uplink signal (e.g., reference symbols, MAC CE, MAC PDU) using the one or more restricted frequencies (or an uplink resource indicated by (comprising) the one or more restricted frequencies). Outside (when located outside of) each of the one or more areas, and/or when not configured with the first information, the UE may be allowed to transmit using the one or more restricted frequencies. The one or more restricted frequencies may be restricted for the NTZ. Within (when located inside of, near) each of the one or more areas, the UE may be allowed to transmit using other frequencies not indicated by the one or more restricted frequencies. This may be a NTZ area (location) information.
- a second information indicating the one or more restricted frequencies. The one or more restricted frequencies may indicate one or more sets of frequencies (or frequency ranges, frequency blocks). For example, a set of the one or more sets may be expressed by a lower edge frequency (e.g., lower bound frequency, a starting frequency) of the set and/or an upper edge frequency (e.g., upper bound frequency, an ending frequency) of the set. The set may comprise frequencies within the lower edge frequency and the upper edge frequency. For example, a first set of the one or more sets may be (comprise) frequencies in a range of 1100 MHz to 1200 MHz, in which the lower edge frequency is 1100 MHz and the upper edge frequency is 1200 MHz. For example, a second set of the one or more sets may be (comprise) frequencies in a range of 2100 MHz to 2200 MHz, in which the lower edge frequency is 2100 MHz and the upper edge frequency is 2200 MHz.

The one or more first messages may be at least one of a registration accept message, a UE configuration update message, a policy container, a OMA (open mobile alliance) DM (device management) message, a configuration message, a downlink RRC transfer message, a service-level-AA container, a payload container, a UE policy container, NAS transparent container, a SOR transparent container, and/or the like.

The one or more first messages may be used to configure (provide) the UE with information of the NTZ. For example, this may help the UE to identify one or more areas of the NTZ, and/or the one or more restricted frequencies associated with the NTZ, before the UE initiates access to a cell and/or the network. A network node may send the one or more first messages to the UE, if the UE is an aerial UE type, and/or if the UE supports handling of the NTZ related information. For example, if the UE sends to the network a capability information indicating that the UE can interpret (handle, process) the NTZ information (e.g., the UE can interpret the first information and/or the second information), the network may send the one or more first messages (e.g., the first information and/or the second information) to the UE. For example, if the UE does not send to the network the capability information, the network may not send the one or more first messages (e.g., the first information and/or the second information) to the UE. This may help in reducing abnormal behavior of a UE, when the one or more first messages are sent to the UE that may not be able to interpret the first information (or the second information).

In an example, a UE may receive one or more second messages. For example, the UE may receive the one or more second messages from a radio access node, a base station, via a cell and/or the like. For example, the one or more second messages may be at least one of a system information block (SIB, MIB, SIB 1, and/or the like), a RRC message (e.g., RRC Setup message, RRC Reconfiguration message, RRC Release message, and/or the like).

The one or more second messages may comprise one or more third information (one or more third parameters). The one or more third information may be (comprise) at least one of:
- cell Barred: This may indicate whether the cell is barred or not. When the cell is barred, the UE does not select this cell
- cellBarredAerial (aerialUEallowed): This may be an information indicating whether the cell is barred to an aerial type UE. If cellBarredAerial is set to Barred, and if the UE is the aerial type UE (e.g., aerial UE), the UE may not select this cell, and/or may consider the cell as barred. If cellBarredAerial is set to notBarred, and if the UE is the aerial type UE (e.g., aerial UE), the UE may select this cell, and/or may consider the cell as not barred.
- noTransmissionZonelnd: This may be an information indicating whether the cell is associated with the NTZ, whether a part of the cell comprises the NTZ, whether the entire cell belongs to the NTZ, and/or the like. If this is set to yes (or true), this may indicate that the cell is associated with the NTZ, that a part of the cell comprises the NTZ, that the entire cell belongs to the NTZ, and/or the like.
- list of UplinkConfigCommonSIB. This may indicate one or more uplink resources of one or more uplink carriers of the cell. This may comprise uplinkConfigCommon and/or supplementaryUplink. Each of the uplinkConfigCommon and/or supplementaryUplink may comprise at least one of FrequencylnfoUL, initialUplinkBWP, and/or the like. The uplinkConfigCommon may indicate a first uplink carrier configuration of the cell and/or may be associated with a NUL carrier. The supplementaryUplink may indicate a second uplink carrier configuration of the cell and/or may be associated with an SUL carrier of the cell, if the SUL carrier is configured in the cell.
- FrequencylnfoUL (FrequencylnfoUL-SIB): This may be an information of an uplink carrier configuration of the cell. This may comprise absoluteFrequencyPointA, frequencyBandList, and/or the like. This may be associated with an uplink carrier of the cell. Different uplink carrier may use different values for FrequencylnfoUL.
- absoluteFrequencyPointA: This may indicate absolute frequency of a reference resource block (Common RB 0) of an uplink carrier. A lowest subcarrier of the uplink carrier may be a Point A of the uplink carrier. Different uplink carrier may use different values for absoluteFrequencyPointA.
- frequencyBandList: This may provide information regarding the frequency band indicator (i.e., indicating one or more operating bands of the uplink carrier) and a list of additionalPmax and additionalSpectrumEmission values, for each of the one or more operating bands. The UE may apply a first listed (frequency, operating) band which the UE supports in the frequencyBandList field, if the NTZ does not apply. The UE may apply a first listed (frequency, operating) band which the UE supports in the frequencyBandList field, except one or more frequency bands for which the NTZ applies, if the NTZ applies (e.g., when the UE is inside the NTZ). For example, this may comprise at least one of frequencyBandList (e.g., N195, N100, indicating list of frequency operating band that the cell belongs to, indicates list of frequency bands for which the NR cell reselection parameters apply). If the UE is configured with the first information and/or the second information, and if the UE is in the NTZ, the UE may apply a first listed band which the UE supports in the frequencyBandList, excluding one or more bands overlapping (comprising) the one or more frequencies indicated by the second information. This may help the UE to apply adequate additionalPmax and additionalSpectrumEmission values, when the UE is in the NTZ. For example, the frequencyBandList may comprise a first element of frequency band N100 and a second element of frequency band N101. For example, frequency band N100 may span from a frequency 2000 MHz to a frequency 2100 MHz, and frequency band N101 may span from a frequency 2050 MHz to a frequency 2150 MHz. For example, the second information may indicate a frequency range from a frequency 1980 MHz to a frequency 2020 MHz. In this case, when the UE is capable of both N100 and N101, if the UE is inside the NTZ (indicated by the first information), the UE may exclude the frequency band N100, the UE may select N101, which does not overlap (comprise) the frequency range indicated by the second information. In this case, when the UE is capable of both N100 and N101, if the UE is not inside the NTZ (indicated by the first information), the UE may select N100, which may be listed first (earlier than) the N101.
- initialUplinkBWP: This may indicate an initial uplink BWP of an uplink carrier. This may comprise information of BWP-uplinkcommon.
- BWP-uplinkcommon: This may comprise information of a BWP and/or rach-configcommon of (associated with) the BWP. The BWP may be associated with an uplink carrier. For example, the information of the BWP may comprise locationAndBandwidth. The locationAndBandwidth may indicate frequency domain location and bandwidth of the BWP. This may help the UE to determine frequency range (e.g., from which frequency to which frequency) of the (initial) BWP of a UL carrier of the cell.

In an example, based on the one or more second messages (e.g., based on one or more parameters indicated by the second messages), the UE may determine which one or more frequencies (or which one or more frequency bands, which one or more frequency ranges, which one or more portion of the one or more frequencies) are configured in the cell for uplink. For example, the UE may determine one or more configured frequencies of the cell. For example, based on the one or more second message, the UE may determine that the cell uses the one or more configured frequencies ranges for the uplink direction (for uplink resources).

In an example, based on the one or more second messages and/or on the one or more first messages, the UE may determine whether the one or more (configured) frequencies (or which one or more frequency bands, which one or more frequency ranges) configured in the cell for uplink direction overlaps (comprises partially, entirely) at least a portion of the one or more restricted frequencies.

In a first example, the one or more configured frequencies ranges may comprise (be) a frequency range A (e.g., from 511.1 MHz to 531.6 MHz), a frequency range B (e.g., from 813.4 MHz to 913.4 MHz), and/or the like. For example, the second information may indicate one or more restricted frequency ranges. For example, the one or more restricted frequency ranges may comprise a first restricted frequency range (e.g., from 509.1 MHz to 515.6 MHz), a second restricted frequency range (e.g., from 701.1 MHz to 711.6 MHz), and/or the like. Because the one or more configured frequencies comprise a portion (e.g., from 511.1 MHz to 515.6 MHz) of the one or more restricted frequencies, the UE may determine at least one of that that a portion of the one or more configured frequencies of the cell are restricted, that a BWP of the uplink carrier of the cell is barred, that the uplink direction of the cell is restricted (barred), that the cell is barred (due to the NTZ), and/or the like.

In a second example, the one or more configured frequencies ranges may comprise a frequency range A (e.g., from 511.1 MHz to 531.6 MHz), a frequency range B (e.g., from 813.4 MHz to 913.4 MHz), and/or the like. For example, the second information may indicate one or more restricted frequency ranges. For example, the one or more restricted frequency ranges may comprise a third restricted frequency range (e.g., from 609.1 MHz to 615.6 MHz), a second restricted frequency range (e.g., from 701.1 MHz to 711.6 MHz), and/or the like. Because the one or more configured frequencies does not comprise a (any) portion of the one or more restricted frequencies, the UE may determine that the one or more configured frequencies of the cell are not restricted, that the uplink direction of the cell is not restricted (barred), that one or more BWP of the cell is not barred, that the cell is not barred for the NTZ, that the cell is not barred for the aerial UE, and/or the like. That a resource (frequency, BWP, carrier) is not barred may be that the resource is configured, and/or that can be selected.

In another example, based on the one or more second messages, the UE may determine which one or more frequencies (or which one or more frequency bands, which one or more frequency ranges) are configured in the cell for one or more initial uplink BWPs. The UE may determine one or more configured initial uplink BWP frequencies of the cell for the one or more initial uplink BWPs for one or more uplink carrier. Based on the one or more second message, the UE may determine that the cell configures the one or more BWPs. For example, the one or more initial uplink BWPs may comprise a first initial uplink BWP and/or a second initial uplink BWP. For example, the one or more configured initial uplink BWP frequencies may comprise a one or more first configured initial uplink BWP frequencies for the first initial uplink BWP and/or a one or more second initial uplink BWP frequencies for the second initial uplink BWP.

In an example, based on the one or more second messages and/or on the one or more first messages, the UE may determine whether the one or more configured initial uplink BWP frequencies (or which one or more initial uplink BWP frequency bands, which one or more initial uplink BWP frequency ranges) configured in the cell for the one or more initial uplink BWPs (or the one or more uplink carrier) overlaps (comprises partially, entirely) at least a portion of the one or more restricted frequencies.

In a first example, the one or more configured initial uplink BWP frequencies ranges may comprise a frequency range A (e.g., from 511.1 MHz to 531.6 MHz) for the first initial uplink BWP, a frequency range B (e.g., from 813.4 MHz to 913.4 MHz) for the second initial uplink BWP, and/or the like. For example, the second information may indicate one or more restricted frequency ranges. The one or more restricted frequency ranges may comprise a first restricted frequency range (e.g., from 509.1 MHz to 515.6 MHz), a second restricted frequency range (e.g., from 701.1 MHz to 711.6 MHz), and/or the like. Because the one or more first configured initial uplink BWP frequencies of the first initial uplink BWP comprise a portion (e.g., from 511.1 MHz to 515.6 MHz) of the one or more restricted frequencies, the UE may determine at least one of that that a portion of the one or more configured first initial uplink BWP frequencies of the cell (or of the first initial uplink BWP) are restricted, that the first initial uplink BWP of the cell is restricted (barred),that an uplink carrier (e.g., the NUL and/or the SUL) associated with the first initial uplink BWP (or the one or more first configured initial BWP frequencies) of the cell is barred/ restricted, that a random access procedure over the BWP (or the uplink carrier, of the cell) is restricted (not allowed), and/or the like.

In a second example, the one or more configured initial uplink BWP frequencies ranges may comprise a frequency range A (e.g., from 511.1 MHz to 531.6 MHz) for the first initial uplink BWP, a frequency range B (e.g., from 813.4 MHz to 913.4 MHz) for the second initial uplink BWP, and/or the like. For example, the second information may indicate one or more restricted frequency ranges. The one or more restricted frequency ranges may comprise a first restricted frequency range (e.g., from 509.1 MHz to 515.6 MHz), a second restricted frequency range (e.g., from 701.1 MHz to 711.6 MHz), and/or the like. Because the one or more second configured initial uplink BWP frequencies of the second initial uplink BWP does not comprise a (any) portion of the one or more restricted frequencies, the UE may determine at least one of that that a (any) portion of the one or more configured second initial uplink BWP frequencies of the cell (or of the second initial uplink BWP) are not restricted, that the second initial uplink BWP of the cell is allowed (not restricted (barred)), that an uplink carrier (e.g., the NUL and/or the SUL) associated with the second initial uplink BWP (or the one or more second configured initial BWP frequencies) of the cell is allowed (not barred (restricted), and/or the like.

In another example, based on the one or more second messages, the UE may determine which one or more carriers are configured, which the one or more carriers of the cell are allowed, which one or more uplink carriers are configured (allowed) in the cell. The UE may determine one or more configured frequencies of the one or more carriers of the cell. Based on the one or more second message, the UE may determine that the cell configures the one or more uplink carriers for uplink. For example, the one or more uplink carriers may comprise a first uplink carrier (e.g., FR1, N100, etc.) and/or a second uplink carrier (e.g., FR2, N105, etc.). For example, the one or more configured frequencies may comprise a one or more first frequencies for the first uplink carrier and/or a one or more second frequencies for the second uplink carrier.

In an example, based on the one or more second messages and/or on the one or more first messages, the UE may determine whether the one or more configured frequencies (or which one or more frequency bands, which one or more frequency ranges) configured in the cell for the one or more uplink carriers overlaps (comprises partially, entirely) at least a portion of the one or more restricted frequencies.

In a first example, the one or more configured frequencies ranges may comprise a frequency range A (e.g., from 511.1 MHz to 531.6 MHz) for the first uplink carrier, a frequency range B (e.g., from 813.4 MHz to 913.4 MHz) for the second uplink carrier, and/or the like. For example, the second information may indicate one or more restricted frequency ranges. The one or more restricted frequency ranges may comprise a first restricted frequency range (e.g., from 509.1 MHz to 515.6 MHz), a second restricted frequency range (e.g., from 701.1 MHz to 711.6 MHz), and/or the like. Because one or more first uplink frequencies of the first uplink carrier comprise a portion (e.g., from 511.1 MHz to 515.6 MHz) of the one or more restricted frequencies, the UE may determine at least one of that that a portion of the one or more first uplink frequencies for the first uplink carrier of the cell are restricted, that the first uplink carrier (e.g., the NUL and/or the SUL) of the cell is restricted (barred),that an uplink carrier (e.g., the NUL and/or the SUL), and/or the like.

In a second example, the one or more configured frequencies ranges may comprise a frequency range A (e.g., from 511.1 MHz to 531.6 MHz) for the first uplink carrier, a frequency range B (e.g., from 813.4 MHz to 913.4 MHz) for the second uplink carrier, and/or the like. For example, the second information may indicate one or more restricted frequency ranges. The one or more restricted frequency ranges may comprise a first restricted frequency range (e.g., from 509.1 MHz to 515.6 MHz), a second restricted frequency range (e.g., from 701.1 MHz to 711.6 MHz), and/or the like. Because one or more second uplink frequencies of the second uplink carrier does not comprise (overlap) a (any) portion (e.g., from 511.1 MHz to 515.6 MHz) of the one or more restricted frequencies, the UE may determine at least one of that that a (any) portion of the one or more second uplink frequencies for the second uplink carrier of the cell are not restricted, that the second uplink carrier (e.g., the NUL and/or the SUL) of the cell is allowed (not restricted (barred)), and/or the like.

In an example, if the UE is inside of the NTZ, if the UE enters the NTZ, if the UE approaches near the area of the NTZ, and/or the like, the UE may determine whether a frequency (or one or more frequency, one or more frequency bands, one or more frequency ranges, one or more uplink carrier) is restricted or not, as described in other part of this specification. For example, the UE may use the first information and/or the second information of the one or more first message, if the UE is inside of the NTZ, if the UE enters the NTZ, if the UE approaches near the area of the NTZ, and/or the like.

In an example, if the UE is outside of the NTZ, if the UE exits (move out of) the NTZ, if the UE moves away from the NTZ, and/or the like, the UE may not determine whether a frequency (or one or more frequency, one or more frequency bands, one or more frequency ranges, one or more uplink carrier) is restricted or not, as described in other part of this specification. For example, the UE may not use the first information and/or the second information of the one or more first message, if the UE is outside of the NTZ, if the UE exits (move out of) the NTZ, if the UE moves away from the NTZ, and/or the like,

In an example, if the UE determines that an initial uplink BWP of the one or more initial uplink BWPs of the cell is restricted, the UE may determine that the one or more initial uplink BWPs of the cell are restricted. In an example, if the UE determines that an initial uplink BWP of the cell is restricted, the UE may determine that an uplink carrier associated with the initial uplink BWP is restricted. In an example, if the UE determines that a uplink carrier of the one or more uplink carriers of the cell is restricted, the UE may determine that the one or more uplink carriers of the cell are restricted. In an example, if the UE determines that a uplink carrier of the one or more uplink carriers of the cell is restricted, the UE may determine (select) another uplink carriers of the cell that are not restricted.

In an example, if the UE determines that an uplink carrier of the one or more uplink carriers of the cell is restricted, the UE may determine that cell is barred, that an access to the cell is not allowed, and/or the like. In an example, if the UE determines that an uplink carrier of the one or more uplink carriers of the cell is restricted, the UE may determine (select) another uplink carrier which is not barred, and/or the like.

In an example, the UE may determine to initiate (trigger) a random access procedure. For example, the UE may initiate the random access procedure if requested by an upper layer (e.g., an RRC entity), if the UE has a data to transmit, if the UE needs to perform a MAC procedure (e.g., buffer status reporting, beam failure recovery, and/or the like), and/or the like.

In response to determining to initiate the random access procedure, the UE may select one or more uplink carrier, one or more uplink BWP (e.g., initial uplink BWP), one or more random access resources, and/or the like. The UE may transmit a random access preamble via a selected uplink carrier, a selected uplink BWP, a selected random access resources, and/or the like.

For example, in response to determining that an uplink BWP is restricted, that an uplink carrier of the cell is restricted, that an uplink of the cell is restricted, the UE may not select the uplink BWP which is restricted, the uplink carrier which is restricted, and/or the cell which is restricted (barred), for the random access procedure.

For example, in response to determining that a first uplink BWP of the one or more uplink BWPs is restricted, and/or that a second uplink BWP of the one or more uplink BWPs is not restricted, the UE may not send a random access preamble via the first uplink BWP and/or the UE may send a random access preamble via the second BWP.

For example, in response to determining that a first uplink carrier of the one or more uplink carrier is restricted, and/or that a second uplink carrier of the one or more uplink carrier is not restricted, the UE may not send a random access preamble via the first uplink carrier and/or the UE may send a random access preamble via the second uplink carrier.

For example, based on that at least an uplink BWP of the one or more uplink BWPs of the cell is restricted, the UE may determine that the random access procedure is prohibited (restricted), that the cell is not configured with a resources for the random access procedure, that the one more uplink BWPs are restricted for the random access procedure, and/or the like. For example, the UE may abort the triggered random access procedure.

For example, based on that at least a uplink carrier of the one or more uplink carriers of the cell is restricted, the UE may determine that the random access procedure is prohibited (restricted), that the cell is not configured with a resources for the random access procedure, that the one more uplink carriers are restricted for the random access procedure, and/or the like. For example, the UE may abort the triggered random access procedure.

In an example, a UE may determine whether the UE enters (is inside of) the NTZ and/or whether the UE exits (is outside of) the NTZ. For example, the UE may determine whether the UE enters (is inside of) the NTZ and/or whether the UE exits (is outside of) the NTZ, periodically based on one or more period values received from a network, and/or based one or more events (e.g., change of signal strength of one or more cells). If the UE determines that the UE enters (or is inside of) the NTZ, the UE may determine whether one or more uplink carriers are restricted, whether one or more cells are restricted, and/or whether one or more uplink BWPs are restricted or not, based on the first information and/or the second information. For example, the UE may not perform transmission via the one or more restricted carriers, via the one or more restricted BWPs, via the one or more restricted cells and/or the like, based on the first information and/or the second information. For example, the UE may perform transmission via one or more carriers which are not restricted, via one or more BWPs which are not restricted, via the one or more cells which are not restricted, and/or the like, based on the first information and/or the second information. If the UE determines that the UE enters (or is inside of) the NTZ, the UE may use the first information and/or the second information.

If the UE determines that the UE exits (or outside of) the NTZ, the UE may stop determining and/or may not determine whether one or more uplink carriers are restricted, whether one or more cells are restricted, and/or whether one or more uplink BWPs are restricted or not. For example, the UE may perform transmission via one or more configured carriers, via one or more configured BWPs, via the one or more cells which are not configured, and/or the UE may not consider the first information and/or the second information. For example, if the UE determines that the UE exits (or outside of) the NTZ, the UE may stop using the first information and/or the second information and/or may not determine whether a cell (or a carrier, a BWP) is restricted or not (for enforcement of the NTZ).

In an example, the UE may determine an uplink carrier, based on at least one of: one of more configured uplink carriers of a cell; one or more restricted frequencies (e.g., the second information); whether the UE is in the NTZ; and/or the like. For example, if a portion of the NUL carrier overlaps (comprises) at least a portion of the one or more restricted frequencies, the UE may not select the NUL carrier for uplink transmission and/or may select the SUL carrier for uplink transmission. For example, if a portion of the SUL carrier overlaps (comprises) at least a portion of the one or more restricted frequencies, the UE may not select the SUL carrier for uplink transmission and/or may select the NUL carrier for uplink transmission.

In an example, the UE may determine whether one or more carriers (uplink carriers) of a cell is restricted or not, and/or which one or more carriers of the cell is allowed (can be selected) for uplink transmission. For example, the UE may receive a RRC message (e.g., a RRC reconfiguration message, or a SIB) of the cell, and/or the RRC message may indicate one or more configured carriers of the cell. For example, the one or more configured carries of the cell may comprise a NUL of the cell and/or a SUL of the cell. The RRC message may indicate a NUL frequency range (a NUL frequency band, a NUL frequencies, one or more NUL frequencies, and/or the like) of the NUL and/or a SUL frequency range (a SUL frequency band, a SUL frequencies, one or more SUL frequencies, and/or the like) of the SUL. For example, the NUL frequency range may comprise a first range (e.g., from 100 MHz to 110 MHz) and/or the SUL frequency range may comprise a second range (e.g., from 200 MHz to 210 MHz).

In an example, if the UE is inside (within) the NTZ (e.g., based on the first information), the UE may determine, based on the one or more first messages, whether at least one of the one or more configured carriers are restricted (e.g., not allowed) for transmission and/or which one or more carriers of the one or more configured carriers of the cell the UE can use, and/or the like. For example, the one or more first messages may comprise the first information and/or the second information. For example, the first information may indicate that a third range (e.g., from 106 MHz to 116 MHz) is restricted for transmission within the NTZ. Based on that the first range comprises at least a portion (e.g., from 106 MHz to 110 MHz) of the third range, the UE may determine at least one of that one or more NUL frequencies (e.g., from 106 MHz to 110 MHz) of the NUL is restricted, that the NUL is restricted, that the NUL is not configured, that the NUL is not available for uplink transmission, that a criterion to select the NUL is not met, that a criterion to select the SUL is met, and/or the like. Based on the determination, the UE may select the SUL for uplink transmission and/or for a random access procedure, and/or for a transmission of a random access preamble. For example, the UE may transmit uplink signal via the SUL and/or the UE may not transmit uplink signal via the NUL.

In an example, if the UE is inside (within) the NTZ (e.g., based on the first information), the UE may determine, based on the one or more first messages, whether at least one of the one or more configured carriers are restricted (e.g., not allowed) for transmission and/or which one or more carriers of the one or more configured carriers of the cell the UE can use, and/or the like. For example, the one or more first messages may comprise the first information and/or the second information. For example, the first information may indicate that a third range (e.g., from 206 MHz to 216 MHz) is restricted for transmission within the NTZ. Based on that the second range comprises at least a portion (e.g., from 206 MHz to 210 MHz) of the third range, the UE may determine at least one of that one or more SUL frequencies (e.g., from 206 MHz to 210 MHz) of the SUL is restricted, that the SUL is restricted, that the SUL is not configured, that the SUL is not available for uplink transmission, that a criterion to select the SUL is not met, that a criterion to select the NUL is met, and/or the like. Based on the determination, the UE may select the NUL for uplink transmission and/or for a random access procedure, and/or for a transmission of a random access preamble. For example, the UE may transmit uplink signal via the NUL and/or the UE may not transmit uplink signal via the SUL.

In an example, a UE may receive from a cell, an information indicating one or more uplink carriers (e.g., SUL carrier, and/or a NUL carrier) of the cell. In an example, the information further indicates one or more criterion for selection of an uplink carrier of the one or more uplink carriers. The one or more criteria may indicate a power value. The power value may be a value associated with signal strength of the one or more uplink carriers.

In a first example, when the UE is outside of the NTZ, if a first quality (a received signal strength, e.g., RSRP, RSRQ, and/or the like) of the NUL is above the power value, the UE may select the NUL for uplink transmission (e.g., for transmission of a random access preamble). For example, when the UE is outside of the NTZ, if a second quality (a received signal strength) of the NUL is below the power value, the UE may not select the NUL for uplink transmission (e.g., for transmission of a random access preamble) and/or the UE may select the SUL for uplink transmission (e.g., for transmission of a random access preamble).

In a second example, when the UE is inside of the NTZ, if a third quality (a received signal strength) of the NUL of a cell is above the power value, and if the one or more frequencies of the NUL of the cell is restricted (as shown in other examples of in this specification), the UE may select the SUL (of the cell) for uplink transmission (e.g., for transmission of a random access preamble). For example, when the UE is inside of the NTZ, if a fourth quality (a received signal strength) of the NUL of the cell is below the power value, and if the one or more frequencies of the SUL of the cell is restricted (as shown in other examples of in this specification), the UE may not select the SUL of the cell for uplink transmission (e.g., for transmission of a random access preamble), the UE may select the NUL of the cell for uplink transmission (e.g., for transmission of a random access preamble), the UE may not transmit any uplink signal to the cell, the UE may select another cell, and/or the UE may perform transmission of the uplink signal to the another cell.

In an example, based on the one or more second messages and/or on the one or more first messages, the UE may determine whether the one or more configured frequencies (or which one or more frequency bands, which one or more frequency ranges) configured in the cell for the one or more uplink carriers overlaps (comprises partially, entirely) at least a portion of the one or more restricted frequencies.

In a first example, the one or more configured frequencies ranges may comprise a frequency range A (e.g., from 511.1 MHz to 531.6 MHz) for the first uplink carrier, a frequency range B (e.g., from 813.4 MHz to 913.4 MHz) for the second uplink carrier, and/or the like. For example, the second information may indicate one or more restricted frequency ranges. The one or more restricted frequency ranges may comprise a first restricted frequency range (e.g., from 509.1 MHz to 515.6 MHz), a second restricted frequency range (e.g., from 701.1 MHz to 711.6 MHz), and/or the like. Because one or more first uplink frequencies of the first uplink carrier comprise a portion (e.g., from 511.1 MHz to 515.6 MHz) of the one or more restricted frequencies, the UE may determine at least one of that that a portion of the one or more first uplink frequencies for the first uplink carrier of the cell are restricted, that the first uplink carrier (e.g., the NUL and/or the SUL) of the cell is restricted (barred),that an uplink carrier (e.g., the NUL and/or the SUL), and/or the like.

In a second example, the one or more configured frequencies ranges may comprise a frequency range A (e.g., from 511.1 MHz to 531.6 MHz) for the first uplink carrier, a frequency range B (e.g., from 813.4 MHz to 913.4 MHz) for the second uplink carrier, and/or the like. For example, the second information may indicate one or more restricted frequency ranges. The one or more restricted frequency ranges may comprise a first restricted frequency range (e.g., from 509.1 MHz to 515.6 MHz), a second restricted frequency range (e.g., from 701.1 MHz to 711.6 MHz), and/or the like. Because one or more second uplink frequencies of the second uplink carrier does not comprise (overlap) a (any) portion (e.g., from 511.1 MHz to 515.6 MHz) of the one or more restricted frequencies, the UE may determine at least one of that that a (any) portion of the one or more second uplink frequencies for the second uplink carrier of the cell are not restricted, that the second uplink carrier (e.g., the NUL and/or the SUL) of the cell is allowed (not restricted (barred)), and/or the like.

Example embodiments of FIG. 19 may help in reducing an amount of time during which a UE cannot communicate with a network if the UE is configured with information associated with a NTZ, may help in selecting an uplink resource when one or more uplink resources are restricted due to the NTZ, and/or may help in preventing unintended transmission when the UE is inside the NTZ.

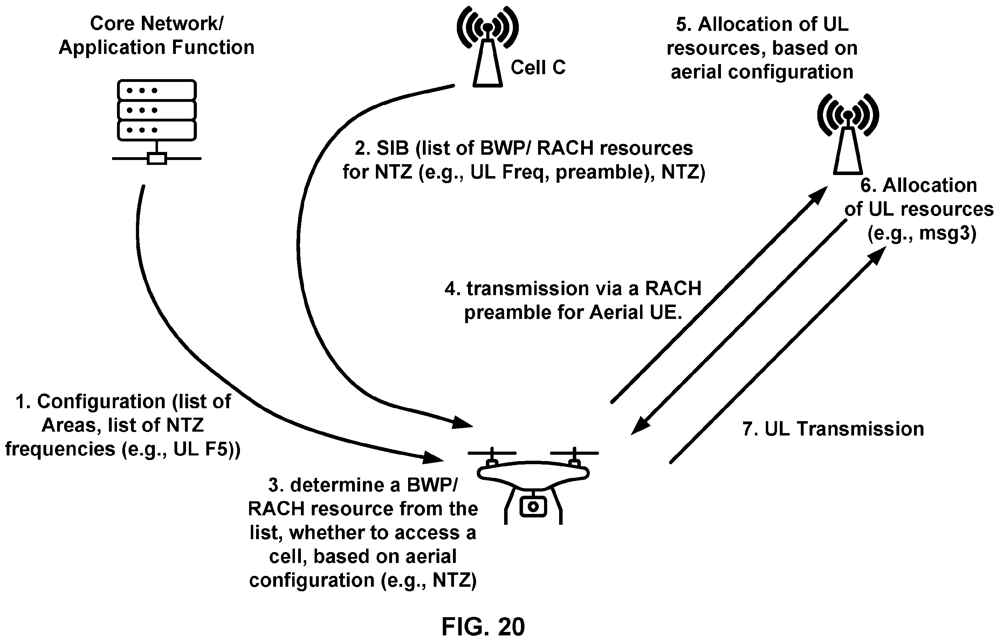

FIG. 20 illustrates an example as per an aspect of an embodiment of the present disclosure. In an example, when a UE transmits an uplink signal using one or more examples described earlier, a base station may allocate an uplink resource for the UE, after receiving the uplink signal. If the UE is inside an NTZ, and if the uplink resource comprises at least a portion of one or more restricted frequencies of the UE, this may cause unwarranted interference. In an embodiment, the base station may allocate one or more uplink resources for an aerial UE and/or the base station may determine whether an uplink transmission is done by the aerial UE, based on determining whether the one or more uplink resources is used or not. This may help the base station in preventing allocation of the uplink resource for the UE in the NTZ. For brevity, based on the other part of the present disclosure, redundant details will be omitted.

In an example, the UE may receive the one or more first message (as shown in the example of the FIG. 19).

In an example, the UE may receive the one or more second messages (as shown in the example of the FIG. 19). The one or more second messages may further comprise:
- one or more resources for random access procedure. For example, this may indicate one or more random access resources. For example, for each of the one or more random access resources, this may indicate one or more random access preambles. For example, this may indicate one or more random access preambles allocated for one or more UEs in the NTZ, one or more random access preambles allocated for one or more aerial UEs, and/or the like. For example, this may indicate a range (e.g., from 10-20, e.g., random access preambles with index from 10 to 20) of the one or more random access preambles allocated for the one or more UEs and/or the one or more aerial UEs. For example, if the UE is inside the NTZ and/or if the UE is an aerial UE type, the UE may select a random access preamble from the range. For example, if the UE is not inside the NTZ and/or if the UE is not the aerial UE type, the UE may not select a random access preamble from the range. In other example, this may indicate one or more SSBs associated with an random access procedure, which are allocated for the one or more UEs inside the NTZ and/or for the one or more aerial UEs. In other example, this may indicate one or more random access occasions associated with the random access procedure, which are allocated for the one or more UEs inside the NTZ and/or for the one or more aerial UEs. In other example, this may indicate one or more PRACH resources associated with the random access procedure, which are allocated for the one or more UEs inside the NTZ and/or for the one or more aerial UEs. If the UE is inside the NTZ and/or the aerial UE type, the UE may select a random access resource indicated by the one or more PRACH resources and/or by the one or more random access occasions, and/or by the one or more SSBS, when the UE initiates the random access procedure and/or when the UE transmits a random access preamble. If the UE is not inside the NTZ and/or the aerial UE type, the UE may not select a random access resource indicated by the one or more PRACH resources and/or by the one or more random access occasions, and/or by the one or more SSBS, when the UE initiates the random access procedure and/or when the UE transmits a random access preamble.

In an example, the UE may determine whether the UE is inside (enters, near) the NTZ (e.g., one or more areas indicated by the first information). For example, the UE may use one or more examples as shown in the FIG. 19.

Reverting to the FIG. 20, in an example, if the UE determines that the UE is inside the NTZ, based on the second information (e.g., one or more information indicating one or more restricted frequencies for the UE in the NTZ and/or for the aerial UE type), the UE may determine whether one or more uplink resources of the cell is restricted, whether one or more uplink frequencies of the cell are restricted, whether one or more random access resource of the cell is restricted, and/or the like. For example, the UE may determine whether one or more configured frequencies of one or more configured random access resources of the cell comprise at least one frequency of the one or more restricted frequencies.

In an example, the one or more second messages may comprise one or more RRC parameters. For example, the one or more RRC parameters may comprise one or more RACH (PRACH) configurations. A RACH configuration of the one or more RACH configurations may comprise one or more:
- totalNumberofRA-Preamble. This may indicate a number of random access preambles of the RACH configuration.
- rsrp-ThresholdSSB. The UE may select a SS block and corresponding PRACH resource for path-loss estimation and transmission based on SS blocks that satisfies this value.
- RestrictedSetConfig. This may indicate at least one of unrestricedSet, restrictedSetTypeA, restrictedTypeB, and/or the like. This may be associated with physical layer procedure in determining cyclic shift during random access procedure.
- msg1-FDM. This may indicate a number of PRACH transmission occasions.
- msg1-FrequencyStart. This may indicate offset of lowest PRACH transmission occasion in frequency domain with respective to PRB0.

In an example, based on the RACH configuration of a random access resource of the one or more random access resources of the cell and/or based on the one or more first messages and/or based on the one or more second messages, the UE may determine whether the random access resource is allowed for the UE, whether the random access resource is restricted, whether the UE can select the random access resource, and/or the like.

For example, a first RACH configuration (of the one or more RACH configurations) may indicate a first RACH range of a first random access resource (of the one or more random access resources). For example, the first RACH (frequency) range may indicate one or more first RACH frequencies (e.g., from 1000 MHz to 1100 MHz) of the first RACH configuration. For example, a second RACH configuration (of the one or more RACH configurations) may indicate a second RACH range of a second random access resource (of the one or more random access resources). For example, the second RACH (frequency) range may indicate one or more second RACH frequencies (e.g., from 1500 MHz to 1600 MHz) of the second RACH configuration.

In an example, the first RACH configuration and/or the second RACH configuration may be associated with a NUL carrier of the cell. In another example, the first RACH configuration and/or the second RACH configuration may be associated with a SUL carrier of the cell. In another example, the first RACH configuration may be associated with the NUL carrier and/or the second RACH configuration may be associated with the SUL carrier of the cell. In another example, the first RACH configuration may be associated with the SUL carrier and/or the second RACH configuration may be associated with the NUL carrier of the cell.

In an example, the UE may have one or more data packets to transmit to an application server. In another example, the UE may have one or more signalling messages (e.g., RRC messages, NAS messages). In another example, the UE may need to send a BSR, initiate a SR (scheduling request) procedure, initiate a beam failure recovery procedure, and/or the like. In these cases, the UE may determine to initiate a random access procedure.

Based on determining to initiate the random access procedure, the UE may select a random access resource for the random access procedure, among the one or more random access resources. For selection of the random access resources, the UE may determine one or more candidate random access resource among the one or more random access resources. For example, the UE may use at least one of the first information, the second information, the one or more RACH configurations, to determine the one or more candidate random access resources.

For example, the UE may determine whether the UE is in the NTZ or not, based on the first information. For example, the first information may indicate one or more NTZ cells, one or more NTZ TAs, one or more geographical coordinates associated with the NTZ. For example, if the UE detects a cell of the one or more NTZ cells, if the UE camps on the cell of the one or more NTZ cells, if the UE detects a TA (by receiving system information of the cell) of the one or more NTZ TAs, if the UE camps on the cell indicating the TA of the one or more NTZ TAs, if the UE determines that the UE is inside of a geographical coordinates of the one or more geographical coordinates, the UE may determine that the UE is inside (enters, within, in) the NTZ. In other cases, the UE may determine that the UE is not inside the NTZ.

In an example, if the UE determines that the UE is inside the NTZ, the UE may determine whether one or more first random access resources are restricted, whether one or more second random access resources are not restricted, and/or the like. For example, based on the second information, for each random access resource of the one or more random access resources, the UE may determine whether the each random access resource is a candidate random access resource of the one or more candidate random access resources. For example, based on that the second information indicates a restricted range (e.g., from frequency 1050 MHz to 1110 MHz), and/or based on that the restricted range comprise (overlap) at least a portion of the first RACH range of the first random access resource, the UE may determine that the first random access resource is not the candidate random access resource, and/or the like. For example, based on that the second information indicates the restricted range (e.g., from frequency 1050 MHz to 1110 MHz), and/or based on that the restricted range does not comprise (overlap) at least a (any) portion of the second RACH range of the second random access resource, the UE may determine that the second random access resource is the candidate random access resource, and/or the like.

In an example, based on that the one or more first random access resources are restricted and/or based on that the one or more first random access resources are not the one or more candidate random access resource, the UE may consider (determine) that an associated uplink carrier (e.g., the NUL carrier, the SUL carrier, and/or the like) of the one or more first random access resource is restricted, and/or may not use the associated uplink carrier for transmitting an uplink signal, may exclude one or more uplink resource of the associated uplink carrier from available uplink resource. In an example, based on that the one or more first random access resources are restricted and/or based on that the one or more first random access resources are not the one or more candidate random access resource, the UE may consider (determine) that an associated BWP of the one or more first random access resource is restricted, and/or may not use the associated BWP for transmitting an uplink signal, may exclude one or more uplink resource of the associated BWP from available uplink resource.

In an example, based on that the one or more second random access resources are not restricted and/or based on that the one or more second random access resources are the one or more candidate random access resources, the UE may consider (determine) that an associated uplink carrier (e.g., the NUL carrier, the SUL carrier, and/or the like) of the one or more second random access resource are not restricted, and/or may use the associated uplink carrier for transmitting an uplink signal, may not exclude one or more uplink resource of the associated uplink carrier from available uplink resource. In an example, based on that the one or more second random access resources are not restricted and/or based on that the one or more second random access resources are the one or more candidate random access resource, the UE may consider (determine) that an associated BWP of the one or more second random access resources are not restricted, and/or may use the associated BWP for transmitting an uplink signal, may not exclude one or more uplink resource of the associated BWP from available uplink resource.

In an example, the UE may select one candidate random access resource among the one or more candidate random access resources. For example, based on that the second random access resource is not restricted, based on that the one or more candidate random access resources comprise the second random access resource, and/or the like, the UE may select the second random access resource for the random access procedure and/or may transmit an random access preamble of the second random access resource and/or via the second random access resource.

In an example, the UE may not use one or more random access resources which are not the one or more candidate random access resources. For example, based on that the first random access resource is restricted, based on that the one or more candidate random access resources do not comprise the first random access resource, and/or the like, the UE may not select the first random access resource for the random access procedure and/or may not transmit a random access preamble of the first random access resource and/or via the first random access resource.

In an example, when the UE moves out of the NTZ, the UE may re-determine whether the one or more first random access resources are restricted or not, may determine that the one or more first random access resources are not restricted, may add the one or more first random access resources to the one or more candidate random access resources.

In an example, the UE may transmit the random access preamble via the second random access resource. For example, the UE may use a second RACH configuration of the second random access resource. For example, the second RACH configuration may indicate one or more NTZ random access preambles allocated to one or more UEs in the NTZ and/or to one or more aerial UEs and/or one or more non-NTZ random access preamble. For example, based on that the UE is inside the NTZ and/or based on that the UE is an aerial UE type, the UE may determine to use the one or more NTZ random access preambles and/or may transmit a NTZ random access preamble of the one or more NTZ random access preambles, via the second random access resource. For example, based on that the UE is outside the NTZ and/or based on that the UE is not an aerial UE type, the UE may determine to use the one or more non-NTZ random access preambles and/or may transmit a non-NTZ random access preamble of the one or more non-NTZ random access preambles, via the second random access resource and/or via the first random access resource.

In an example, a base station may receive the NTZ random access preamble transmitted by the UE. Based on that the NTZ random access preamble is one of the one or more NTZ random access preambles, the base station may determine that the NTZ random access preamble is transmitted by the UE in the NTZ. Based on determining that the UE is in the NTZ, the base station may allocate to the UE an uplink resource (e.g., a resource for RACH message 3). For example, the uplink resource may not comprise (be associated) with the one or more restricted frequencies.

In an example, a base station may receive the non-NTZ random access preamble transmitted by the UE. Based on that the non-NTZ random access preamble is one of the one or more non-NTZ random access preambles, the base station may determine that the non-NTZ random access preamble is transmitted by the UE no in the NTZ and/or the UE which is not the aerial UE type, and/or the like. Based on determining that the UE is not in the NTZ, the base station may allocate to the UE an uplink resource (e.g., a resource for RACH message 3). For example, the uplink resource may or may not comprise (be associated) with the one or more restricted frequencies.

For example, when both NUL and SUL of a cell is restricted (e.g., barred), the UE may consider the cell as barred, and/or the UE may not send any uplink signal to the cell and/or the UE may select other cell.

Example embodiments of FIG. 20 may help in assisting the UE to select an random access resource (or a BWP, a UL carrier) that can be used while the UE is inside the NTZ, may help a base station whether an random access procedure is triggered by the UE inside the NTZ, and/or may help in preventing allocation of radio resource which is restricted to the UE.

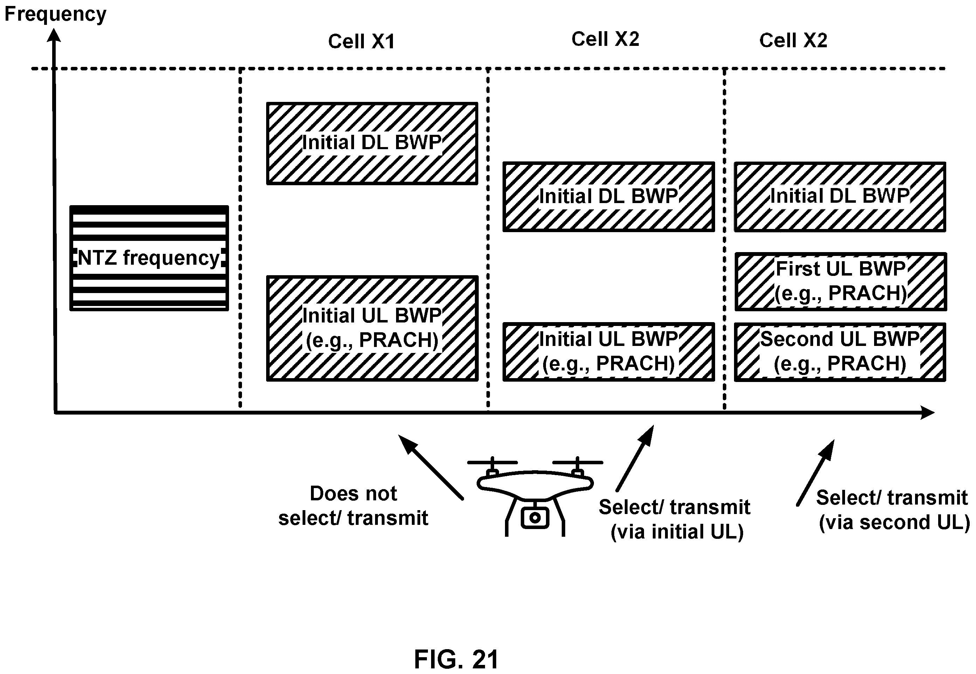

FIG. 21 illustrates an example as per an aspect of an embodiment of the present disclosure. In an example, different cells may use different configurations for the one or more cells. If a UE determines whether each of the one or more cells without consideration of the different configurations (e.g., TDD, FDD, UL carrier, DL carrier, and/or the like), the UE may experience service interruption more often. For brevity, based on the other part of the present disclosure, redundant details will be omitted.

In an example, a network may comprise one or more radio access networks (e.g., one or more base stations). The one or more radio access networks may comprise (deploy, use) one or more cells. The one or more cells may comprise a first cell (cell X1), a second cell (cell X2), a third cell (cell X3), and/or the like.

In an example, a UE may receive the one or more first messages (as shown in FIG 19, 20). Revering to the FIG. 21, the second information of the one or more first messages may indicate the one or more restricted frequencies (e.g., the NTZ frequency, the NTZ frequency bands, the one or more NTZ frequencies, the one or more restricted NTZ frequency ranges, and/or the like). For example, the second information may indicate a first NTZ range (e.g., from 2.1 GHz to 2.2 GHZ).

In an example, the one or more cells may broadcast one or more RRC messages. The one or more RRC messages may comprise one or more configuration information of the one or more cells. For example, the one or more RRC messages comprise a first RRC message, a second RRC message, a third RRC message, and/or the like. The one or more configuration information may indicate one or more BWP information (or one or more carriers) of the one or more cells.

For example, the first RRC message may comprise a first configuration information of the one or more configuration information, indicating one or more first parameters of one or more first BWPs (or/of one or more first carriers) of the first cell. The one or more first BWPs may comprise a first UL BWP (and/or a first UL carrier) and/or a first DL BWP (and/or a first DL carrier). The one or more first configuration information may indicate one or more first frequency ranges of the one or more first BWPs (or one or more first carriers). For example, the one or more first parameters may comprise a first UL range (e.g., from frequency 2.05 GHz to frequency 2.15 GHz) for the first UL BWP (or for the first UL carrier) and/or a first DL range (e.g., from frequency 2.3 GHz to frequency 2.4 GHz) for the first DL BWP (or for the first DL carrier).

For example, the second RRC message may comprise a second configuration information of the one or more configuration information, indicating one or more second parameters of one or more second BWPs (or/of one or more second carriers) of the second cell. The one or more second BWPs may comprise a second UL BWP (and/or a second UL carrier) and/or a second DL BWP (and/or a second DL carrier). The one or more second configuration information may indicate one or more second frequency ranges of the one or more second BWPs (or one or more second carriers). For example, the one or more second parameters may comprise a second UL range (e.g., from frequency 2.00 GHz to frequency 2.05 GHz) for the second UL BWP (or for the second UL carrier) and/or a second DL range (e.g., from frequency 2.15 GHz to frequency 2.3 GHz) for the second DL BWP (or for the second DL carrier).

For example, the third RRC message may comprise a third configuration information of the one or more configuration information, indicating one or more third parameters of one or more third BWPs (or/of one or more third carriers) of the third cell. The one or more third BWPs may comprise a third UL BWP (and/or a third UL carrier) and/or a third DL BWP (and/or a third DL carrier) and/or a fourth UL BWP (and/or a fourth UL carrier). The one or more third configuration information may indicate one or more third frequency ranges of the one or more third BWPs (or one or more third carriers). For example, the one or more third parameters may comprise a third UL range (e.g., from frequency 2.00 GHz to frequency 2.05 GHz) for the third UL BWP (or for the third UL carrier) and/or a third DL range (e.g., from frequency 2.15 GHz to frequency 2.3 GHz) for the third DL BWP (or for the third DL carrier) and/or a fourth UL range (e.g., from frequency 2.1 GHz to frequency 2.15 GHz) for the fourth UL BWP (or for the fourth UL carrier).

In an example, based on the one or more RRC messages, and/or the one or more first messages, the UE determines whether a carrier is restricted, whether a BWP is restricted. In an example, based on the one or more RRC messages, and/or the one or more first messages, the UE determines which carrier to use for uplink transmission, which BWP to use for uplink transmission.

For example, based on that the NTZ frequencies comprises a portion of the first UL BWP (or first UL carrier), and/or based on that the portion of the first UL BWP (or first UL carrier) comprise partially the NTZ frequencies, the UE may determine that the first UL BWP (or the first UL carrier) is restricted (e.g., prohibited, cannot be selected) for the uplink transmission and/or may not use (select, transmit) the first UL BWP (or the first UL carrier) for a random access procedure (e.g., transmission of random access preamble). In an example, based on that the first UL BWP (or the first UL carrier) is restricted for the UE and/or based on that the first cell does not have any UL BWP (or any UL carrier) allowed for the UE to transmit, the UE may consider the first cell as barred, and/or the UE may select other cells than the first cell, if the UE is inside the NTZ.

For example, in response to that the NTZ frequencies comprises a portion of the second DL BWP (or second DL carrier) of the second cell, the UE may determine whether second cell uses (is configured with) uplink frequencies which is different from downlink frequencies of the second cell. Based on that the second cell uses different frequencies for uplink and for downlink, the UE may determine whether the second UL BWP (or the second UL carrier) of the second cell comprises at least a portion of the NTZ frequencies. Based on that the portion of the second UL BWP (or the second UL carrier) does not overlap with the NTZ frequencies, the UE may determine that the second UL BWP (or the second UL carrier) is not restricted (e.g., prohibited, cannot be selected) for the uplink transmission and/or may use (select, transmit) the second UL BWP (or the second UL carrier) for a random access procedure (e.g., transmission of random access preamble).

For example, for each UL BWP (or each UL carrier) of the third cell, the UE may determine whether the each UL BWP (or the each UL carrier) overlaps (or comprise at least a portion of) the NTZ frequencies. Based on that the portion of the third UL BWP (or the third UL carrier) does not overlap with the NTZ frequencies, the UE may determine that the third UL BWP (or the third UL carrier) is not restricted (e.g., prohibited, cannot be selected) for the uplink transmission and/or may use (select, transmit) the third UL BWP (or the third UL carrier) for a random access procedure (e.g., transmission of random access preamble). Based on that the portion of the fourth UL BWP (or the fourth UL carrier) overlaps with the NTZ frequencies, the UE may determine that the fourth UL BWP (or the fourth UL carrier) is restricted (e.g., prohibited, cannot be selected) for the uplink transmission and/or may not use (select, transmit) the fourth UL BWP (or the fourth UL carrier) for a random access procedure (e.g., transmission of random access preamble).

Example embodiments of FIG. 21 may help in reducing an amount of time during which a UE cannot communicate with a network if the UE is configured with information associated with a NTZ, may help in selecting an uplink resource when one or more uplink resources are restricted due to the NTZ, and/or may help in preventing unintended transmission when the UE is inside the NTZ.

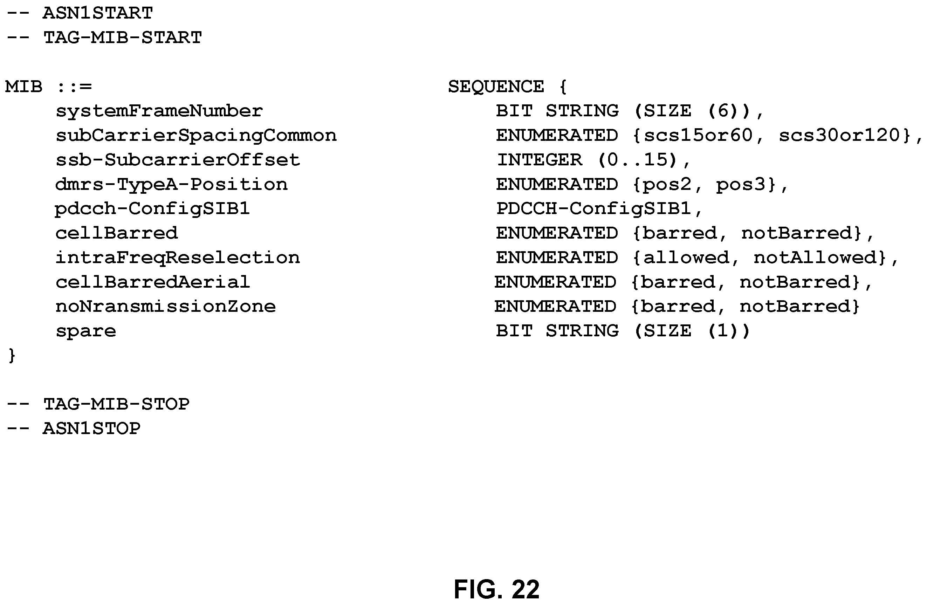

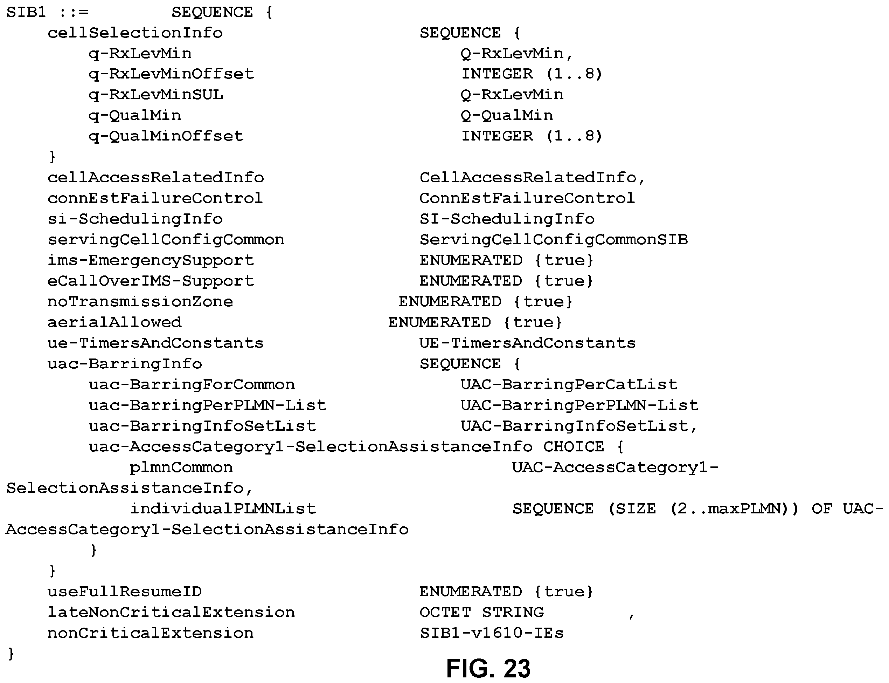

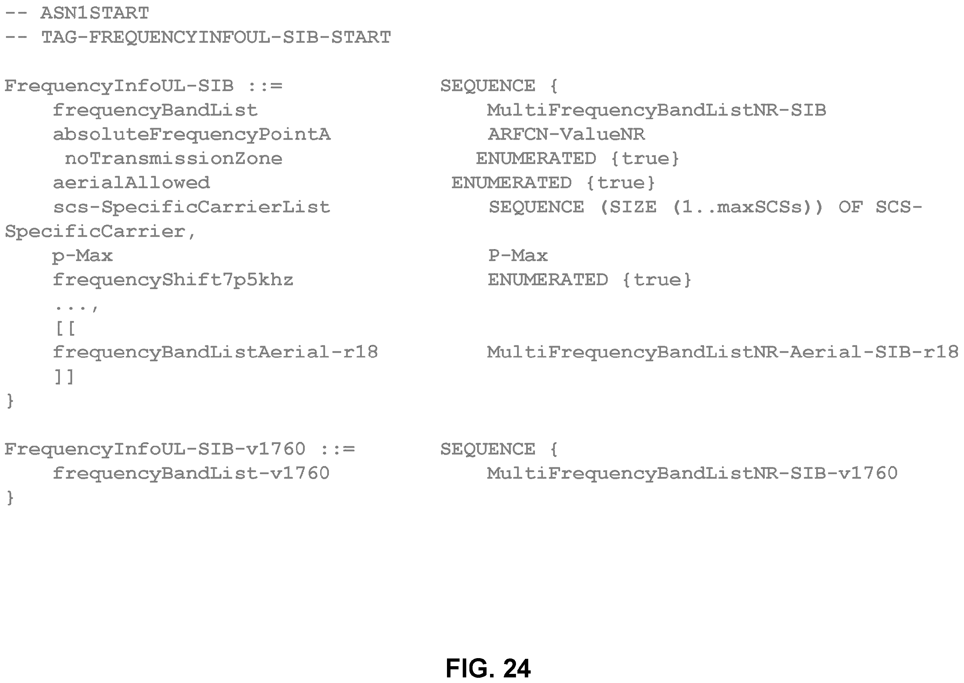

FIG. 22, FIG. 23, and FIG. 24 illustrate an example as per an aspect of an embodiment of the present disclosure. In an example (E.g., as shown in the examples of FIG. 19, FIG. 20, FIG. 21), the UE may receive the one or more second messages. The one or more second messages may be at least one of the MIB, the SIB 1, the one or more RRC messages, and/or the like.

The one or more second messages may indicate whether the UE is allowed access (use, transmit to) the cell, when the UE is the aerial UE type (e.g., a UE attached/ embedded/ integrated to a UAV, drone and/or the like), when the UE is inside the NTZ, and/or the like. For example, if the UE is the aerial UE type and/or the UE is inside the NTZ, the UE may not select the cell and/or may not transmit to the cell.

The one or more second messages may indicate whether the cell belongs to the NTZ and/or whether a portion of the cell comprises the NTZ. For example, if the cell indicates that the cell belongs to the NTZ, if the UE is the aerial UE type and/or if the UE is configured not to select one or more cells associated with the NTZ, the UE may not select the cell and/or may not transmit to the cell. For example, if the cell indicates that the portion of the cell comprises the NTZ, if the UE is the aerial UE type, the UE may select the cell and/or may monitor whether the UE is in the NTZ while the UE is inside the cell. For example, if the cell indicates that the cell belongs to the NTZ, if the UE is not the aerial UE type and/or if the UE is not configured not to select one or more cells associated with the NTZ, the UE may select the cell and/or may transmit to the cell.

The one or more second messages may indicate one or more configured operating bands (e.g., frequencyBandList, N1, N2, N80, N81...) of one or more uplink carriers of the cell. For example, the one or more first message may indicate one or more restricted frequencies and/or one or more restricted operating bands (e.g., N2, N81). For example, the UE may determine that the one or more candidate operating bands are the one or more configured operating bands of the cell except (excluding) the one or more restricted operating bands and/or the UE may select a operating band among the one or more candidate operating bands of the cell, the one or more restricted operating bands. For example, because N2 and/or N81 are restricted operating bands, the UE may determine that the N2 and/or N81 are not the operating bands of the cell. For example, because N2 and/or N81 are restricted operating bands, because the one or more second messages indicate N1, N2, N80 and/or N81, the UE may determine that the N1 and/or N80 are the operating bands of the cell and/or the UE may determine that the N2 and/or N81 are not the operating bands of the cell and/or the UE may select the operating band among the N2 and/or N81. Based on selecting the operating band of the cell, the UE may apply power setting (for uplink transmission) according to one or more parameters (e.g., emission mask, pathloss, maximum transmission power, etc.) of the operating band and/or may transmit uplink signal.

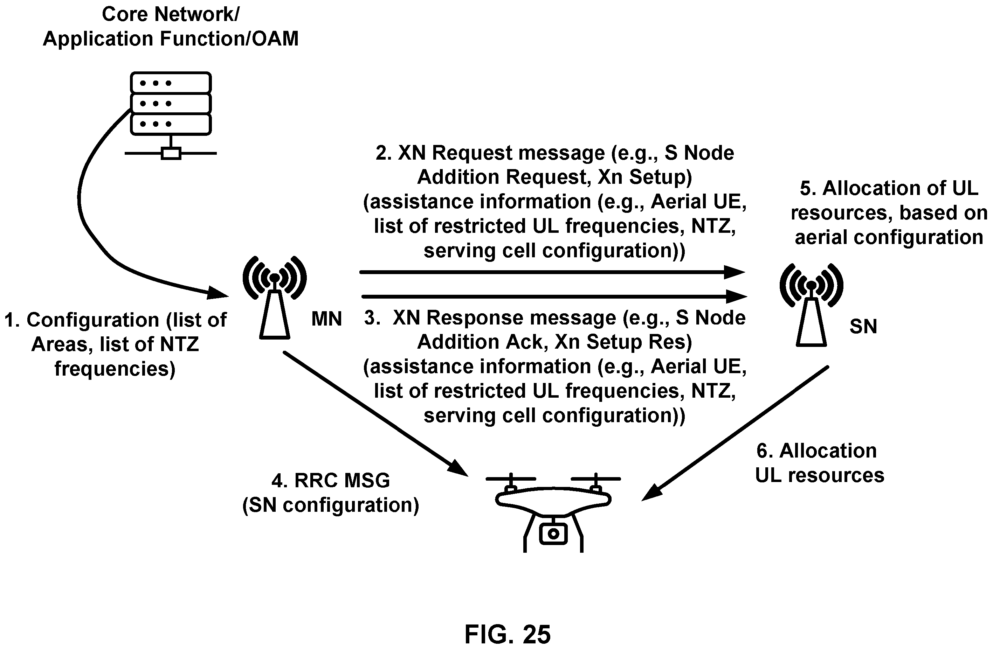

FIG. 25 illustrates an example as per an aspect of an embodiment of the present disclosure. In an example, a network may determine to provide a service to a UE with a QoS that is more reliable and provides a higher bandwidth. For example, because the UE is an aerial UE type, the network may determine more than one base stations for the communication with the UE. In this case, if a base station of the one or more base stations does not have relevant context information of the UE, the base station may allocate an uplink resource which may not be allowable to the UE. For example, if the UE is in RRC Idle mode, the UE may avoid using the one or more restricted frequencies. However, when the UE transits to a RRC connected mode, the base station may allocate one or more uplink resources overlapping with the one or more restricted frequencies. In an embodiment, a first base station of the one or more base stations may deliver a second base station of the one or more base stations, information associated with the NTZ. This may help in reducing waste of radio resource allocation to the UE in the NTZ . For brevity, based on the other part of the present disclosure, redundant details will be omitted.

In an example, the first base station may receive from a network node (e.g., a core network node, an OAM server, an AMF, a PCF, a SMF, and/or the like), a first context message. For example, the first context message may be at least one of S1 interface message, a N1 interface message, and/or the like. For example, the first context message may be at least one of a initial UE context setup request message, a UE context update message, and/or the like. For example, the first base station may receive the first context message, in response to sending a first context request message. For example, the first context request message may be an initial UE message, and/or the initial UE message may comprise one or more NAS messages sent by the UE. For example, the first context message may comprise at least one of:
- one or more capabilities of the UE.
- one or more PDU sessions establish requests.
- one or more restrictions of the UE. For example, this may be at least one of a mobility restriction information, an information associated with the NTZ. For example, this may comprise the first information, the second information, and/or the like. For example, this may indicate whether the UE is the aerial UE type, and/or whether the NTZ should be enforced to the UE, whether the UE is allowed to transmit in the NTZ, whether the UE is allowed to use the one or more restricted frequencies inside the NTZ, and/or the like.

In an example, based on the first context message, the first base station may send a first RRC configuration message. For example, the first RRC configuration message may comprise information of one or more radio bearers established with the UE. In an example, based on the first context message, the first base station may determine whether to send a request to a second base station. For example, if the first base station determines to use additionally one or more resources of the second base station, if the first base station determines to use a plurality of RRC connection with the UE, if the first base station determines to use dual-connectivity with the UE, if the first base station determines to establish (setup) Xn connection with the second base station, and/or the like, the first base station may send the request to the second base station.

For example, the request may be at least one of S-Node addition request message, Xn Setup request message, Xn Setup response message, Xn configuration update request message, Xn configuration update acknowledgement message, and/or the like. For example, the request may comprise one or more assistance information. For example, the one or more assistance information may comprise at least one of the one or more restrictions of the UE, an identifier of the UE, and/or one or more serving cell information of one or more cells operated (served) by the first base station. For example, for each cell of the one or more serving cell, the first base station may indicate to the second base station, whether the each cell comprises one or more areas of the NTZ, whether the each cell partially comprises the one or more areas of the NTZ, information (e.g., frequency range) of one or more uplink carriers of the each cell, information (e.g., frequency range) of one or more uplink BWP of the each cell, and/or the like.

In an example, in response to receiving the request, the second base station (e.g., secondary node) may send a response to the first base station (e.g., master node). For example, the response may be at least one of the S-Node addition acknowledgement (response) message, Xn Setup request message, Xn Setup response message, Xn configuration update request message, Xn configuration update acknowledgement message. For example, the response message may comprise one or more configuration parameters related to a connection of the UE to a secondary node (e.g., the second base station). The response may comprise one or more second assistance information of the second base station. The one or more second assistance information may comprise at least one of one or more serving cell information of one or more cells operated (served) by the second base station. For example, for each cell of the one or more serving cells of the second base station, the second base station may indicate, by the response, to the first base station, whether the each cell comprises one or more areas of the NTZ, whether the each cell partially comprises the one or more areas of the NTZ, information (e.g., frequency range) of one or more uplink carriers of the each cell, information (e.g., frequency range) of one or more uplink BWP of the each cell, and/or the like.

In an example, the first base station may receive the response. Based on that the response comprises the one or more configuration parameters, the first base station may send a RRC message comprising the one or more configuration parameters to the UE. In an example, based on the response, the first base station may determine whether to add one or more cells of the second base station, in the RRC message and/or in the one or more configuration parameters. For example, if a target cell of the second base station uses a frequency overlapping with the one or more restricted frequencies, the first base station may determine not to use the target cell, for the UE, if the UE is inside the NTZ. For example, if a target cell of the second base station does not use a frequency overlapping with the one or more restricted frequencies, the first base station may determine to use the target cell, for the UE, if the UE is inside the NTZ.

In an example, the second base station may determine to allocate one or more uplink resources to the UE. For example, based on receiving a BSR from the UE and/or based on receiving a scheduling request from the UE, the second base station may determine to allocate the one or more uplink resource to the UE. For example, the one or more uplink resources may be one or more resources managed by the second base station. For example, the second base station may, based on the request (e.g., the one or more restrictions, the one or more restricted frequencies), allocate the one or more uplink resources. For example, one or more uplink frequencies associated with the one or more uplink resources may not comprise a (any) portion of the one or more restricted frequencies. For example, if a first candidate uplink resource comprise the portion of the one or more restricted frequencies, the one or more uplink resource may not comprise the first candidate uplink resource and/or the second base station may not send an uplink resource allocation message indicating the first candidate uplink resource. For example, if a second candidate uplink resource does not comprise the portion of the one or more restricted frequencies, the one or more uplink resource may comprise the second candidate uplink resource and/or the second base station may send an uplink resource allocation message indicating the second candidate uplink resource.

In another example, the UE may be configured with a plurality of base stations for dual connectivity and/or the UE may be configured with a plurality of cells. For example, when the UE is outside of the location of the NTZ, the UE may be configured with the plurality of base stations, a plurality of cells, a plurality of secondary cells, a plurality of cell groups, and/or the like. For example, the UE may, based on the first information, determine whether the UE enters the location of the NTZ. In response to entering the location of the NTZ, the UE may deactivate at least a first base station of the plurality of base stations, a first cell of the plurality of cells, a first secondary cell of the plurality of cells, a first cell group of the plurality of cell groups. For example, the first base station, the first cell, the first secondary cell, the first cell group may use an uplink resource (e.g., an uplink carrier, an uplink BWP) which may comprise at least a portion of the one or more restricted frequencies. In response to entering the location of the NTZ, the UE may not deactivate at least a second base station of the plurality of base stations, a second cell of the plurality of cells, a second secondary cell of the plurality of cells, a second cell group of the plurality of cell groups, and may transmit an uplink signal. For example, the second base station, the second cell, the second secondary cell, the second cell group may not use the uplink resource (e.g., an uplink carrier, an uplink BWP) which may comprise at least a portion of the one or more restricted frequencies.

Example embodiments of FIG. 25 may help in preventing unintended transmission when the UE is inside the NTZ, which may be caused when one or more base stations are involved in providing services to the UE.

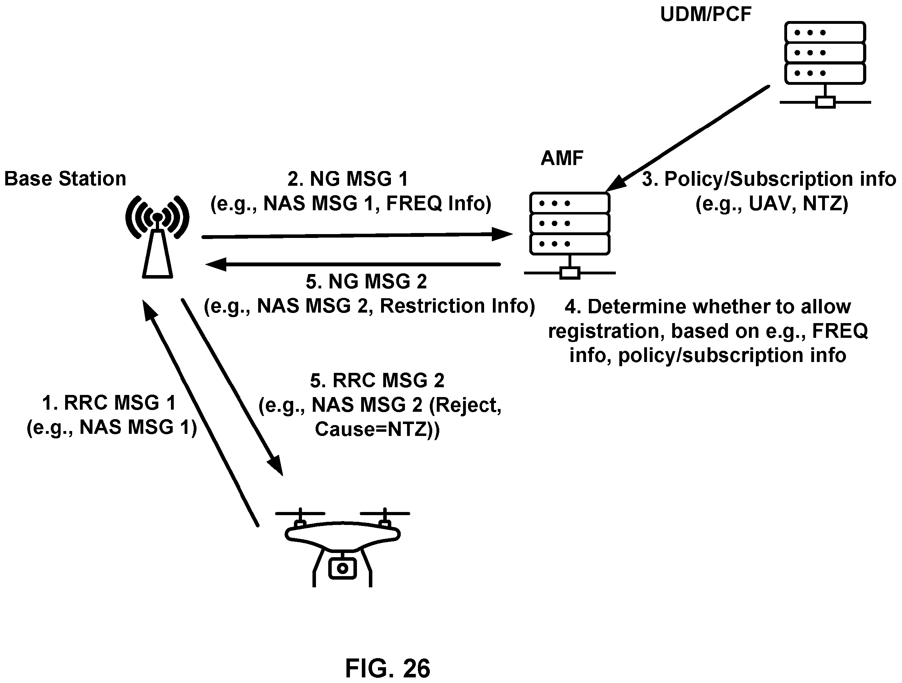

FIG. 26 illustrates an example as per an aspect of an embodiment of the present disclosure. In an example, when a UE transit from a RRC Idle (or RRC inactive) state to a RRC connected state, a base station may not have information of the UE. For example, the base station may not be able to determine whether the UE is an aerial UE type, and/or restrictions associated with a NTZ need to be applied to the UE. In an embodiment, the base station may inform a core network regarding one or more frequencies used by the UE for the uplink. This may help the core network to determine whether the UE can be allowed or not. For brevity, based on the other part of the present disclosure, redundant details will be omitted.

In an example, a UE may determine to camp on a cell. Based on the camping on the cell, the UE may determine to perform a registration procedure, a service request procedure, a PDU session establishment procedure, and/or the like. For example, the UE may send a first NAS message to the core network node (e.g., an AMF, an SMF, and/or the like). For example, to transmit the first NAS message, the UE may establish an RRC connection with the base station. For example, to establish the RRC connection, the UE may transmit a first RRC message to the base station via a first cell of the base station. For example, the first RRC message may be at least one of the RRC setup request, RRC resume request, and/or the like. For example, after establishing the RRC connection, the UE may send to the base station, the first NAS message. In response to receiving the first NAS message, the UE may send a first NG message to the core network node. For example, the first NG message may be at least one of a initial UE message. The first NG message may comprise the NAS message, information of the first cell, and/or the like. For example, the information of the first cell may indicate one or more uplink frequencies (e.g., frequency range) of the first cell, one or more uplink carriers, one or more operating bands of the first cell, location of the first cell, information indicating whether the first cell is in the NTZ, whether the first cell comprises a portion of the NTZ, and/or the like.

In an example, the core network node may receive the first NG message. In response to receiving the first NG message, the core network node may determine whether the UE is an aerial UE type, and/or whether the NTZ applies to the UE. For example, the core network node may receive from a UDM (or a PCF), a subscription information (or a policy information). For example, the subscription information may indicate whether the UE is the aerial UE type, whether the NTZ applies to the UE, one or more location of the NTZ applicable to the UE, one or more restricted frequencies to the UE.

In an example, the core network node may determine whether the UE is inside of the NTZ. For example, based on the location information of the first cell, based on the information indicating whether the first cell comprises the NTZ or not, the core network node may determine whether the UE is inside the NTZ or not.

In an example, based on that the UE is inside the NTZ, the core network node may determine whether the first cell (or one or more frequencies of the first cell, one or more uplink carrier of the first cell) is allowable and/or needs to be restricted, and/or the like. For example, if the one or more restricted frequency (frequency band, operating frequencies, operating bands, frequency range) comprises at least a portion of the frequency range of the first cell, the core network node may determine that the UE is not allowed to access the first cell, that the UE's request needs to be rejected, and/or the like. For example, the core network node may determine to reject the UE, the request of the UE, the first NAS message, and/or the like. For example, the core network node may construct a second NAS message. For example, the second NAS message may indicate rejection of the service request, rejection of the registration request, rejection of establishment of the PDU session, and/or the like. For example, the second NAS message may comprise a cause value. For example, the cause value may indicate at least one of that the UE is not allowed to operate in the NTZ, that the UE is inside the NTZ, that the UE is not allowed to transmit in the NTZ, that the request is rejected due to the NTZ, and/or the like. For example, the second NAS message may comprise the first information and/or the second information. For example, the second NG message may comprise the one or more restrictions of the UE.

In an example, the core network node may send a second NG message to the base station. For example, the second NG message may comprise the second NAS message. In response to receiving the second NG message, the base station may send the second NAS message to the UE.

In response to receiving the second NAS message, the UE may behave as shown in the examples shown in this specification. In response to receiving the second NG message, the base station may behave as shown in the examples shown in the specification.

Example embodiments of FIG. 26 may help a core network node in determining whether the UE can be admitted to a cell and/or whether to accept a request from the UE.

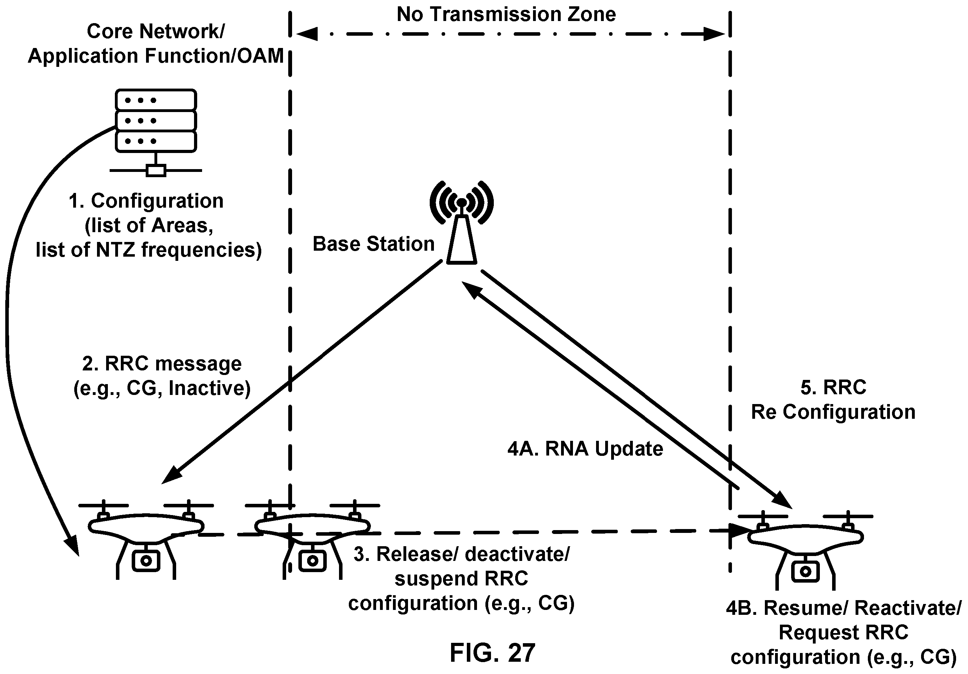

FIG. 27 illustrates an example as per an aspect of an embodiment of the present disclosure. In an example, a UE in a RRC Idle state and/or in a RRC inactive state may be configured with one or more uplink resources. If the UE keeps the one or more uplink resources and uses the one or more uplink resources after moving in to the NTZ, this may cause interferences. In an embodiment, the UE may release one or more configured uplink resources, based on entering the NTZ. This may help efficient use of uplink resources. For brevity, based on the other part of the present disclosure, redundant details will be omitted.

In an example, the UE may receive the one or more first messages and/or the one or more second messages.

In an example, the UE may receive one or more third RRC messages via a first cell from the base station. For example, the one or more third RRC messages may be at least one of a RRC Resume message, a RRC Reconfiguration message, a RRC release message, and/or the like. For example, the one or more third RRC message may comprise at least one of:
- ConfiguredGrantConfig. This information is used to configure uplink transmission without dynamic grant according to two possible schemes. This may indicate one or more configured uplink resources and/or may not indicate one or more dynamic uplink resources. For example, when the UE has a data to transmit, and if the UE has the one or more configured uplink resources, the UE may not request resource allocation and/or may send the data via the one or more configured uplink resources. For example, when the UE has a data to transmit, and if the UE does not have the one or more configured uplink resources, the UE may send a request for resource allocation and/or may send the data via the one or more dynamic uplink resources which is assigned after sending the request. This may comprise one or more uplink resources for a SDT (small data transmission) procedure. The one or more uplink resources for the SDT may be used by the UE, when the UE is in RRC inactive state and/or in RRC idle state and/or the UE has one or more packets to transmit.
- One or more configured control channel resources. For example, this may be at least one of a random access preamble, one of random access resources, one or more RSs (reference symbols), PUCCH resources, and/or the like. For example, when the UE is in RRC idle state and/or in RRC inactive, and if the UE is configured with the one or more configured control channel resources, the UE can use the one or more configured control channel resource and/or may send one or more uplink signals (e.g., UCI, CQl, PMI, and/or feedback) via the one or more configured control channel resource.
- RNA (RAN notification area). This may indicate one or more cells and/or one or mote TAs in the RNA. The UE in RRC inactive state (and/or RRC idle state) can use the one or more configured control channel resources and/or the one or more configured uplink resources.

In an example, the UE may determine whether the UE is inside the NTZ. Based on that the UE is inside the NTZ, the UE may determine whether the UE has the one or more configured uplink resources and/or the one or more configured control channel resources. For example, if the UE determines that the UE has the one or more configured uplink resources and/or the one or more configured control channel resources, if the UE determines that the UE enters (is inside) the NTZ, and/or if the UE is in the one or more cells of the RNA, the UE may determine to release (deactivate, suspend, may not use) the one or more configured uplink resources and/or the one or more configured control channel resources. For example, if the UE determines that the UE has the one or more configured uplink resources and/or the one or more configured control channel resources, if the UE determines that the UE is not in the NTZ, and/or if the UE is in the one or more cells of the RNA, the UE may determine to use (reactivate, resume) the one or more configured uplink resources and/or the one or more configured control channel resources when the UE sends an uplink signal. For example, if the UE determines that the UE does not have the one or more configured uplink resources and/or the one or more configured control channel resources, if the UE determines that the UE enters (is inside) the NTZ, and/or if the UE is in the one or more cells of the RNA, the UE may determine not to trigger a random access procedure and/or a scheduling request procedure and/or a system information request procedure, when the UE has a data to communicate and/or when the UE needs to send a signalling message.

For example, the UE may move into a target cell after receiving the one or more third message. The UE may transit to the RRC inactive state, based on receiving the one or more third messages indicating transition to the RRC inactive state. In an example, the UE may determine whether the UE enters the NTZ. Based on determining that the UE enters the NTZ, the UE may release the one or more configured uplink resources (e.g., configured grant, CG, pools of resources) and/or the one or more configured control channel resources (e.g., PUCCH, SRS, PUSCH resource for CSI reporting), based on that the UE enterers the NTZ and/or based on that the UE is configured with the one or more configured uplink resources and/or the one or more configured control channel resources. Based on determining that the UE does not enter (is not insider the) the NTZ, the UE may not release the one or more configured uplink resources (and/or the one or more configured control channel resources), the UE may keep the one or more configured uplink resources, and/or the UE may send an uplink signal via the one or more configured uplink resources, based on that the UE does not enterer the NTZ and/or based on that the UE is configured with the one or more configured uplink resources and/or the one or more configured control channel resources.

For example, the UE may receive from a serving cell (e.g., while the UE is out of a location of the NTZ) may receive one or more message comprising one or more configuration parameters. The one or more configuration parameters may comprise information of one or more configured BWPs, one or more initial BWPs, one or more default BWPs, and/or the like. In an example, the UE may receive from a base station via the serving cell, one or more activation messages (e.g., a MAC CE, a RRC message) activating one or more active BWPs of the one or more configured BWPs. In an example, the UE may move into a target cell. In an example, the UE may determine whether the UE enters the NTZ. Based on determining that the UE enters the NTZ, the UE may release (or deactivate) the one or more configured BWPs, and/or one or more active BWPs. Based on determining that the UE enters the NTZ, the UE may switch (activate, use) the one or more initial BWPs and/or the one or more default BWPs. Based on determining that the UE does not enter (is not inside the) the NTZ, the UE may not release the one or more configured BWPs (and/or the one or more active BWPs).

In an example, the UE may move from inside of the NTZ to outside of the NTZ. For example, the base station may not know whether the UE released the one or more configured uplink resources while the UE is inside the NTZ. In response to moving out of the NTZ, and/or based on that the UE has received the one or more third RRC messages, the UE may determine to send one or more fourth RRC messages to the base station. For example, the one or more fourth RRC messages may be at least one of a RRC Setup Request message, a RNA update message, a RRC resume request message, UE Assistance information message, and/or the like. For example, if the UE is inside the one or more cells of the RNA, and/or if the UE exits the NTZ, the UE may send the one or more fourth messages. For example, based on the one or more fourth message, the base station may send one or more fifth messages. For example, the one or more fifth message may indicate an updated information indicating one or more updated configured uplink resources. For example, after exiting the NTZ, the UE may send one or more uplink signal, using the one or more updated configured uplink resources.

In another example, the UE may trigger one or more procedure (e.g., a BSR procedure, a random access procedure, a SR procedure, a delay status reporting procedure, and/or the like), while the UE is outside the NTZ. For example, the UE may send a first procedure message (e.g., a SR, a random access preamble, a MAC CE for the one or more procedure) and/or a first signal, during the one or more procedures. During the one or more procedures, and/or while waiting for reception of a response (a random access message 2, an uplink resource allocation, a DCI message, a PDCCH message comprising an identifier of the UE) from a network (e.g., a base station), the UE may determine whether the UE moves into (inside) the NTZ (e.g., an area indicated by the NTZ information, an area of the NTZ) and/or that the UE enters the NTZ. In response to determining, and/or based on that the UE is inside of the NTZ, the UE may abort the one or more procedure, may not perform retransmission of the first procedure message or the first signal, may stop the one or more procedure, may consider the procedure ends unsuccessfully, may release one or more uplink resources (and/or downlink resources, configured resources, configuration) for the one or more procedures, may resume (re-trigger) the one or more procedure after the UE moves out of the NTZ.

Example embodiments of FIG. 27 may help in avoiding the UE to keep a radio configuration that cannot be usable after the UE enters the NTZ, and/or may help in preventing unintended transmission when the UE is inside the NTZ.

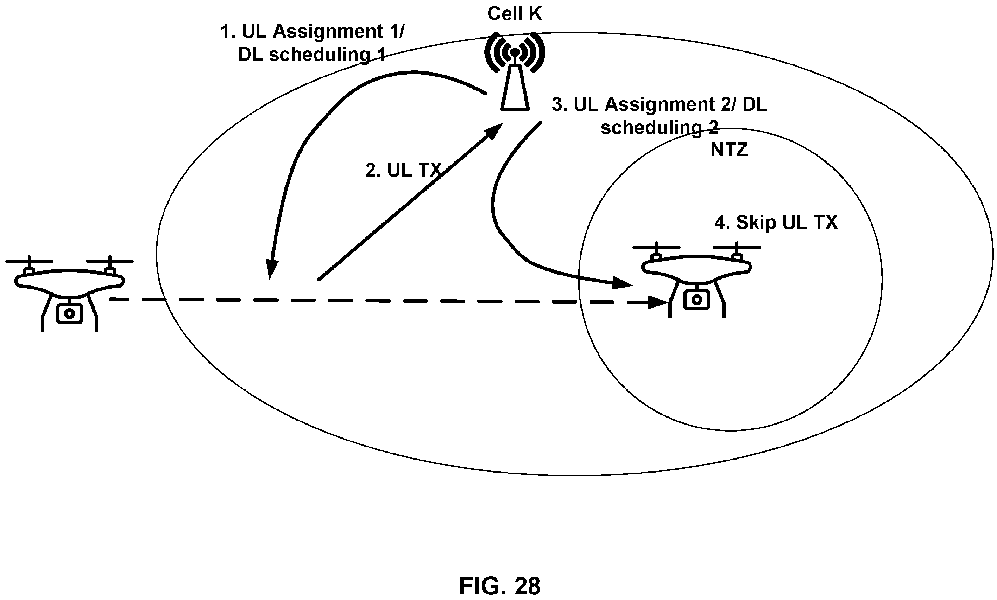

FIG. 28 illustrates an example as per an aspect of an embodiment of the present disclosure. In an example, a UE may receive one or more messages indicating an uplink resource assignment and/or a downlink resource scheduling. Based on determining whether the UE is inside the NTZ or not, the UE may send one or more uplink signals. This may help in reducing interference generated by the UE. For brevity, based on the other part of the present disclosure, redundant details will be omitted.

In an example, the UE may receive one or more resource allocation messages from a base station. For example, the one or more resource allocation messages may comprise one or more DL assignment messages and/or one or more UL grant messages. The UE may receive the one or more resource allocation messages via one or more PDCCHs. For example, the one or more DL assignment messages may indicate one or more downlink resource allocations. For example, a first downlink resource allocation of the one or more downlink resource allocation may indicate a first downlink resource of one or more first downlink frequencies (e.g., a first downlink frequency ranges) and/or a first uplink resource of one or more first uplink frequencies (e.g., a first downlink frequency ranges). For example, the base station may transmit one or more data (signalling, e.g., a MAC PDU) to the UE, via using the first downlink resource. For example, for the one or more data, the first uplink resource may be used for the UE to send an uplink control information (UCI, HARQ ACK/NACK, feedback for the one or more data) to the base station. The one or more first downlink frequencies may comprise at least a first portion of the one or more restricted frequencies and/or the one or more first uplink frequencies may comprise at least a second portion of the one or more restricted frequencies. For example, the one or more UL grant messages may indicate one or more uplink resource allocations. For example, a first uplink resource allocation of the one or more uplink resource allocation may indicate a second uplink resource of one or more third uplink frequencies (e.g., a uplink downlink frequency ranges). The one or more third uplink frequencies may comprise at least a third portion of the one or more restricted frequencies.

In an example, after receiving the one or more resource allocation messages, the UE may determine whether the UE is inside the NTZ. For example, if the UE is inside the NTZ, the UE may determine whether an uplink resource (e.g., the first uplink resource, the second uplink resource) indicated by the one or more resource allocation message comprises at least a part (e.g., portion) of the one or more restricted frequencies. For example, if the UE is inside the NTZ, based on that the uplink resource comprise the second portion (or the third portion) the one or more restricted frequencies, the UE may not send uplink signal via using the first uplink resource and/or the second uplink resource. For example, if the UE is not inside the NTZ, the UE may send the uplink signal via using the first uplink resource and/or the second uplink resource.

Example embodiments of FIG. 28 may help in prevent unnecessary transmission by a UE inside the NTZ.

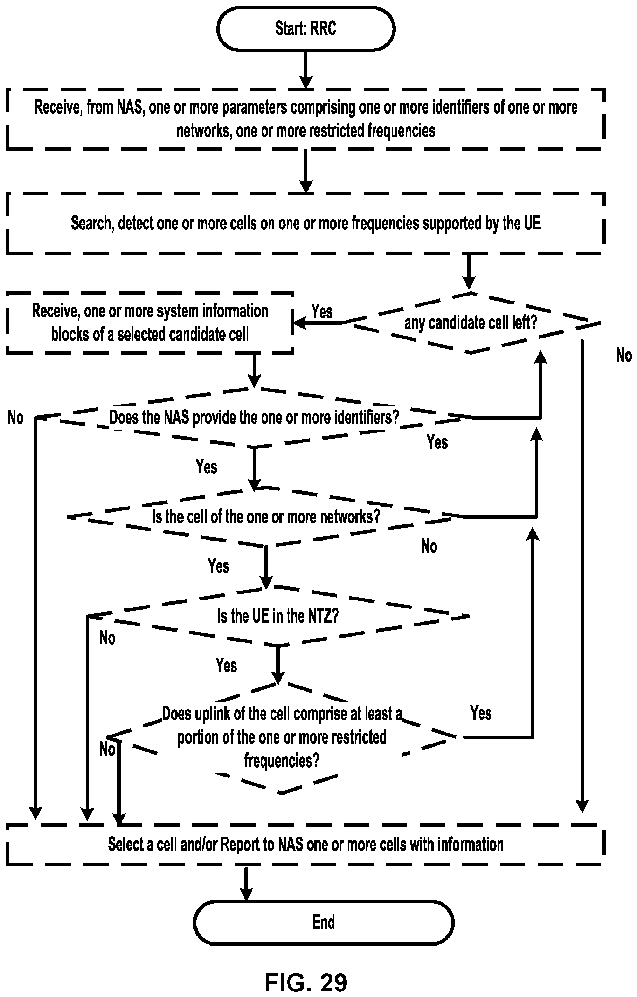

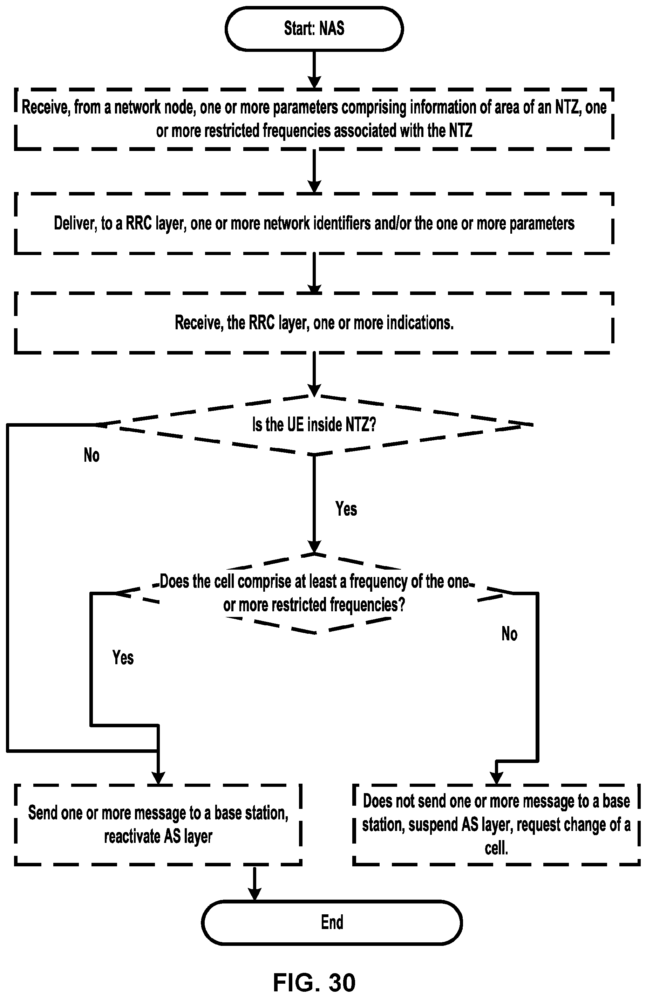

FIG. 29, FIG. 30 illustrate an example as per an aspect of an embodiment of the present disclosure. In an example, a RRC layer (entity) may perform search for one or more cells to camp on and may select a cell from the one or more cells. If the cell is configured with at least one frequency of the one or more restricted frequencies, this may cause the RRC layer (and/or AS layer) to transmit a signal via the at least one frequency, causing interference. In an embodiment, the RRC layer may receive one or more parameters from the NAS. This may help for the UE to adjust transmission. For brevity, based on the other part of the present disclosure, redundant details will be omitted.

In an example, the NAS layer of the UE may receive the one or more first messages, from one or more core network nodes and/or one or more application servers.

In an example, the NAS layer of the UE may power on and/or the NAS layer may change a selected network (e.g., a PLMN, a SNPN, and/or the like). In an example, the NAS layer may deliver to the RRC layer one or more parameters. The one or more parameters may comprise at least one of:
- one or more network identifiers of one or more networks. For example, the one or more networks may be one or one more networks selected by the NAS layer for registration. The one or more network identifiers may be one or more identifiers of one or more PLMNs, one or more identifiers of one or more NPNs (e.g., SNPN, PNI-NPN) and/or one or more CAG (closed access group) IDs.
- The First information. For example, this may indicate one or more areas, one or more cells, one or more TAs associated with the NTZ. For example, in the one or more areas, in the one or more cells, or in the one or more TAs, the UE is not allowed to transmit via the one or more restricted frequencies of the NTZ. For example, this may indicate one or more restricted frequencies inside the NTZ.

In an example, the RRC layer of the UE may receive the one or more parameters from the NAS layer.

In an example, the RRC layer may select, search, detect one or more cells. The one or more cells may be one or more candidate cells for cell reselection and/or cell selection. For example, the UE may search, select, detect the one or more cells, based on the one or more frequencies supported by the UE, based on the one or more network identifiers and/or based on the one or more restricted frequencies. For example, the UE may determine not to search, detect, select a cell, if the cell is using at least a frequency of the one or more restricted frequencies, and/or if the UE is inside the NTA. For example, the UE may determine to search, detect, select a cell, if the cell is using at least a frequency of the one or more restricted frequencies, and/or if the UE is not inside the NTA. For example, the UE may determine not to search, detect, select a cell, if the cell is not associated with the one or more network identifiers and/or if the UE is inside the NTA. For example, the UE may determine to search, detect, select a cell, if the cell is associated with the one or more network identifiers, and/or if the UE is not inside the NTA. For example, the UE may identify whether a cell is associated with a network identifier, based on receiving one or more system information blocks of the cell. For example, if the one or more system information blocks comprises the network identifier, the UE may determine that the cell is associated with the network identifier (or a network indicated by the network identifier).

In an example, the UE may detect one cell per each frequency band (e.g., operating bands) and/or the one cell may be a cell of strongest signal (e.g., RSRP) on the each frequency band. In other example, the UE may detect a plurality of cells. One or more detected cells may be the one or more candidate cells.

In an example, among the one or more candidate cells, the UE may select (determine) a selected cell. For example, the selected cell may be at least one of:
- a first selected cell. The first selected cell may be associated with the one or more network identifiers. For example, if the one or more network identifiers comprises a first value, and/or if the SIB of the first selected cell indicates at least one of the one or more network identifiers, the first selected cell is associated with the one or more network identifiers, belongs to one or more networks of the one or more network identifiers, is of the one or more networks. The first selected cell may not be configured with (using) a (any) of the one or more restricted frequencies.
- a second selected cell. The second selected cell may be associated with the one or more network identifiers. The second selected cell may be configured with (using) at least one of the one or more restricted frequencies. A second location of the UE may be inside of the second selected cell and/or inside the NTZ.
- A third selected cell. The third selected cell may be associated with the one or more network identifiers. The third selected cell may be configured with (using) at least one of the one or more restricted frequencies. A third location of the UE may be inside of the third selected cell and/or outside of the NTZ.
- A fourth selected cell. The fourth selected cell may not be associated with the one or more network identifiers. The fourth selected cell may be configured with (using) at least one of the one or more restricted frequencies. A fourth location of the UE may be inside of the fourth selected cell and/or inside of the NTZ.
- A fifth selected cell. The fifth selected cell may not be associated with the one or more network identifiers. The fifth selected cell may be configured with (using) at least one of the one or more restricted frequencies. A fifth location of the UE may be inside of the third selected cell and/or outside of the NTZ.
- a sixth selected cell. The sixth selected cell may not be associated with the one or more network identifiers. The sixth selected cell may not be configured with (using) a (any) of the one of the one or more restricted frequencies.

In an example, the UE may select the first selected cell as the selected cell, if the UE is inside of the NTZ and/or if the UE is outside of the NTZ.

In an example, when the UE is outside the NTZ, the UE may select at least one of the first selected cell, the third selected cell, the fifth selected cell, the sixth selected cell, as the selected cell.

In an example, when the UE is outside the NTZ, the UE may select the sixth selected cell and/or the fifth selected cell, as the selected cell, if the first selected cell, and/or the third selected cell is not available.

In an example, when the UE is inside the NTZ, the UE may select the second selected cell, as the selected cell, if the first selected cell is not available (detected, found).

In an example, when the UE is inside the NTZ, the UE may select the fourth selected cell, as the selected cell, if the first selected cell, the second selected cell, and/or the sixth selected cell is not available (detected, found).

In an example, when the UE is inside the NTZ, the UE may select the sixth selected cell, as the selected cell, if the first selected cell, and/or the second selected cell is not available (detected, found).

In an example, the UE may perform (re-evaluate) selection (determination) of the selected cell, when a new cell is detected, when the NAS layer provides updated information, and/or when the location of the UE changes (e.g., moves in/out of the NTZ).

In an example, based on the selection of the selected cell, if the NAS layer requests delivery of a NAS message, if the NAS layers requests RRC connection establishment, and/or if the UE has a data (signaling) to transmit, the RRC layer may initiate a random access procedure, a scheduling request procedure, and/or the like, via the selected cell. In this case, if the UE is inside the NTZ, the UE may use one or more frequencies not overlapping with the one or more restricted frequencies.

In an example, the RRC layer may deliver to the NAS layer, one or more indications. The one or more indication may comprise at least one of:
- information of one or more detected (measured, found) cells. For each cell of the one or more detected cell, the RRC layer may further indicates to the NAS layer, whether the each cell is inside the NTZ, whether the each cell comprises partially the NTZ, one or more frequencies (of uplink and/or of downlink, a range of frequencies, information of the one or more uplink carriers) configured for each cell, one or more network identifiers associated with the each cell, a location (e.g., coverage of the cell, geographical coordinate of the cell) of the each cell.
- information of the selected cell. This may indicates to the NAS layer, whether the selected cell is inside the NTZ, whether the selected cell comprises partially the NTZ, one or more frequencies (of uplink and/or of downlink, a range of frequencies, information of the one or more uplink carriers) configured for the selected cell, one or more network identifiers associated with the selected cell, a location (e.g., coverage of the cell, geographical coordinate of the cell) of the selected cell.

In an example, the selected cell may be a candidate (detected) cell. For example, one or more selected cells may comprise the selected cell. For example, one or more candidate cells may be the one or more selected cells. The RRC layer may report to the NAS layer, the one or more candidate cells. The NAS layer may select a cell among the one or more candidate cells, and may request the RRC layer to camp on the cell.

For example, based on the one or more indication, the NAS layer may determine whether to perform a registration procedure (e.g., to send a registration request message to an AMF), a service request procedure (e.g., to send a service request message), a PDU session establishment procedure (e.g., to send a PDU session establishment message) and/or the like.

For example, if a cell indicated by the one or more indications is configured (uses) with at least a portion of the one or more restricted frequencies, if the UE is inside the NTZ, the NAS layer of the UE may determine not to perform a NAS procedure (e.g., not to send a NAS message to the network), may request the RRC layer not to transmit any uplink signal to the cell, may request the RRC layer to select other cells than the cell, may indicate to the RRC layer, may request the AS layer (RRC layer) to suspend/disable/deactivate, and/or may determine to deactivate (suspend) the AS layer, the one or more restricted frequencies, and/or the like. In other example, the UE may receive from a base station, a configuration message comprising one or more parameters. The one or more parameters may indicate one or more cells (e.g., sCells) configured for the UE. When the UE enters an area of the NTZ, the UE may determine, for each cell of the one or more cells, whether the each cell is barred (e.g., at least a portion of the uplink frequencies of the each cell overlaps (e.g., comprises) at least a portion of the one or more restricted frequencies). For example, based on determining that the each cell (e.g., a first Scell) is barred, the UE may disable the each cell and/or may release configuration associated with the each cell, may stop monitoring PDCCH of the each cell, may deactivate the each cell, and/or the like. For example, based on determining that the each cell (e.g., a second Scell) is not barred, the UE may enable (not disable) the each cell and/or may not release configuration associated with the each cell, may resume (continue, perform) monitoring PDCCH of the each cell, may activate the each cell, and/or the like.

For example, if a cell indicated by the one or more indications is not configured (uses) with a (any) portion of the one or more restricted frequencies, if the UE is inside the NTZ, the NAS layer of the UE may determine to perform a NAS procedure (e.g., sending a NAS message to the network), may request the RRC layer to transmit uplink signal to the cell, may request the RRC layer to establish an RRC connection to the cell, may not indicate to the RRC layer, the one or more restricted frequencies, and/or the like.

For example, if a cell indicated by the one or more indications is configured (uses) with at least a portion of the one or more restricted frequencies, if the UE is outside the NTZ, the NAS layer of the UE may determine to perform a NAS procedure (e.g., sending a NAS message to the network), may request the RRC layer to transmit uplink signal to the cell, may request the RRC layer to establish an RRC connection to the cell, may not indicate to the RRC layer, the one or more restricted frequencies, and/or the like.

For example, if the NAS layer determines that the UE exists the NTZ, the NAS layer of the UE may determine to perform (resume) a NAS procedure (e.g., sending a NAS message to the network), may request the RRC layer to transmit an uplink signal to the cell, may request the RRC layer to reactivate (resume) the AS layer, and/or the like.

Alternatively and/or additionally, based on the one or more parameters, the RRC layer may exclude the cell associated with the one or more restricted frequency from measurement (as shown in the example of FIG. 19, 20).

Alternative and/or additionally, in determining whether one or more frequencies of a cell is restricted or not, the RRC layer may consider one or more uplink carriers (e.g., the SUL, the NUL, as shown in the previous examples) configured for the cell.

In an example, the NAS entity may receive from the RRC entity, one or more indications indicating whether access attempt to a cell (or a network, a base station) is allowed or not. For example, based on receiving the one or more first message, based on the first information and/or the second information, and/or based on one or more second messages, (as shown in other example in this disclosure), the RRC entity may determine whether the cell is barred, whether at least one uplink carrier of the cell is allowed (configured), whether one or more random access resources are available for transmission of an uplink signal to the cell, and/or the like. For example, if the RRC entity determines that the cell is barred (e.g., because a (any) uplink carrier of the cell is not allowed (configured), because a (any) random access resource of the cell is not available for transmission of an uplink signal to the cell, due to NTZ, and/or the like), the RRC entity may send an indication to NAS entity that the cell is barred (e.g., that an access to the cell is barred, that one or more frequencies of the cell are restricted due to NTZ, lower layer failure, and/or the like). For example, if the RRC entity determines that the cell is not barred (e.g., because the at least one uplink carrier of the cell is allowed (configured, available), because the one or more random access resource of the cell is available for transmission of an uplink signal to the cell, and/or the like), the RRC entity may send an indication to NAS entity that the cell is not barred (e.g., that an access to the cell is allowed, that an access to the cell is not barred, that one or more frequencies of the cell are not restricted due to NTZ, the restriction (barring) is alleviated, and/or the like).

In an example, if the NAS entity receives from the RRC entity the indication that the access to the cell is not barred (e.g., is allowed), the NAS entity may send an notification to upper layer (e.g., an application) that access attempt is allowed, may initiate the NAS transport procedure (e.g., transmit a NAS transport message), may send a PDU session establishment request, may send service request message, may send UL NAS transport message, and/or the like.

In an example, if the NAS entity receives from the RRC entity the indication that the access to the cell is not allowed (e.g., the cell is barred), the NAS entity may send an notificaiton to upper layer (e.g., an application, IMS application, MMTEL Voice application, and/or the like) that access attempt is barred, may not initiate the NAS transport procedure (e.g., transmit a NAS transport message) until the NAS entity receives an indication that the cell is not barred, may not send a PDU session establishment request, may not send service request message, may not send UL NAS transport message, may not send PS (packet switched) Data Off indicator, may enter a 5GMM-Registered.Updated.Needed state, and/or the like. For example, if the UE is in 5GMM-Registered.Updated.Needed state, and/or if a periodic registration timer expires, the UE may skip (e.g., does not perform, suspend, ) registration procedure for periodic registration update, while the camped cell is barred due to the NTZ (e.g., the UE is inside an area of (designated as) NTZ, and/or one or more uplink frequencies of the camped cell comprises at least a portion of the one or more restricted frequencies). For example, after skipping the registration procedure, if the UE is in 5GMM-Registered. Updated. Needed state, and/or if the RRC layer indicates that the access to the cell is allowed, the UE may resume (e.g., initiate) registration procedure for periodic registration update.

In an example, the RRC layer may deliver to the NAS layer, list of information of one or more cells. For example, for each cell of the one or more cells, the RRC layer may indicate a network identifier of a network associated with the cell, indication of whether uplink carrier (or BWP) of the cell is restricted due to NTZ, indication of whether one or more frequencies of the cell comprises at least a portion of the restricted frequencies, one or more configured uplink frequencies of the cell and/or the like. In response to receiving the list of information, the NAS layer may select a target cell among the one or more cells and/or may select a target network. For example, based on the list of information of the one or more cells, and/or based on that the UE is inside the NTZ, the UE may select a (target) network (of a (target) cell), among the one or more cells, whose uplink (e.g., uplink carrier, uplink BWP) is not restricted and/or may not comprise a (any) portion of the one or more restricted frequencies. For example, based on selecting the target cell and/or the target network, the NAS entity may inform to the RRC layer, information of the target cell (e.g., identifier of the cell) and/or the target network (e.g., identifier of the network). For example, based on the information (e.g., the identifier) received from the NAS layer, the RRC layer may select the target cell and/or may select and camp on a cell (e.g., which sends an SIB comprising the identifier) which is associated with the target network. For example, the UE may send a registration request message to the target network.

In an example, if no other allowed cells (and/or a network, uplink carrier, uplink BWW) are available due to NTZ, the UE may disable AS (access stratum) layer, may suspend a PDU session which is established, may disable N1 mode (e.g., an access mode to access NG-RAN, 5GS). In an example, if no other allowed cells (and/or a network) are available, the UE may enable AS (access stratum) layer, may indicate to the RRC layer to remain camped in the cell (which may be configured with an uplink resource that comprises at least a portion of the restricted frequencies) and/or may enable N1 mode. That no other allowed cells are available may be that all detected (measured, found, selected, searched, available) cells are not allowed to the UE, that the all detected cells do not have a frequency resources not comprising at least a portion of the restricted frequencies.

In an example, a NAS layer may trigger a NAS procedure (e.g., registration procedure, service request procedure, PDU session establishment procedure, and/or the like). For example, based on triggering the NAS procedure, the UE may send a first NAS message (e.g., a registration request, a service request, a PDU session establishment request, and/or the like) to a network and/or may start a first NAS timer. For example, the UE may send the first NAS message, when a cell that the UE camps on (or selects) has a least one uplink carrier (or BWP) which is not restricted (e.g., does not comprise a portion of the one or more restricted frequencies). In an example, the UE may move into an area indicated by the NTZ. For example, the RRC layer may indicate to the NAS layer that the UE enters the NTZ, that a currently camped cell does not have uplink resource, that one or more frequency of the currently camped cell is restricted due the NTZ, and/or the like. For example, based on entering the area of the NTZ and/or receiving indication from the RRC layer, the UE (e.g., the NAS layer) may abort (stop, suspend) the (triggered, ongoing) NAS procedure, may not (re) start the NAS procedure, may stay in the cell (current cell), may apply normal cell reselection process, may not trigger selection of different core network type, may stop the first NAS timer associated with the NAS procedure, may reset a NAS attempt counter (e.g., a counter recording how many attempts have been made for the NAS procedure, may be 0, 1, and so on) associated with the NAS procedure and/or the like. For example, this may prevent unnecessary retrial of the NAS procedure, while the UE is in the NTZ. For example, the UE may resume/retrigger the aborted NAS procedure after the UE moves out of the NTZ and/or when the RRC layer notifies that the UE is out of the NTZ and/or that newly camped cell has an uplink resource that is not restricted.

In an example, based on triggering a NAS procedure (e.g., a registration update procedure, a service request procedure, a PDU session establishment request procedure, a NAS transport procedure), the UE may send a request to a lower layer (e.g., an RRC layer) to establish an RRC connection.

In an example, the RRC layer may determine whether establishing the RRC connection is possible, successful, and/or the like. For example, the UE may determine whether a cell (a uplink carrier of the cell, and/or an uplink BWP of the cell) is barred/ prohibited/ restricted or not. For example, the UE may use one or more examples in this disclosure, to determine whether the cell (the uplink carrier of the cell, and/or the uplink BWP of the cell) is barred/ prohibited/ restricted or not. For example, based on determining that the cell (the uplink carrier of the cell, and/or the uplink BWP of the cell) is barred/ prohibited/ restricted, the RRC layer of the UE may determine a lower layer failure. For example, based on determining, the RRC layer may report to the NAS layer, the lower layer failure. For example, the lower layer failure may indicate at least one of that the UE enters an NTZ, that the cell (the uplink carrier of the cell, and/or the uplink BWP of the cell) is barred/ prohibited/ restricted due to NTZ, and/or that the RRC connection is suspended due to NTZ, that RRC connection establishment is failed, and/or the like.

In an example, the NAS layer of the UE may receive from the RRC layer, the indication of the lower layer failure. In response to receiving the lower layer failure, the NAS layer may consider the cell as barred, may consider a network identifier of a network of the cell as forbidden (or as one of a forbidden network/PLMN), may add the network identifier into a list of forbidden networks, may add a tracking area of the cell into a list of forbidden tracking area. For example, while the network is one in the list forbidden network and/or the TA is one in the list of forbidden tracking area, the UE (NAS) may not trigger the NAS procedure while in the cell, in the TA, in the network and/or the like. For example, while the network is one in the list forbidden network and/or the TA is one in the list of forbidden tracking area, the UE (NAS) may trigger the NAS procedure (e.g., sending a NAS request message of the NAS procedure) after moving into another cell, into another TA, into another network and/or the like. The another cell, the another TA, and/or the another network may provide the UE with an uplink resource not restricted due to the NTZ.

In an example, based on triggering a NAS procedure (e.g., a registration update procedure, a service request procedure, a PDU session establishment request procedure, a NAS transport procedure), the UE may send a first NAS request message (e.g., a registration request message, a service request message, a PDU session establishment request message, a NAS transport message, and/or the like) to a network via a first cell. For example, when the UE enters a new tracking area, when the UE has a data to send for a PDU session, and/or the like, the UE may trigger the NAS procedure. In response to triggering the NAS procedure, the NAS layer may start a timer (e.g., a timer associated for resending a registration request message, a timer associated for resending a service request message, a timer associated for resending a PDU session establishment message, a timer to determine whether transmission of the first NAS request message failure/success, and/or the like) for the (triggered) NAS procedure.

In an example, a RRC layer of the UE may determine whether a new cell is selected, whether the new cell is allowed for the UE, whether the UE can transmit a uplink signal in the new cell, whether the new cell (a uplink carrier of the new cell, and/or an uplink BWP of the new cell) is barred/ prohibited/ restricted or not. For example, the UE may use one or more examples in this disclosure, to determine whether the new cell (the uplink carrier of the new cell, and/or the uplink BWP of the new cell) is barred/ prohibited/ restricted or not. For example, based on determining that the new cell (the uplink carrier of the new cell, and/or the uplink BWP of the new cell) is barred/ prohibited/ restricted, the RRC layer of the UE may determine a lower layer failure. For example, based on determining, the RRC layer may report to the NAS layer, the lower layer failure. For example, the lower layer failure may indicate at least one of that the UE enters an NTZ, that the new cell (the uplink carrier of the new cell, and/or the uplink BWP of the new cell,) is barred/ prohibited/ restricted due to NTZ, that RRC connection is suspended due to entering the NTZ, that RRC connection is suspended due to the one or more restricted frequencies, that cell change related to NTZ occurs, that the UE enters the NTZ, and/or the like. For example, the lower layer may indicate that the UE enters an NTZ, that the new cell (the uplink carrier of the new cell, and/or the uplink BWP of the new cell) is barred/ prohibited/ restricted due to NTZ, that RRC connection is suspended due to entering the NTZ, that RRC connection is suspended due to the one or more restricted frequencies, and/or the like, before the NAS layer receives a response (e.g., a registration accept message, a service accept message, a PDU session establishment accept message, a NAS transport message, and/or the like) for the first NAS request message, from a network.

In an example, the NAS layer of the UE may receive from the RRC layer, the indication of the lower layer failure. In response to receiving the lower layer failure, the NAS layer may determine to abort (stop) the triggered NAS procedure and/or may determine to stop the timer for the triggered NAS procedure, and/or may restart the triggered NAS procedure, and/or may start a second timer associated with the NAS procedure. For example, the UE may not transmit (retransmit) the first NAS request message and/or may not trigger (retrigger) the NAS procedure, while the second timer is running. For example, the UE may retransmit the first NAS request message and/or the UE may re-trigger the NAS procedure, when the second timer expires.

In an example, the RRC layer may move out of the NTZ, and/or may camps on a third cell. For example, the third cell may be configured with one or more uplink resources that are not restricted due to NTZ (e.g., the uplink resources may have an uplink resource not comprising the one or more restricted frequencies). In an example, the RRC layer may send a second notification to the NAS layer. For example, the second notification may indicate that the cell (the uplink carrier of the cell, the BWP of the cell) is not restricted/barred, that the UE can transmit in uplink, that the UE moves out of the NTZ, that the UE is not restricted for the NTZ, that the barring is alleviated, that the lower failure stops, and/or the like. In an example, based on receiving the second notification, the NAS layer may determine to resume/restart/re-trigger the aborted (stopped, suspended, aborted) NAS procedure. For example, the NAS layer may send a second NAS request message of the NAS procedure. For example, the NAS procedure may be at least one of a registration update procedure, a service request procedure, a PDU session establishment request procedure, a NAS transport procedure.

In an example, a NAS layer of a UE may trigger a registration procedure. For example, if the UE moves into a tracking area (and/or a cell) not in a registration area, the UE may trigger the registration procedure. In response to triggering the registration procedure, the UE may transmit a first registration request message to a network via a first cell. For example, the first cell may not in a NTZ and/or one or more frequencies of the first cell may be not one or more restricted frequencies. For example, because the cell is not restricted for NTZ and/or the one or more restricted frequency, the UE may transmit via the cell, the first registration request message (e.g., for mobility update and/or for periodic update). In an example, in response to transmitting the first registration request message, the UE may start a first NAS timer. In an example, if the UE receives a NAS response message (e.g., registration accept message) from a network, the UE may stop the first NAS timer. In an example, if first NAS timer expires, the UE may send (resend) another registration request message and/or may restart the first NAS timer.

In an example, the UE may move into area of the NTZ and/or a RRC layer of the UE may find that a new cell (a second cell) does not have an uplink resource (carrier) not restricted by the NTZ and/or may find that the cell (the uplink resource of the cell) is restricted due to overlapping with at least a portion of one or more restricted frequencies.

In an example, the UE may determine that access to the cell is restricted, that an uplink resource is not available, based on the first information, based on the second information, based on the one or more one or more parameters of the cell. For example, the UE may determine that the UE moves into the NTZ, that the UE is not allowed to transmit, that uplink resource is not available. For example, based on determining, the UE may abort the registration procedure and/or the UE may stop the first NAS timer.

In an example, the UE may determine that the UE moves out of the NTZ and/or that one or more frequencies of another cell (a third cell) is no more restricted due to NTZ that the barring due to NTZ is alleviated due to moving out of the NTZ, due to finding the third cell configured with uplink resources not restricted by the one or more restricted frequencies. In response to the determining, the UE may resume/restart the registration procedure. For example, the UE may send a second registration request message.

This may help, the UE to avoid transmission of restricted frequencies, and/or may help to minimize the time that the UE's registration is not updated.

Example embodiments of FIG. 29, 30 may help in reducing an amount of time during which a UE cannot communicate with a network if the UE is configured with information associated with a NTZ, may help in selecting an uplink resource when one or more uplink resources are restricted due to the NTZ, and/or may help in preventing unintended transmission when the UE is inside the NTZ.

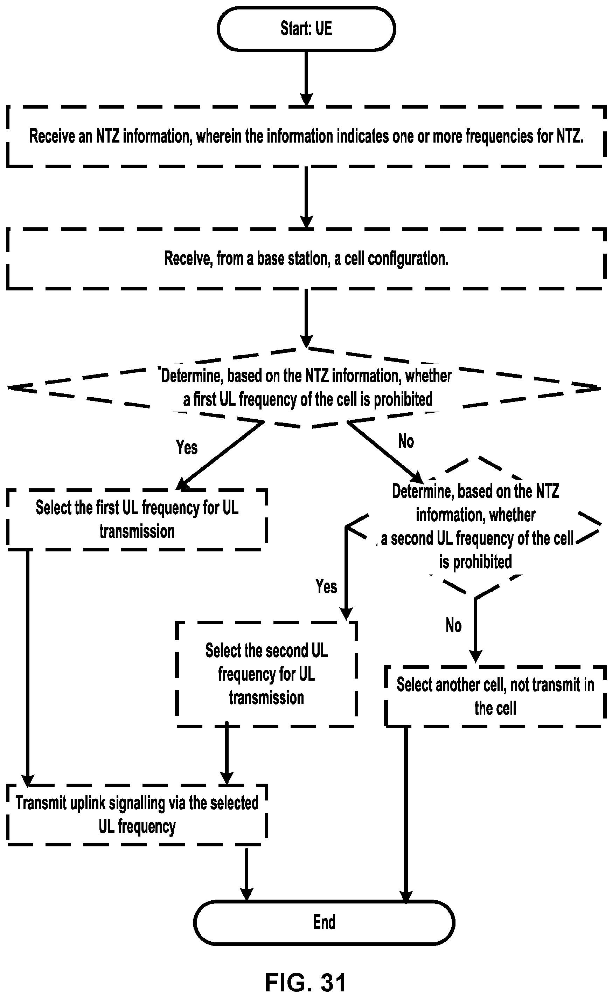

FIG. 31 illustrates an example as per an aspect of an embodiment of the present disclosure. For brevity, based on the other part of the present disclosure, redundant details will be omitted.

In an example, a UE may receive from a core network node (or an application server, e.g., mobility management node (e.g., AMF, MME), and/or a policy control node (e.g., PCF, PCRF, PCEF)), one or more messages (e.g., the one or more first messages). For example, the one or more messages may comprise one or more configuration parameters. For example, the one or more configuration parameters may comprise one or more frequency information (e.g., indicating the one or more restricted frequencies, e.g., due to a NTZ) and/or one or more area information (e.g., indicating location/boundary of the NTZ). The one or more area information may indicate one or more areas.

In an example, the UE (or an RRC entity of the UE) may receive from a base station via a cell, one or more RRC messages (e.g., the one or more second message) comprising one or more cell configurations. For example, the one or more cell configurations may comprise one or more carrier information of the cell. For example, each carrier information of the one or more carrier information may indicate (be associated with) a frequency range (one or more frequencies, one or more frequency band) of each carrier associated with the each carrier information. For example, the each carrier may be an uplink carrier.

In an example, the UE may determine whether the UE is inside the one or more areas of the NTZ.

In an example, if the UE is inside the one or more areas, the UE may determine whether a first UL carrier indicated by a first carrier information, of the one or more carrier information, comprises at least one of the one or more restricted frequencies.

FIG. 31 illustrates an example as per an aspect of an embodiment of the present disclosure. For brevity, based on the other part of the present disclosure, redundant details will be omitted.

In an example, a UE may receive from a network node (or an application function, an application server, a USS (UAS (unmanned aircraft system) service supplier), UTM (unmanned traffic management), and/or the like), the one or more first messages. For example, the one or more first messages may comprise the first information. For example, the first information may indicate one or more information associated with a NTZ. For example, the one or more information may indicate one or more restricted (e.g., not allowed to transmit in uplink, in sidelink) frequencies (e.g., a range of frequency, a frequency band, an operating band), and/or the like. For example, the one or more information may indicate one or more areas for which the restricted (e.g., not allowed to transmit in uplink, in sidelink) frequencies (e.g., a range of frequency, a frequency band, an operating band) are restricted, for the NTZ. The NTZ may or may not be a no-fly zone (NFZ). For example, no aerial object (e.g., UAV, drone, aerial UE) may fly (operate) inside the NFZ. For example, outside of the NFZ, the aerial object may fly and/or the aerial object may not be allowed to transmit, if the aerial object is inside the NTZ.

In an example, the UE may receive the one or more second messages. For example, the one or more second message may comprise one or more configuration parameters of the one or more cells. The one or more configuration parameters may indicate one or more uplink carrier parameters and/or one or more uplink BWP parameters, and/or the like. For example, the one or more uplink carrier parameters may indicate one or more configured frequencies of the one or more uplink carriers and/or one or more uplink BWP parameters may indicate one or more configured frequencies of the one or more uplink BWPs.

In an example, based on the one or more first messages, and/or the one or more second messages, the UE may determine whether a first uplink carrier (and/or a first uplink BWP) of the cell is restricted (e.g., prohibited) or not. For example, if a frequency of the first uplink carrier belongs to the one or more restricted frequencies, and/or if the UE is inside the location of the NTZ, the UE may determine that the first uplink carrier is restricted. For example, if a (any) frequency of the first uplink carrier does not belong to the one or more restricted frequencies, and/or if the UE is not inside the location of the NTZ, the UE may determine that the first uplink carrier is not restricted.

In an example, if the UE determines that the first uplink carrier is not restricted, the UE may select (and/or may consider as configured) the first uplink carrier. The UE may transmit an uplink signal via the first uplink carrier.

In an example, if the UE determines that the first uplink carrier is restricted, the UE may determine whether a second uplink carrier (and/or a second uplink BWP) of the cell is restricted (e.g., prohibited) or not. For example, if a frequency of the second uplink carrier belongs to the one or more restricted frequencies, and/or if the UE is inside the location of the NTZ, the UE may determine that the second uplink carrier is restricted. For example, if a (any) frequency of the second uplink carrier does not belong to the one or more restricted frequencies, and/or if the UE is not inside the location of the NTZ, the UE may determine that the second uplink carrier is not restricted.

In an example, if the UE determines that the second uplink carrier is not restricted, the UE may select (and/or may consider as configured) the second uplink carrier. The UE may transmit an uplink signal via the second uplink carrier.

In an example, if at least one uplink carriers of the one or more carriers are not restricted, the UE may select (and/or may consider as configured) the at least one uplink carrier. The UE may transmit an uplink signal via the at least one uplink carrier.

In an example, if all of the one or more carriers are restricted, the UE may select another cell and/or the UE may consider the cell as barred.

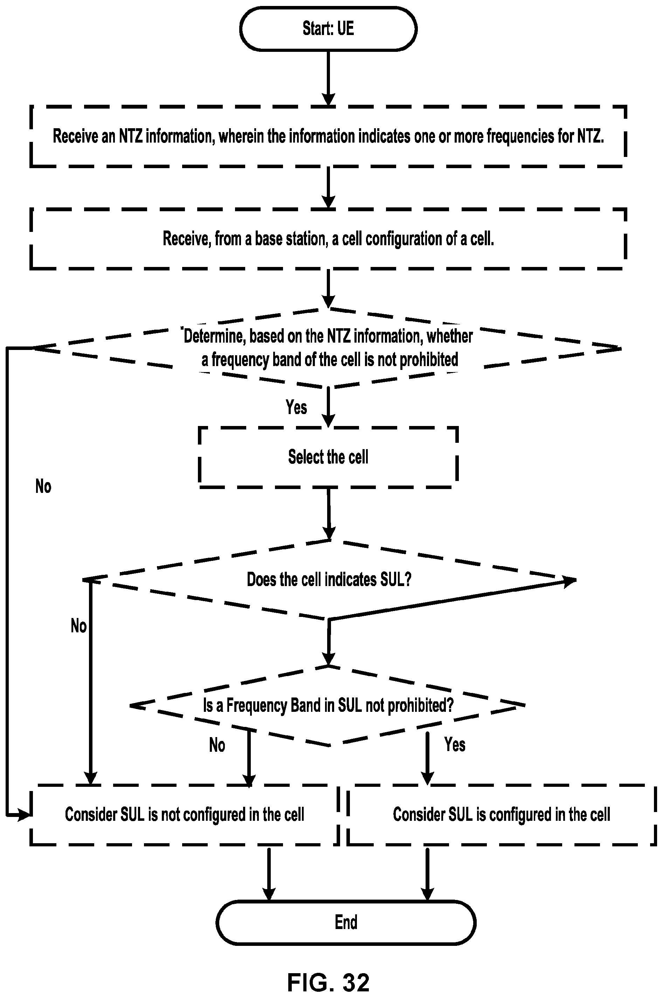

FIG. 32 illustrates an example as per an aspect of an embodiment of the present disclosure. For brevity, based on the other part of the present disclosure, redundant details will be omitted.

In an example, (similar to the example of FIG. 31), the UE may receive the one or more first messages and/or the one or more second messages.

In an example, based on the one or more first messages, and/or the one or more second messages, the UE may determine whether one or more frequency bands associated with a first uplink carrier of the cell is restricted (e.g., prohibited) or not. For example, if a first frequency band of the first uplink carrier belongs to the one or more restricted frequency bands, and/or if the UE is inside the location of the NTZ, the UE may determine that the first frequency band of the first uplink carrier is restricted. For example, if a second frequency band of the first uplink carrier does not belong to the one or more restricted frequency bands, and/or if the UE is inside the location of the NTZ, the UE may determine that the second frequency band of the first uplink carrier is not restricted. For example, the UE may determine one or first frequency bands of the one or more frequency bands and/or the UE may determine one or second frequency bands of the one or more frequency bands. The one or more first frequency bands may be of the one or more restricted frequency bands. The one or more second frequency bands may not be of the one or more restricted frequency bands.

In an example, if there is at least one in the one or more second frequency bands, the UE may select the cell, may select the first uplink carrier, and/or may select the at least one in the one or more second frequency bands.

In an example, if there is none in the one or more second frequency bands, the UE may not select the cell, may not select the first uplink carrier, and/or may not select the at least one in the one or more second frequency bands. In an example, if there is none in the one or more second frequency bands, the UE may select the cell, may select a second uplink carrier, may consider the second uplink carrier as configured, and/or may select one frequency band associated with the second uplink carrier. The one frequency band may not be one of the one or more restricted frequency bands.

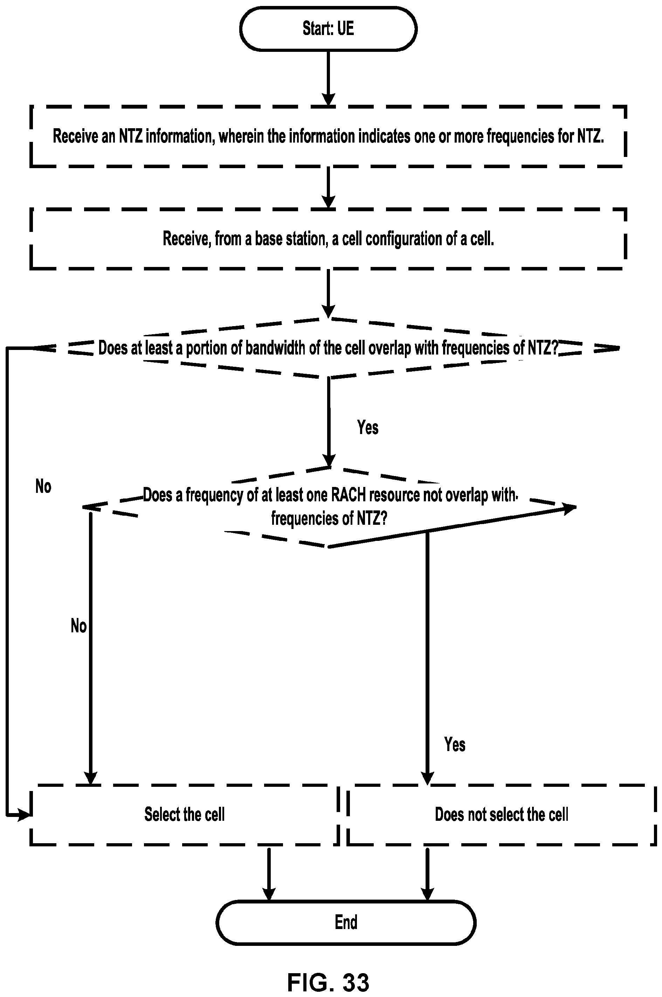

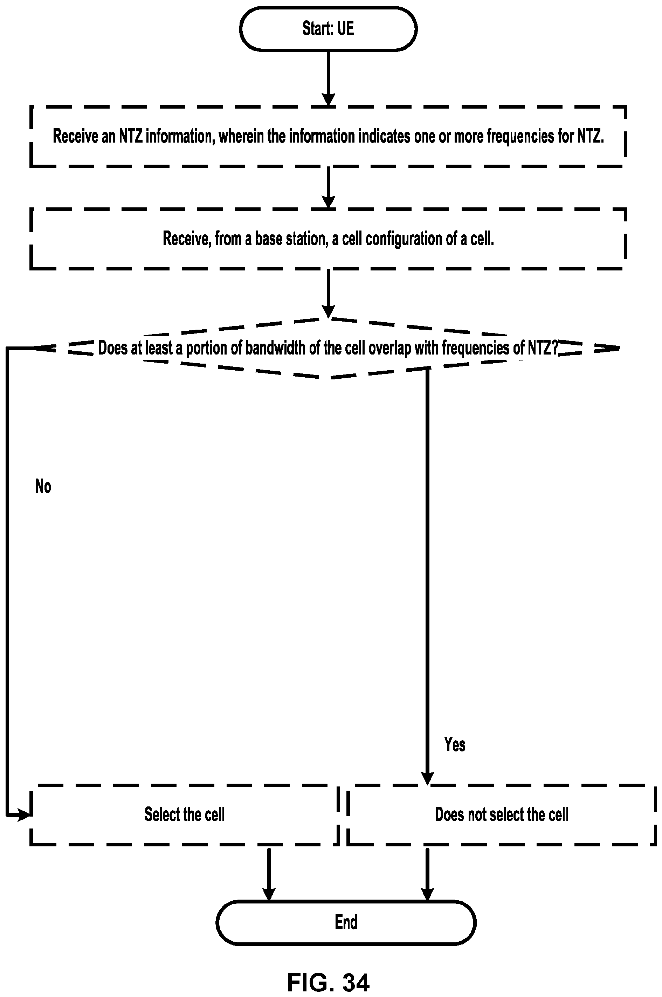

FIG. 33, FIG. 34 illustrates an example as per an aspect of an embodiment of the present disclosure. For brevity, based on the other part of the present disclosure, redundant details will be omitted.

In an example, (similar to the example of FIG. 31, 32), the UE may receive the one or more first messages and/or the one or more second messages.

In an example, based on the one or more first messages, and/or the one or more second messages, the UE may determine whether a portion of an uplink bandwidth of a cell is restricted (e.g., prohibited) or not.

For example, if a first portion of the uplink bandwidth of the cell comprises at least a second portion of the one or more restricted frequencies, and/or if the UE is inside the location of the NTZ, the UE may determine that the cell is barred and/or may not select the cell.

For example, if the uplink bandwidth of the cell does not comprise a (any) frequency of the one or more restricted frequencies, and/or if the UE is inside the location of the NTZ, the UE may determine that the cell is not barred and/or may select the cell.

For example, if a first portion of the uplink bandwidth of the cell comprises at least a second portion of the one or more restricted frequencies, and/or if the UE is inside the location of the NTZ, the UE may determine whether an associated frequency of a first RACH resource of one or more RACH resource of the cell overlaps with a frequency of the one or more restricted frequencies.

For example, there is at least one RACH resource of the one or RACH resources, and/or if the at least one RACH resources does not comprise a (any) of the one or more restricted frequencies, the UE, in the NTZ, may select the cell and/or may select the at least one RACH resource.

For example, there is no RACH resource which does not comprise a (any) of the one or more restricted frequencies, the UE, in the NTZ, may not select the cell and/or may not perform a RACH procedure.

Clause 1. A method comprising: receiving, by a wireless device, a first message comprising one or more first configuration parameters indicating: one or more frequencies associated with a no transmission zone (NTZ), wherein transmission by the wireless device via the one or more frequencies is restricted within the NTZ; receiving, by the wireless device, a second message comprising one or more second configuration parameters indicating: a normal uplink (NUL) carrier of a cell; and a supplementary uplink (SUL) carrier of the cell; selecting, by the wireless device and for a random access procedure of the cell, an uplink (UL) carrier among the SUL carrier and the NUL carrier, based on: the UL carrier not comprising a frequency of the one or more frequencies; and the wireless device being within the NTZ; and transmitting, by the wireless device via the UL carrier, a random access preamble for the random access procedure.

Clause 2. A method comprising: receiving, by a wireless device, one or more first configuration parameters indicating that one or more frequencies is restricted; and selecting, by the wireless device and for uplink transmission, an uplink (UL) carrier among one or more uplink carriers of a cell, based on the UL carrier not comprising a frequency of the one or more frequencies.

Clause 3. A method comprising: receiving, by a wireless device, one or more configuration parameters indicating one or more initial bandwidth parts (BWPs); and transmitting, by the wireless device via a second initial BWP, of the one or more initial BWPs, a random access preamble, based on: a first initial BWP, of the one or more initial BWPs, being restricted for the wireless device.Clause 4. The method of clause 3, wherein the first initial BWP is restricted due to no transmission zone (NTZ).

Clause 5. The method of clause 4, wherein the first initial BWP comprises a first portion of one or more frequencies.

Clause 6. The method of clause 5, wherein the one or more frequencies are restricted for transmission when the wireless device is in the NTZ.

Clause 7. The method of clause 3 and 6, wherein the one or more frequencies does not comprise a frequency of the second initial BWP.

Clause 8. The method of clause 3, wherein the one or more initial BWPs are uplink BWPs.

Clause 9. The method of clause 3, wherein at least one of the one or more initial BWPs is associated with normal uplink (NUL).

Clause 10. The method of clause 3, wherein at least one of the one or more initial BWPs is associated with supplementary uplink (SUL).

Clause 11. The method of clause 9 and 10, wherein a signal quality of the NUL is equal to or above a first threshold.

Clause 12. The method of clause 11, wherein the first initial BWP is associated with the NUL, and the second initial BWP is associated with the SUL.

Clause 13. The method of clause 9 and 10, wherein a signal quality of the NUL is equal to or lower than the first threshold.

Clause 14. The method of clause 13, wherein the first initial BWP is associated with the SUL, and the second initial BWP is associated with the NUL.

Clause 15. The method of clause 3, wherein a system information block (SIB) of the cell indicates the one or more initial BWPs of the NUL.

Clause 16. The method of clause 3, wherein the one or more configuration parameter further comprises an information of an initial downlink BWP of the cell

Clause 17. The method of clause 3, further comprising determining by the wireless device, whether the first initial BWP is restricted or not.

Clause 18. The method of clause 6, further comprising, receiving by the wireless device, one or more additional configuration parameters indicating at least one of the one or more frequencies and the NTZ.

Clause 19. The method of clause 3, further comprising, receiving by the wireless device, a resource allocation for uplink transmission.

Clause 20. The method of clause 19, wherein the wireless device receives the resource allocation, after transmitting the random access preamble.

Clause 21. The method of clause 19 and 20, wherein the wireless device determines whether the resource allocation is associated with the one or more frequencies.

Clause 22. The method of clause 21, wherein the wireless device transmits a signal, using a uplink resource indicated by the resource allocation, if the uplink resource does not comprise a frequency of the one or more frequencies.

Clause 23. The method of clause 3, wherein the random access preamble is a preamble reserved for the wireless device restricted for using the one or more frequencies.

Clause 24. The method of clause 18, wherein a non-access stratum (NAS) layer of the wireless device receives the one or more additional configuration.

Clause 25. The method of clause 24, wherein the NAS layer delivers the one or more additional configuration to a RRC layer of the wireless device.

Clause 26. The method of clause 3 and the claim 23, wherein the RRC layer indicates to the NAS layer, one or more uplink frequencies of the cell.

Clause 27. The method of clause 26, wherein the NAS layer determines whether to perform registration to the cell, based on the one or more additional configuration and the one or more uplink frequencies of the cell.

Clause 28. The method of clause 4 and 27, wherein the wireless device transmits the random access preamble. If the NAS layer determines to perform the registration.

Clause 29. A method comprising: receiving, by a wireless device, a first message comprising one or more first configuration parameters indicating: one or more frequencies associated with a no transmission zone (NTZ), wherein, transmission by the wireless device via the one or more frequencies is restricted within the NTZ; receiving, by the wireless device, a second message comprising one or more second configuration parameters indicating: a first uplink BWP of normal uplink (NUL) carrier of the cell; and a second uplink BWP of a supplementary uplink (SUL) carrier of the cell; selecting, by the wireless device, the SUL carrier for a random access procedure of the cell, based on: the first uplink BWP comprising a first portion of the one or more frequencies; the second uplink BWP not comprising a second portion of the one or more frequencies; and the wireless device being within the NTZ; and transmitting, by the wireless device via the SUL carrier, a random access preamble for the random access procedure.

Clause 30. The method of clause 29, wherein a first measured signal strength of the SUL carrier is weaker than a second measured signal strength of the NUL or a power threshold.

Clause 31. The method of clause 30, wherein the wireless device selects the NUL, if the UE is not in the NTZ.

Clause 32. A method comprising: receiving, by a wireless device, a first configuration parameter indicating one or more frequencies associated with no transmission zone (NTZ), wherein the wireless device, in the NTZ, is not allowed to transmit via the one or more frequencies; receiving, by the wireless device from a base station, one or more second configuration parameters of a cell, indicating: a downlink (DL) frequency; a first uplink (UL) frequency; a second UL frequency of a supplementary uplink; and determining, by the wireless, that the supplementary uplink is configured for the cell, based on that: the wireless devices is in the NTZ; the one or more frequencies does not comprise at least a second portion of the second UL frequency; and the one or more frequencies comprise at least a first portion of the first UL frequency; and transmitting, by the wireless device and via the supplementary uplink, a random access preamble.

Clause 33. A method comprising: receiving, by a wireless device, a first configuration parameter indicating one or more first frequency ranges; receiving, by the wireless device from a base station, one or more second configuration parameters of a cell, indicating one or more second frequency range of the cell; determining, by the wireless, that the one or more second frequency range are outside of the one or more first frequency range; and transmitting, by the wireless device to the cell, a random access preamble.

Clause 34. A method comprising: receiving, by a wireless device, a first configuration parameter indicating one or more first frequency ranges; receiving, by the wireless device from a base station, one or more second configuration parameters of a cell, indicating one or more second frequency ranges of the cell; determining, by the wireless, that the cell is barred, based on that the one or more second frequency ranges comprises at least a portion of the one or more first frequency ranges; and transmitting, by the wireless device to a second cell, a random access preamble.

Clause 35. A method comprising: receiving, by a wireless device, a first configuration parameter indicating one or more frequencies associated with no transmission zone (NTZ), wherein the wireless device, in the NTZ, is not allowed to transmit via the one or more frequencies; receiving, by the wireless device from a base station, one or more second configuration parameters of a cell, indicating: a downlink (DL) frequency; a first uplink (UL) frequency; a second UL frequency of a supplementary uplink; and selecting, by the wireless, the first UL frequency, based on that: the wireless devices is in the NTZ; the one or more frequencies comprise at least a second portion of the second UL frequency; and the one or more frequencies does not comprise overlaps at least a first portion of the first UL frequency; and transmitting, by the wireless device and via the supplementary uplink, a random access preamble.

Clause 36. A method comprising: receiving, by a wireless device, a first message comprising one or more first configuration parameters indicating: one or more frequencies associated with a no transmission zone (NTZ), wherein transmission by the wireless device via the one or more frequencies is restricted within the NTZ; receiving, by the wireless device, a second message comprising one or more second configuration parameters indicating: a normal uplink (NUL) carrier of a cell; and a supplementary uplink (SUL) carrier of the cell; selecting, by the wireless device and for a random access procedure of the cell, the SUL carrier for an uplink carrier, based on: the SUL carrier not comprising a first frequency of the one or more frequencies; the NUL carrier comprising a frequency of the one or more frequencies; and the wireless device being within the NTZ; and transmitting, by the wireless device via the SUL carrier, a random access preamble for the random access procedure.

Clause 37. The method of clause 36, wherein a first measured signal strength of the SUL carrier is weaker than a second measured signal strength of the NUL or a power threshold.

Clause 38. A method comprising: receiving, by a wireless device, a first message comprising one or more first configuration parameters indicating: one or more frequencies associated with a no transmission zone (NTZ), wherein transmission by the wireless device via the one or more frequencies is restricted within the NTZ; receiving, by the wireless device, a second message comprising one or more second configuration parameters indicating: a normal uplink (NUL) carrier of a cell; and a supplementary uplink (SUL) carrier of the cell; selecting, by the wireless device and for a random access procedure of the cell, the NUL carrier for an uplink carrier, based on: the NUL carrier not comprising a first frequency of the one or more frequencies; the SUL carrier comprising a frequency of the one or more frequencies; and the wireless device being within the NTZ; and transmitting, by the wireless device via the NUL carrier, a random access preamble for the random access procedure.

Clause 39. The method of clause 38, wherein a first measured signal strength of the NUL carrier is weaker than a second measured signal strength of the SUL or a power threshold.

Clause 40. A method comprising: receiving, by a wireless device, one or more messages comprising one or more configuration parameters indicating: one or more frequencies of no transmission zone (NTZ); an initial downlink bandwidth part (BWP) of a cell; an initial uplink BWP of a cell; and based on the initial uplink BWP comprising at least a portion of the one or more frequencies, performing, by the wireless device, barring of the cell.

Clause 41. A method comprising: receiving, by a wireless device, one or more messages comprising one or more configuration parameters indicating: one or more frequencies of no transmission zone (NTZ); an initial downlink bandwidth part (BWP) of a cell; an initial uplink BWP of a cell; and receiving, by the wireless device, one or more data of a multicast broadcast service (MBS); and skipping, by the wireless device, transmission of a feedback for the MBS, in response to the initial uplink BWP comprising at least a portion of the one or more frequencies.

Clause 42. A method comprising: sending, by a wireless device, a message requesting registration of a network slice, wherein: the network slice is associated with an aerial operation; the message indicates the wireless device supporting handling of the NTZ; receiving, by the wireless device, one or more second message comprising: a first configuration parameter indicating one or more NTZs; a second configuration parameter indicating one or more uplink frequencies restricted in the one or more NTZs; a third configuration parameter indicating a validity of at least one of the first configuration parameter and the second configuration parameter; and removing, by the wireless device, at least one of the first configuration parameter and the second configuration parameter, in response to the validity expiring.

Clause 43. A method comprising: sending, by a non-access stratum (NAS) entity of a wireless device, a message requesting registration of a network slice, wherein: the network slice is associated with an aerial operation;

the message indicates the wireless device supporting handling of the NTZ; receiving, by the NAS entity, one or more second message comprising: a first configuration parameter indicating one or more NTZs; a second configuration parameter indicating one or more uplink frequencies restricted in the one or more NTZs; sending, by the NAS entity to a radio resource control entity, at least one of the first configuration parameter and the second configuration parameter.

Clause 44. A method comprising: sending, by a non-access stratum (NAS) entity of a wireless device to a radio resource control (RRC) entity, a request to search one or more networks; receiving, by the NAS entity from the RRC entity, one or more second parameter comprising: one or more identifiers of one or more networks; an information of one or more frequencies, wherein the one or more frequencies are uplink frequencies associated with the one or more networks; selecting, by the NAS entity and based on the one or more second parameter, one or more second messages comprising: one or more identifiers of one or more networks; an information of one or more frequencies, wherein the one or more frequencies are uplink frequencies associated with the one or more networks.

Clause 45. A method comprising: sending, by a non-access stratum (NAS) entity of a wireless device to a radio resource control (RRC) entity, a request to search one or more networks; receiving, by the NAS entity from the RRC entity, one or more second parameter comprising: one or more identifiers of one or more networks; an information of one or more frequencies, wherein the one or more frequencies are uplink frequencies associated with the one or more networks; selecting, by the NAS entity and based on the one or more second parameter, one or more second messages comprising: one or more identifiers of one or more networks; an information of one or more frequencies, wherein the one or more frequencies are uplink frequencies associated with the one or more networks.

Clause 46. A method comprising: receiving, by a wireless device, a first configuration parameter indicating one or more frequencies associated with no transmission zone (NTZ), wherein the wireless device, in the NTZ, is not allowed to transmit via the one or more frequencies; receiving, by the wireless device from a base station, one or more second configuration parameters of a cell, indicating at least one of: one or more configured grant; one or more uplink scheduling resources; receiving, by the wireless device from the base station, a radio resource control (RRC) message transitioning to RRC inactive state; releasing, by the wireless device, the one or more second configuration, in response to entering the NTZ.

Clause 47. A method comprising: receiving, by a base station from a core network, a first message comprising one or more first parameters, wherein the one or more first parameters indicate at least one of: an information of NTZ of the wireless device; one or more first frequencies that the wireless device is restricted to transmit.

Clause 48. The method of 47, further comprising sending, by the base station to a second base station a second message, comprising the one or more first parameters.

Clause 49. The method of clause 48, wherein the base station is a base station central unit (CU) and the second base station is at least one of a second base station CU or a base station distributed unit (DU).

Clause 50. A method comprising: receiving, by a wireless device, a first message comprising one or more first configuration parameters indicating: one or more frequencies associated with a no transmission zone (NTZ), wherein, within the NTZ, transmission via the one or more frequencies is restricted for the wireless device; receiving, by the wireless device, a second message comprising one or more second configuration parameters indicating: an initial downlink bandwidth part (BWP) of a cell; an initial uplink BWP of normal uplink (NUL) of the cell; and a second initial uplink BWP of a supplementary uplink (SUL) of the cell; selecting, by the wireless device, the SUL for a random access procedure, based on: the initial uplink BWP comprising a first portion of the one or more frequencies; the second initial uplink BWP not comprising a second portion of the one or more frequencies; and the wireless device being within the NTZ; and transmitting, by the wireless device via the SUL, a random access preamble.

## Claims

1. A method comprising:
receiving, by a wireless device, one or more first messages comprising one or more first configuration parameters indicating one or more frequency bands associated with a no transmission zone (NTZ), wherein transmission by the wireless device via the one or more frequency bands is restricted within the NTZ;
receiving, by the wireless device, one or more second messages comprising one or more second configuration parameters indicating:
a normal uplink (NUL) carrier of a cell; and
a supplementary uplink (SUL) carrier of the cell;
selecting, by the wireless device and for a random access procedure in the cell, an uplink (UL) carrier among the SUL carrier and the NUL carrier, based on:
a frequency band of the UL carrier not being one of the one or more frequency bands; and
the wireless device being within the NTZ; and
transmitting, by the wireless device via the UL carrier, a random access preamble for the random access procedure.

2. The method of claim 1, wherein the wireless device transmits the random access preamble via a first BWP (bandwidth part) of the UL carrier.

3. The method of claim 2, wherein the UL carrier is configured with one or more BWPs.

4. The method of claim 3, wherein the first BWP, of the one or more BWPs, is not associated with the one or more frequency bands.

5. The method of claim 1, wherein the UL carrier is the SUL carrier, a signal quality of the NUL carrier is equal to or above a first threshold, and the NUL carrier uses one of the one or more frequency bands.

6. The method of claim 1, wherein the one or more first messages are one or more NTZ policy containers.

7. The method of claim 1, further comprising, receiving by the wireless device from the cell, a message allocating a resource for uplink transmission.

8. The method of claim 7, wherein, based on determining that the resource is associated with the one or more frequency bands, the wireless device releases the resource.

9. A wireless device comprising one or more processors and memory storing instructions that, when executed by the one or more processors, cause the wireless device to:
receive one or more first messages comprising one or more first configuration parameters indicating one or more frequency bands associated with a no transmission zone (NTZ), wherein transmission by the wireless device via the one or more frequency bands is restricted within the NTZ;
receive one or more second messages comprising one or more second configuration parameters indicating:
a normal uplink (NUL) carrier of a cell; and
a supplementary uplink (SUL) carrier of the cell;
select, for a random access procedure in the cell, an uplink (UL) carrier among the SUL carrier and the NUL carrier, based on:
a frequency band of the UL carrier not being one of the one or more frequency bands; and
the wireless device being within the NTZ; and
transmit, via the UL carrier, a random access preamble for the random access procedure.

10. The wireless device of claim 9, wherein the wireless device transmits the random access preamble via a first BWP (bandwidth part) of the UL carrier.

11. The wireless device of claim 10, wherein the UL carrier is configured with one or more BWPs.

12. The wireless device of claim 11, wherein the first BWP, of the one or more BWPs, is not associated with the one or more frequency bands.

13. The wireless device of claim 9, wherein the UL carrier is the SUL carrier, a signal quality of the NUL carrier is equal to or above a first threshold, and the NUL carrier uses one of the one or more frequency bands.

14. The wireless device of claim 9, wherein the one or more first messages are one or more NTZ policy containers.

15. The wireless device of claim 9, wherein the instructions further cause the wireless device to receive, from the cell, a message allocating a resource for uplink transmission.

16. The wireless device of claim 15, wherein, based on determining that the resource is associated with the one or more frequency bands, the wireless device releases the resource.

17. The wireless device of claim 9, wherein, based on that at least one of the SUL carrier and the NUL carrier is not associated with the frequency bands, the wireless device determines that the cell is not barred.

18. A method comprising:
sending, by a wireless device with an aerial subscription, an information indicating a capability for no transmission zone (NTZ), wherein, in the NTZ, any transmission using one or more restricted frequency bands is not allowed during one or more time periods;
receiving, by the wireless device and after sending the information, an NTZ policy container comprising:
one or more first parameters indicating one or more first restricted frequency bands; and
one or more second parameters indicating one or more areas of the NTZ;
sending, by the wireless device to an access stratum (AS) layer, information comprising:
the one or more first parameters indicating the one or more first restricted frequency bands; and
the one or more second parameters indicating the one or more areas of the NTZ;
determining, by the wireless device and based on the one or more parameters and the one or more time periods, whether the wireless device is allowed to transmit via the one or more first restricted frequency bands; and
transmitting, by the wireless device and based on the determining, one or more signals.

19. The method of claim 18, wherein the AS layer selects a cell configured with a normal uplink (NUL) and a supplemental uplink (SUL).

20. The method of claim 19, wherein the wireless device, in the NTZ, performs the determining further based on whether the one or more uplink frequency bands of the NUL and the SUL.
